# EUROPEAN PATENT APPLICATION

(11) **EP 4 691 586 A1**
(43) Date of publication of application: **11.02.2026**
(21) Application number: 23947601.3
(22) Date of filing: 01.08.2023
(51) Int. Cl.: A63F 13/98, A63F 13/24

(54) **ATTACHMENT**

(71) Applicant: Nintendo Co., Ltd., Kyoto-shi, Kyoto 601-8501 (JP)
(72) Inventor: EBIHARA, Kazuki, Kyoto-shi, Kyoto 601-8501 (JP); MIYATAKE, Junichiro, Kyoto-shi, Kyoto 601-8501 (JP); KORIYAMA, Kazuhiko, Kyoto-shi, Kyoto 601-8501 (JP); YAMAMOTO, Yuriko, Kyoto-shi, Kyoto 601-8501 (JP)
(74) Representative: Bardehle Pagenberg Partnerschaft mbB Patentanwälte Rechtsanwälte
(86) International application number: PCT/JP2023/028167
(87) International publication number: WO 2025/027804

(57) **Abstract**

An attachment is an attachment removably attached to a game controller, and includes a recess and a magnet. The game controller includes a projection and a first button and a second button. The projection projects from a side surface and is configured to be matched with a game-device-side recess provided at a game device. The first button and the second button are located at a top surface of the projection along a longitudinal direction of the projection, and configured to be attracted by magnetic force to game-device-side magnets when the projection is matched with the game-device-side recess. The projection is configured to be matched with the recess. The magnet is located along the longitudinal direction of the recess. The first button and the second button are configured to be attracted by magnetic force to the magnet when the projection is matched with the recess.

## Description

### TECHNICAL FIELD

The present disclosure relates to an attachment.

### BACKGROUND ART

Japanese Patent Laying-Open No. 2018-57650 (PTL 1) discloses an attachment removably attachable to a game controller.

### CITATION LIST

### PATENT LITERATURE

PTL 1: Japanese Patent Laying-Open No. 2018-57650

### SUMMARY OF INVENTION

### TECHNICAL PROBLEM

An object of the present disclosure is to provide a novel attachment removably attachable to a game controller having a novel structure.

### SOLUTION TO PROBLEM

An attachment according to the present disclosure is removably attached to a game controller, and includes a recess and a magnet. The game controller includes a projection and a first button and a second button. The projection projects from a side surface and is configured to be matched with a game-device-side recess located at a game device. The first button and the second button are located at a top surface of the projection along a longitudinal direction of the projection, and configured to be attracted by magnetic force to respective game-device-side magnets when the projection is matched with the game-device-side recess. The projection is to be matched with the recess. The magnet is located along the longitudinal direction of the recess. The first button and the second button are configured to be attracted by magnetic force to the magnet when the projection is matched with the recess.

According to the attachment according to the above, the magnet may be located at a bottom of the recess.

The attachment according to the above may further include an engagement element configured to be engaged with an engagement hole located at at least one end surface in the longitudinal direction of the projection, in an outer peripheral surface of the projection of the game controller.

According to the attachment according to the above, the engagement element may be located at at least one end surface in the longitudinal direction of the recess, in an inner peripheral surface of the recess.

According to the attachment according to the above, the engagement element may be in a shape that projects toward inside of the recess from a bottom surface side of the recess toward an opening side of the recess.

According to the attachment according to the above, the engagement element may be provided with a curved surface that projects toward inside of the recess.

According to the attachment according to the above, the engagement element may be located at a position closer to an opening side than to a bottom surface side of the recess, in the end surface.

The attachment according to the above may further include a strap. An attachment portion of the strap may be located in the vicinity of the engagement element.

The attachment according to the above may further include a strap. An attachment portion of the strap may be opposed to the side surface of the game controller.

According to the attachment according to the above, the engagement element may be located at one side in the longitudinal direction of the recess and formed in a shape not engaged with an engagement hole located at an end surface at the other side in the longitudinal direction of the projection, in the outer peripheral surface of the projection of the game controller.

According to the attachment according to the above, of an end surface at one side and an end surface at the other side in the longitudinal direction of the recess in an inner peripheral surface of the recess, the engagement element may be located only at the end surface at the one side.

According to the attachment according to the above, the engagement element may be located at an end surface at one side and an end surface at the other side in the longitudinal direction of the recess, in an inner peripheral surface of the recess, the engagement element located at the end surface at the one side may be immovable, and the engagement element located at the end surface at the other side may be movable.

According to the attachment according to the above, at the other side in the longitudinal direction of the recess in a bottom surface of the recess, an abutment portion 509d on which a pusher is configured to abut may be located, the pusher projecting from the top surface of the game controller in accordance with an operation by a user.

The attachment according to the above may further include a strap. An attachment portion of the strap may be located outside the recess and at the one side in the longitudinal direction of the recess.

The attachment according to the above may further include a strap. An attachment portion of the strap may be located at a side the same as the one side where the engagement element is located, relative to a center of the attachment, in the longitudinal direction of the recess.

The attachment according to the above may include a main body member including a lower surface where the recess is located and an upper surface where a first upper-surface recess and a second upper-surface recess are located. The magnet may include a first magnet member and a second magnet member. In the first upper-surface recess, the first magnet member configured to be attracted by magnetic force to the first button may be accommodated. In the second upper-surface recess, the second magnet member configured to be attracted by magnetic force to the second button may be accommodated.

According to the attachment according to the above, the first magnet member may include two first magnet pieces different in orientation of polarity. The first upper-surface recess may include two first recesses where the two first magnet pieces are accommodated, respectively. The second magnet member may include two second magnet pieces different in orientation of polarity. The second upper-surface recess may include two second recesses where the two second magnet pieces are accommodated, respectively.

According to the attachment according to the above, each of the two first magnet pieces and each of the two second magnet pieces may extend along the longitudinal direction of the recess, the two first magnet pieces may be arranged as being opposed to each other in a direction perpendicular to the longitudinal direction, and the two second magnet pieces may be arranged as being opposed to each other in the direction perpendicular to the longitudinal direction.

According to the attachment according to the above, at the upper surface, a third upper-surface recess and a fourth upper-surface recess may be located. At a bottom surface of the third upper-surface recess, the first upper-surface recess may be located. At a bottom surface of the fourth upper-surface recess, the second upper-surface recess may be located. The attachment may further include a first yoke arranged at the third upper-surface recess and a second yoke arranged at the fourth upper-surface recess.

According to the attachment according to the above, the first magnet member may not be fixed to a bottom surface of the first upper-surface recess but may be configured to be attracted to the first yoke. The second magnet member may not be fixed to a bottom surface of the second upper-surface recess but may be configured to be attracted to the second yoke.

According to the attachment according to the above, at the upper surface, a fifth upper-surface recess and a sixth upper-surface recess may be located. At a bottom surface of the fifth upper-surface recess, the third upper-surface recess may be located. At a bottom surface of the sixth upper-surface recess, the fourth upper-surface recess may be located. The attachment may further include a first cover arranged at the fifth upper-surface recess and a second cover arranged at the sixth upper-surface recess.

In the attachment according to the above, an operation surface may be located at a side opposite to a side where the recess is located. The first button or the second button may be pressed down as a user presses down the operation surface.

The attachment according to the above may include an operation surface located at a side opposite to a side where the recess is located and a main body member where the recess and the operation surface are located. The first button or the second button may be pressed down as a user presses down the operation surface to cause the main body member to come closer to the game controller.

According to the attachment according to the above, a depth of the recess may be smaller than a height of the projection of the game controller.

According to the attachment according to the above, a bottom surface of the recess may include a first pressing-down area where the first button is to be pressed down. The first pressing-down area may project relative to at least a part of an area other than the first pressing-down area in the bottom surface.

According to the attachment according to the above, the magnet may include a first magnet member. The first magnet member may be located at a first pressing-down member that defines the first pressing-down area.

According to the attachment according to the above, the first magnet member may be configured to be buried in the first pressing-down area.

According to the attachment according to the above, in a direction of depth of the recess, at least a part of the first magnet member may be located between a deepest area which is a largest depth area in the bottom surface of the recess and the first pressing-down area.

According to the attachment according to the above, a length of the first pressing-down area in the longitudinal direction of the recess may be shorter than a length of a top surface of the first button in the longitudinal direction of the projection.

According to the attachment according to the above, the bottom surface of the recess may include a second pressing-down area where the second button is to be pressed down. The first pressing-down area and the second pressing-down area may project relatively to at least a part of an area located between the first pressing-down area and the second pressing-down area in the bottom surface of the recess.

According to the attachment according to the above, at the bottom surface of the recess, each of the first pressing-down area and the second pressing-down area may be located from one end to the other end in a direction perpendicular to the longitudinal direction of the recess.

According to the attachment according to the above, as at least a part at one side in the longitudinal direction of the recess in the operation surface is pressed down, the main body member may be inclined with respect to the game controller such that one side of the main body member and the side surface of the game controller come closer to each other and one of the first button and the second button may be pressed down. As at least a part at the other side in the longitudinal direction of the recess in the operation surface is pressed down, the main body member may be inclined with respect to the game controller such that the other side of the main body member and the side surface come closer to each other and the other of the first button and the second button may be pressed down.

According to the attachment according to the above, as the at least a part at the one side in the longitudinal direction of the recess in the operation surface is pressed down, the main body member may be inclined with respect to the game controller such that the one side of the main body member comes closer to the side surface without coming in contact with the side surface. As the at least a part at the other side in the longitudinal direction of the recess in the operation surface is pressed down, the main body member may be inclined with respect to the game controller such that the other side of the main body member comes closer to the side surface without coming in contact with the side surface.

According to the attachment according to the above, each of the first button and the second button may include a flange that extends in the longitudinal direction of the projection, inside the projection, and is opposed to an inner surface of the projection. As the at least a part at the one side in the longitudinal direction of the recess in the operation surface is pressed down, the main body member may be inclined with respect to the game controller with the flange of a button located at the other side, of the first button and the second button, being defined as a fulcrum. As the at least a part at the other side in the longitudinal direction of the recess in the operation surface is pressed down, the main body member may be inclined with respect to the game controller with the flange of a button located at the one side, of the first button and the second button, being defined as a fulcrum.

According to the attachment according to the above, as the at least a part at the one side in the longitudinal direction of the recess in the operation surface and the at least a part at the other side in the longitudinal direction of the recess in the operation surface are simultaneously pressed down, the main body member may move to come closer to the side surface and the first button and the second button may be pressed down.

According to the attachment according to the above, the operation surface may include a first operation area and a second operation area. Each of the first operation area and the second operation area may be located along the longitudinal direction of the recess and identifiable visually or tactilely. At the one side relative to a center of the operation surface in the longitudinal direction, the first operation area may be located closer to an end at the one side. At the other side relative to the center of the operation surface in the longitudinal direction, the second operation area may be located closer to an end at the other side.

According to the attachment according to the above, the operation surface may include a first operation area and a second operation area. Each of the first operation area and the second operation area may be located along the longitudinal direction of the recess and identifiable visually or tactilely. When attached to the game controller, the first operation area may be located above the first button, and in the longitudinal direction of the recess, a center of the first operation area may be located at an outer side relative to a center of a top surface of the first button, and the second operation area may be located above the second button, and in the longitudinal direction of the recess, a center of the second operation area may be located at an outer side relative to a center of a top surface of the second button.

The attachment according to the above may include a main body member in which the recess is located at one side and an operation surface is located at the other side. As a user presses down the operation surface to cause the main body member to come closer to the game controller, the attachment may press down the first button or the second button. The operation surface may include a first operation area and a second operation area. Each of the first operation area and the second operation area may be located along the longitudinal direction of the recess and identifiable visually or tactilely. In the longitudinal direction, a center of the first operation area may be located at an outer side relative to a center of the first pressing-down area and a center of the second operation area may be located at an outer side relative to a center of the second pressing-down area.

According to the attachment according to the above, the recess may include a first inner peripheral surface and a second inner peripheral surface that extend along the longitudinal direction of the recess and are opposed to each other. At least one of the first inner peripheral surface and the second inner peripheral surface may include a notch for avoiding an elastically deformable body that projects from an outer peripheral surface of the projection. The notch may extend from an opening end toward a bottom surface side of the recess.

The attachment according to the above may include a main body member where the recess is located and a first movable portion and a second movable portion that pass through the main body member and are movable with respect to the main body member, each of the first movable portion and the second movable portion including an operation surface. The first movable portion may be configured to press down the first button as a user presses down the operation surface. The second movable portion may be configured to press down the second button as the user presses down the operation surface.

According to the attachment according to the above, at an outer peripheral surface of the projection of the game controller, an elastically deformable body may be located, the elastically deformable body being configured to collapse as a result of abutment on an inner peripheral surface of the game-device-side recess when the projection is matched with the game-device-side recess. The recess may include a first inner peripheral surface and a second inner peripheral surface that extend along the longitudinal direction of the recess and are opposed to each other. At least one of the first inner peripheral surface and the second inner peripheral surface may include a notch for avoiding the elastically deformable body. The notch may extend from an opening end toward a bottom surface side of the recess.

According to the attachment according to the above, the recess may include a first inner peripheral surface and a second inner peripheral surface that extend along the longitudinal direction of the recess and are opposed to each other. The attachment may include a light guide path through which light emitted from the projection matched with the recess passes, the light guide path passing through at least one of the first inner peripheral surface and the second inner peripheral surface and an outer surface located opposite to the inner peripheral surface.

According to the attachment according to the above, the light guide path may include a first light guide hole that passes through the first inner peripheral surface and the outer surface and a second light guide hole that passes through the second inner peripheral surface and the outer surface.

According to the attachment according to the above, the recess may include a first inner peripheral surface and a second inner peripheral surface that extend along the longitudinal direction of the recess and are opposed to each other. The attachment may include a light guide path through which light emitted from the projection matched with the recess passes, the light guide path passing through at least one of the first inner peripheral surface and the second inner peripheral surface and an outer surface located opposite to the inner peripheral surface, and a main body member where the recess is located. At the main body member, an accommodation portion obtained by carving a bottom surface and the inner peripheral surface of the recess may be formed. The light guide path may include a light guide hole that passes through the outer surface and the inner peripheral surface, a first light guide portion arranged in the accommodation portion, and a second light guide portion contiguous to the first light guide portion and arranged at the light guide hole. The accommodation portion may include a stopper end surface on which the first light guide portion is configured to abut when the second light guide portion moves in a direction of an axial line of the light guide hole.

According to the attachment according to the above, the magnet may include a first magnet member and a second magnet member. In a direction of depth of the recess, a distance from the first magnet member to an end opposite to a side where the recess is located may be shorter than a distance from the first magnet member to an opening end of the recess. In the direction of depth of the recess, a distance from the second magnet member to the end opposite to the side where the recess is located may be shorter than a distance from the second magnet member to the opening end of the recess. The attachment may include a first yoke located between the end and the first magnet member and a second yoke located between the end and the second magnet member.

### BRIEF DESCRIPTION OF DRAWINGS

Fig. 1 is a schematic perspective view showing a configuration of an attachment according to a first embodiment.
Fig. 2 is a schematic perspective view showing the configuration of the attachment according to the first embodiment when viewed from a direction different from the direction in Fig. 1.
Fig. 3 is a schematic front view showing a configuration of an exemplary game device.
Fig. 4 is a schematic front view showing a state with each of a first game controller and a second game controller having been removed from a main body apparatus.
Fig. 5 is a diagram showing an exemplary state in which an information processing apparatus is operated as being held.
Fig. 6 is a diagram showing an exemplary state in which a controller is operated as being horizontally held.
Fig. 7 is a diagram showing an exemplary state in which the controller is operated as being vertically held.
Fig. 8 is an assembly schematic perspective view showing a configuration of a right side surface of the main body apparatus.
Fig. 9 is an exploded schematic perspective view showing the configuration of the right side surface of the main body apparatus.
Fig. 10 is a schematic six-view drawing showing a configuration of the first game controller.
Fig. 11 is a schematic perspective view showing the configuration of the first game controller.
Fig. 12 is an exploded schematic perspective view including a projection.
Fig. 13 is a partial schematic cross-sectional view along the line XIII-XIII in Fig. 11.
Fig. 14 is a schematic cross-sectional view showing a state in which an upper surface button (right) has been attracted to a game-device-side first magnetic element.
Fig. 15 is a schematic diagram viewed in a direction toward a top surface from the inside of the projection and a schematic plan view showing a configuration of a first elastically deformable body.
Fig. 16 is a schematic cross-sectional view showing a state in which the game controller has been attached to the main body apparatus.
Fig. 17 is a schematic rear view showing a configuration in a first manner of the game controller.
Fig. 18 is a schematic cross-sectional view along the line XVIII-XVIII in Fig. 17.
Fig. 19 a schematic cross-sectional view showing a state in which an operation portion is operated.
Fig. 20 is a schematic six-view drawing showing the configuration of the attachment according to the first embodiment.
Fig. 21 is an exploded schematic perspective view showing the configuration of the attachment according to the first embodiment.
Fig. 22 is a schematic perspective view showing a configuration of a main body member provided with a light guide path.
Fig. 23 is a schematic perspective view showing a configuration in which a magnet is located at the main body member.
Fig. 24 is a schematic perspective view showing a configuration in which a yoke and a magnet are located at the main body member.
Fig. 25 is a schematic cross-sectional view showing the configuration of the attachment according to the first embodiment.
Fig. 26 is an enlarged schematic diagram of an area XXVI in Fig. 25.
Fig. 27 is a schematic cross-sectional view along the line XXVII-XXVII in Fig. 25.
Fig. 28 is an enlarged schematic diagram of an area XXVIII in Fig. 25.
Fig. 29 is a schematic cross-sectional view along the line XXIX-XXIX in Fig. 25.
Fig. 30 is a schematic diagram showing a state in which the attachment is attached to the game controller.
Fig. 31 is an enlarged schematic cross-sectional view in an area XXXI in Fig. 30.
Fig. 32 is a schematic front view showing a state in which the attachment has been attached to the game controller.
Fig. 33 is an enlarged schematic cross-sectional view in an area XXXIII in Fig. 32.
Fig. 34 is an enlarged schematic cross-sectional view in an area XXXIV in Fig. 32.
Fig. 35 is a schematic cross-sectional view along the line XXXV-XXXV in Fig. 32, that shows a portion around the projection.
Fig. 36 is a schematic cross-sectional view along the line XXXVI-XXXVI in Fig. 32.
Fig. 37 is a schematic cross-sectional view showing a state in which an attempt to insert a first engagement element of the attachment in a first engagement hole of the game controller is made.
Fig. 38 is a partial schematic cross-sectional view showing a state in which a right side of an operation surface is pushed.
Fig. 39 is a partial schematic cross-sectional view showing a state in which a left side of the operation surface is pushed.
Fig. 40 is a partial schematic cross-sectional view showing a state in which both of sides of the operation surface are pushed.
Fig. 41 is a schematic diagram showing a state in which the attachment is removed from the game controller.
Fig. 42 is a schematic perspective view showing a configuration of an attachment according to a second embodiment.
Fig. 43 is a schematic perspective view showing the configuration of the attachment according to the second embodiment when viewed from a direction different from the direction in Fig. 42.
Fig. 44 is a schematic cross-sectional view showing the configuration of the attachment according to the second embodiment.
Fig. 45 is an enlarged schematic diagram of an area XXXXV in Fig. 44.
Fig. 46 is a schematic perspective view showing a configuration of an attachment according to a third embodiment.
Fig. 47 is a schematic perspective view showing a state in which the first game controller and the second game controller have been attached to the attachment.

### DESCRIPTION OF EMBODIMENTS

An embodiment of the present disclosure (which is also referred to as the present embodiment) will be described in detail with reference to the drawings. The same or corresponding elements in the drawings have the same reference characters allotted and description thereof will not be repeated.

### [First Embodiment]

### <Overview>

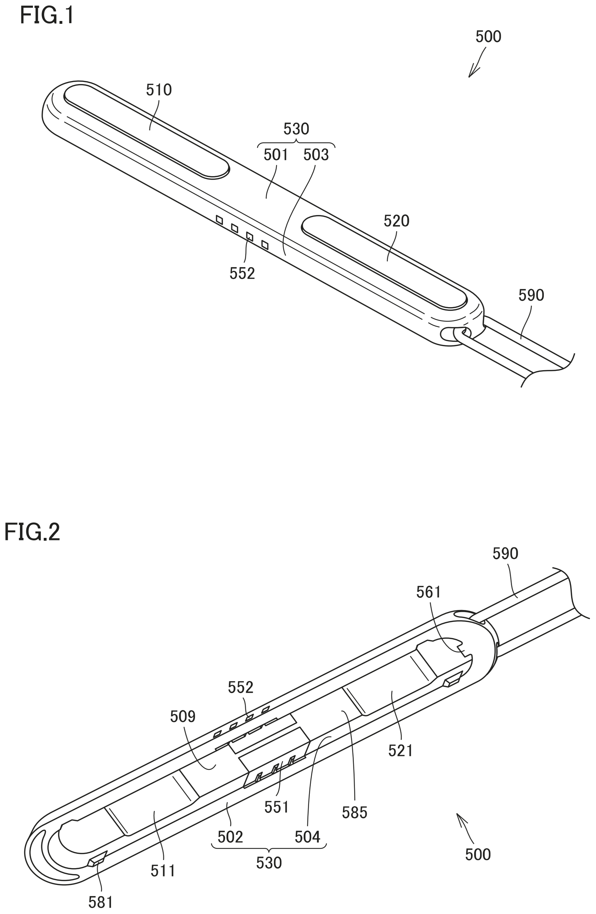

Overview of an exemplary attachment according to the present disclosure will initially be described. Fig. 1 is a schematic perspective view showing a configuration of an attachment according to a first embodiment. Fig. 2 is a schematic perspective view showing the configuration of the attachment according to the first embodiment when viewed in a direction different from the direction in Fig. 1.

As shown in Figs. 1 and 2, an attachment 500 according to the first embodiment is a strap attachment. Attachment 500 includes, for example, a main body member 530, a strap 590, a first light guide path 551, a second light guide path 552, a first cover 510, and a second cover 520. Main body member 530 is provided with a recess 585.

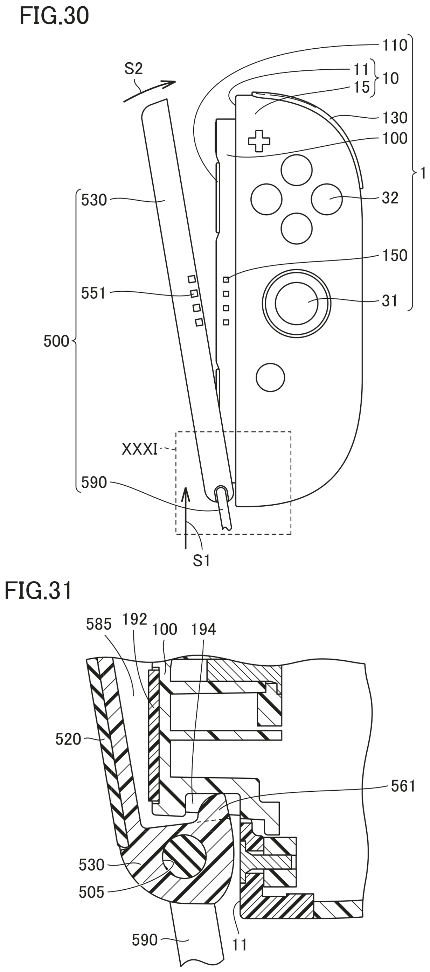

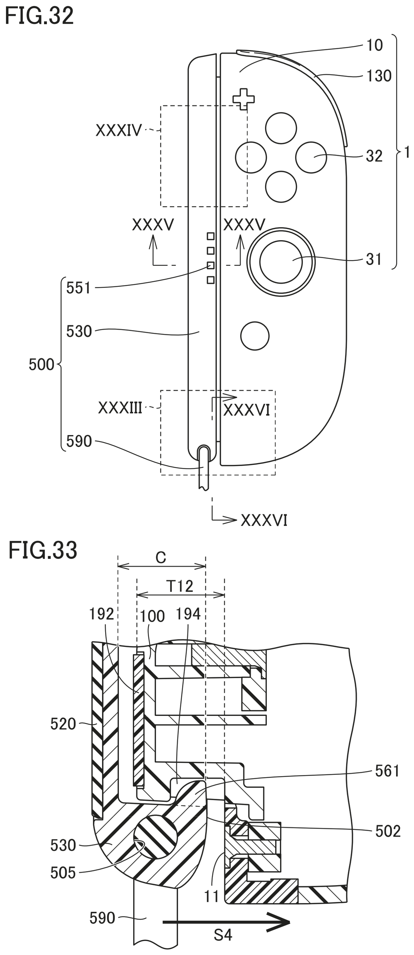

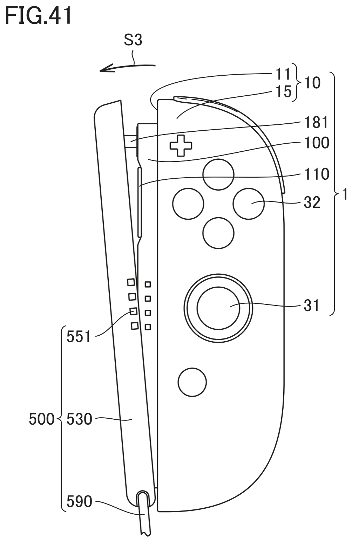

The attachment according to the first embodiment is removably attached to a game controller 1 which will be described later. As shown in Figs. 30 and 32, attachment 500 is attachable to game controller 1. As shown in Fig. 41, attachment 500 is removable from game controller 1.

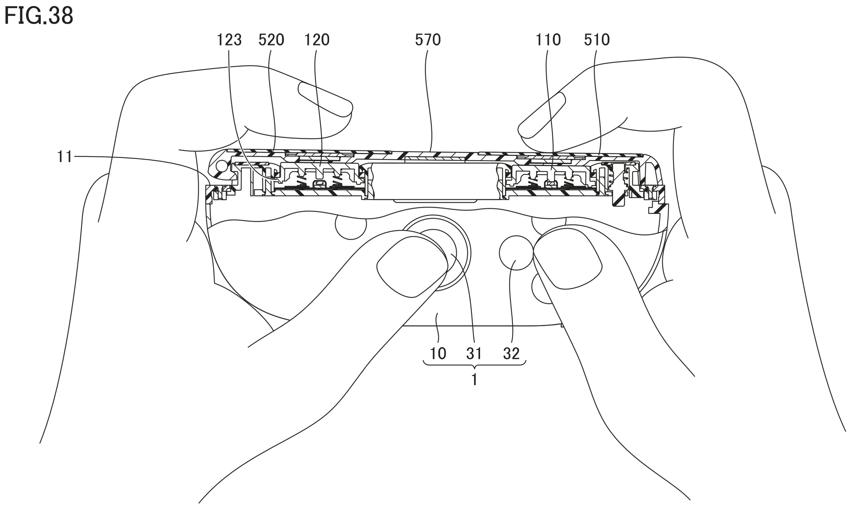

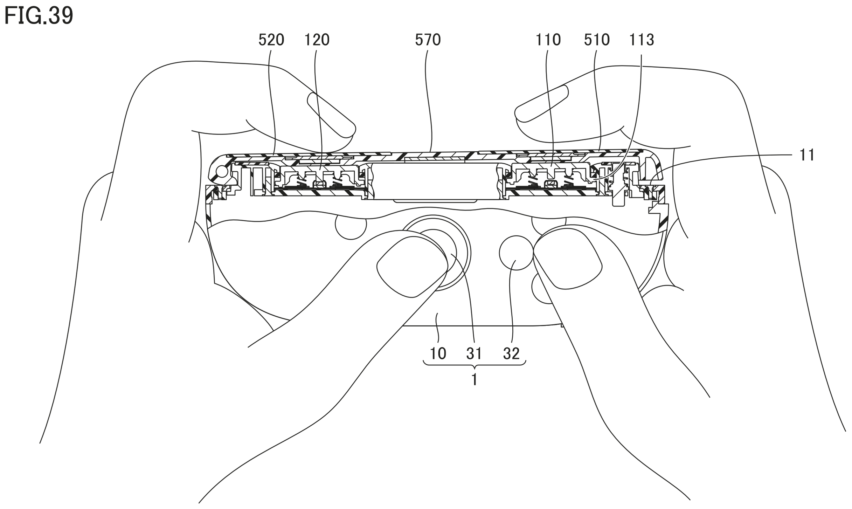

Attachment 500 according to the first embodiment can press a button of game controller 1 as main body member 530 moves with respect to game controller 1. As shown in Fig. 38, as a user pushes a right side of an operation surface 570, attachment 500 can press down a first button 110 of game controller 1. As shown in Fig. 39, as the user pushes a left side of operation surface 570, attachment 500 can press down a second button 120 of game controller 1.

### <Game Device>

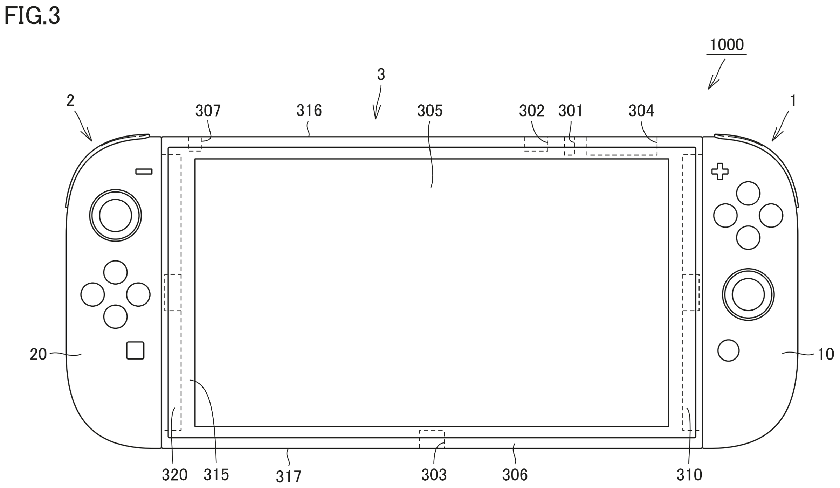

A configuration of an exemplary game device including a game controller to which the attachment is attachable will now be described. Fig. 3 is a schematic front view showing the configuration of the exemplary game device.

As shown in Fig. 3, a game device 1000 includes a first game controller 1, a second game controller 2, and a main body apparatus 3. First game controller 1 or second game controller 2 is collectively also simply referred to as a game controller below. Main body apparatus 3 is configured to perform game processing. The game processing is performed based on an input to the game controller. First game controller 1 and second game controller 2 are attachable to and removable from main body apparatus 3. In an attached state shown in Fig. 3, first game controller 1 is attached to a right side surface of main body apparatus 3 and second game controller 2 is attached to a left side surface of main body apparatus 3.

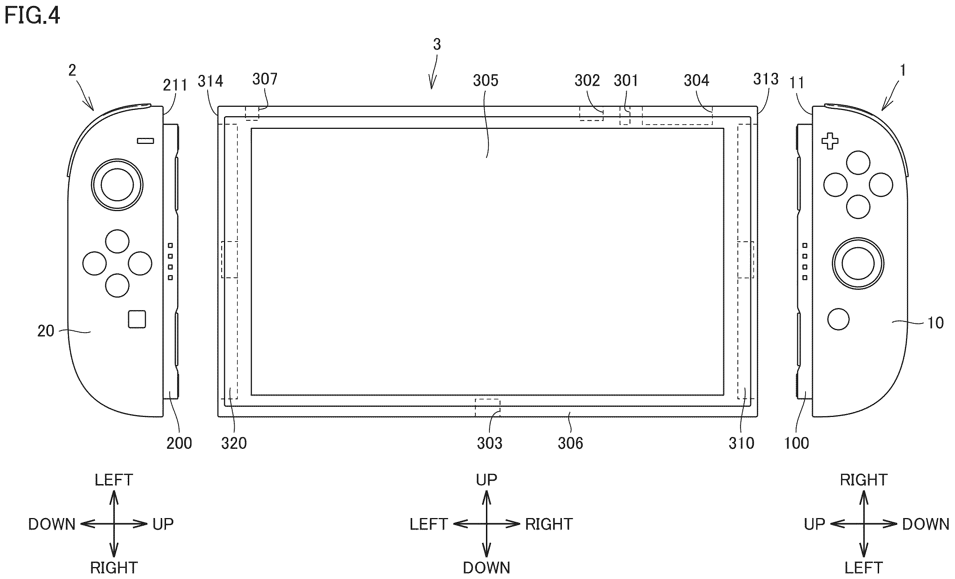

Fig. 4 is a schematic front view showing a state in which each of first game controller 1 and second game controller 2 has been removed from main body apparatus 3.

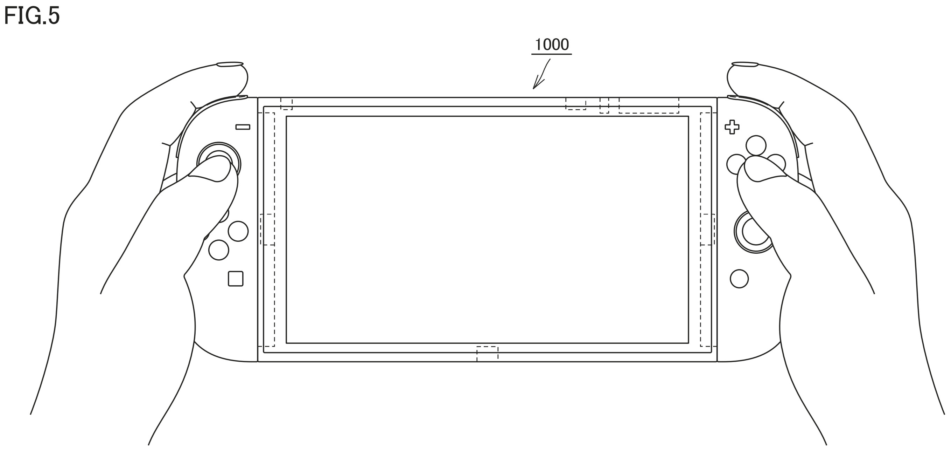

As shown in Figs. 5, 6, and 7, the game controller can be used in each of a state in which the game controller is attached to main body apparatus 3 and a state in which the game controller is not attached to main body apparatus 3.

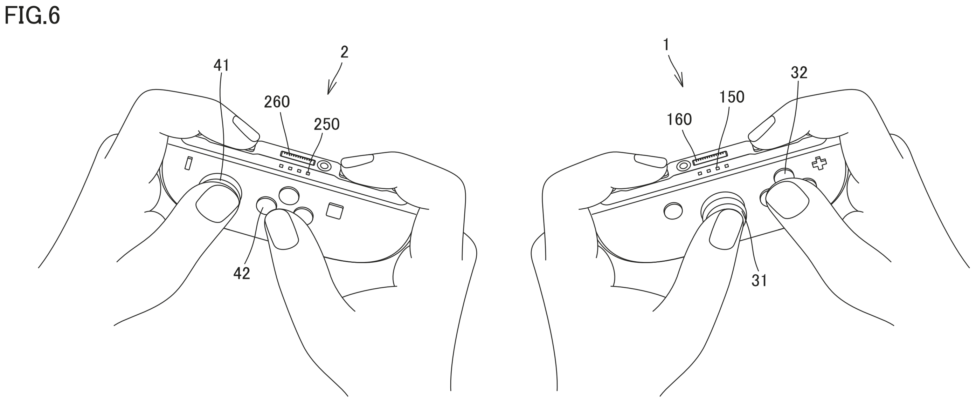

As shown in Fig. 5, while the game controller is attached to main body apparatus 3, the game controller is used in such a manner that a longitudinal direction thereof extends, for example, in an upward-downward direction. As shown in Fig. 6, on the other hand, while the game controller is not attached to main body apparatus 3, the game controller is used in such a manner that the longitudinal direction thereof extends in a left-right direction (from another point of view, a direction in parallel to the ground).

In the example shown in Fig. 6, different users operate first game controller 1 and second game controller 2, respectively.

When directions (upward-downward and left-right directions) of the game controller are mentioned in the description hereafter, description will be given, with a state of use in which the game controller is not attached to main body apparatus 3 and the longitudinal direction extends in the left-right direction being defined as the reference. When directions of main body apparatus 3 and directions of game device 1000 in which the game controller is attached to main body apparatus 3 are mentioned in the description hereafter, description will be given, with a state of use in which a direction of connection between side surfaces of main body apparatus 3 to which the game controllers are attached extends in the left-right direction being defined as the reference.

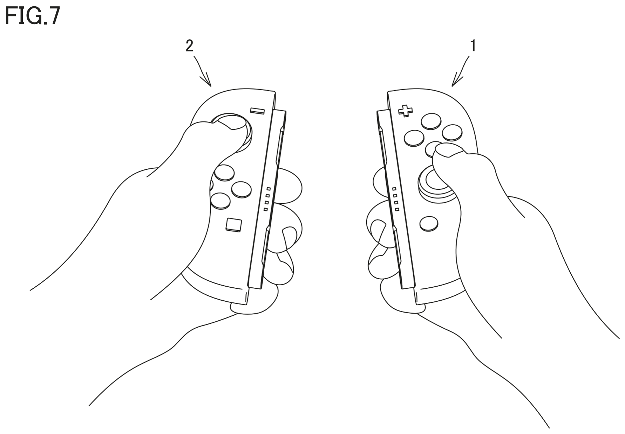

As shown in Fig. 7, while the game controller is not attached to main body apparatus 3, the game controller is used also in such a manner that the longitudinal direction thereof extends, for example, in the upward-downward direction (from another point of view, a direction perpendicular to the ground). In the example shown in Fig. 7, a single user operates both of first game controller 1 and second game controller 2. Different users may operate respective controllers.

In the following, the state of use shown in Fig. 5 is also called an integrally held state, the state of use shown in Fig. 6 is also called a horizontally held state, and the state of use shown in Fig. 7 is also called a vertically held state.

As shown in Fig. 4, first game controller 1 includes at an upper side surface 11, a projection 100 that projects from that side surface. Upper side surface 11 of first game controller 1 is a side surface that extends along the longitudinal direction of first game controller 1. Projection 100 extends in the longitudinal direction of upper side surface 11. Projection 100 is attached to a controller housing 10. Similarly, second game controller 2 includes at an upper side surface 211, a projection 200 that projects from that side surface and extends in the longitudinal direction of the side surface. Upper side surface 211 of second game controller 2 is a side surface that extends along the longitudinal direction of second game controller 2. Projection 200 extends in the longitudinal direction of upper side surface 211. Projection 200 is attached to a controller housing 20.

As shown in Figs. 3 and 4, main body apparatus 3 is provided with a game-device-side recess 310 in a main body right side surface 313. Game-device-side recess 310 extends in the longitudinal direction of main body right side surface 313. Game-device-side recess 310 extends along the upward-downward direction of main body right side surface 313. A main body left side surface 314 of main body apparatus 3 is provided with a game-device-side recess 320. Game-device-side recess 320 extends in the longitudinal direction of main body left side surface 314. Game-device-side recess 320 extends along the upward-downward direction of main body left side surface 314 of main body apparatus 3. Game-device-side recess 310, 320 is a recess in an elongated shape that extends along the longitudinal direction of main body right side surface 313 or main body left side surface 314.

As shown in Fig. 3, first game controller 1 is attached to main body apparatus 3 such that projection 100 is matched with game-device-side recess 310. First game controller 1 is attached to main body apparatus 3 such that upper side surface 11 of first game controller 1 is opposed to main body right side surface 313 of main body apparatus 3 and the longitudinal direction of upper side surface 11 of first game controller 1 extends along the longitudinal direction of main body right side surface 313 of main body apparatus 3. Similarly, second game controller 2 is attached to main body apparatus 3 such that projection 200 is matched with game-device-side recess 320. Second game controller 2 is attached to main body apparatus 3 such that upper side surface 211 of second game controller 2 is opposed to main body left side surface 314 of main body apparatus 3 and the longitudinal direction of upper side surface 211 of second game controller 2 extends along the longitudinal direction of main body left side surface 314 of main body apparatus 3.

Each of first game controller 1 and second game controller 2 includes a joystick and a set of four buttons. In attachment to main body apparatus 3, first game controller 1 is attached such that the four buttons are located above and the joystick is located below. Second game controller 2 is attached to main body apparatus 3, on the other hand, such that the joystick is located above and the four buttons are located below.

### <Main Body Apparatus>

As shown in Fig. 3, a display 305 is provided on a main body front surface 315 of main body apparatus 3. Display 305 has a display surface exposed through an opening provided at main body front surface 315. Display 305 may be placed on a surface of main body front surface 315. Display 305 may be any display apparatus such as a liquid crystal display or an OLED. A touch panel may be provided on the display surface of display 305. Any touch detection method may be adopted for the touch panel. For example, an image obtained or generated by main body apparatus 3 is shown on display 305. The image may be still images or moving images.

Main body apparatus 3 includes an audio input and output terminal 301. Audio input and output terminal 301 is provided at a main body upper side surface 316 of main body apparatus 3. Audio input and output terminal 301 is, for example, a headphone jack. A headphone or a microphone can be attached to audio input and output terminal 301. Main body apparatus 3 may include a volume button adjacent to audio input and output terminal 301. The volume button is a button for giving an instruction for adjustment of a volume of sound outputted from main body apparatus 3.

Main body apparatus 3 includes a lower terminal 303. Lower terminal 303 is located at a main body lower side surface 317 of main body apparatus 3. Lower terminal 303 may be located at a center in the left-right direction of main body lower side surface 317. Lower terminal 303 is, for example, a terminal for communication with an external apparatus. Lower terminal 303 implements, for example, a universal serial bus (USB) connector. Main body apparatus 3 may externally be supplied with electric power through lower terminal 303. Main body apparatus 3 may output an image to the outside through lower terminal 303. When main body apparatus 3 is placed at a cradle from a side of the main body lower side surface, lower terminal 303 may be connected to a terminal of the cradle.

Main body apparatus 3 includes an upper terminal 302 at main body upper side surface 316. Main body apparatus 3 may include a power button 307 or a storage medium slot 304 at main body upper side surface 316. Main body apparatus 3 may perform game processing by executing a game application stored in a storage medium inserted in storage medium slot 304.

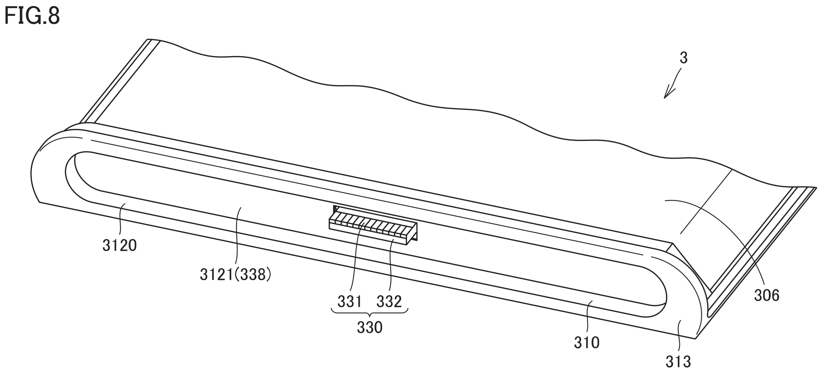

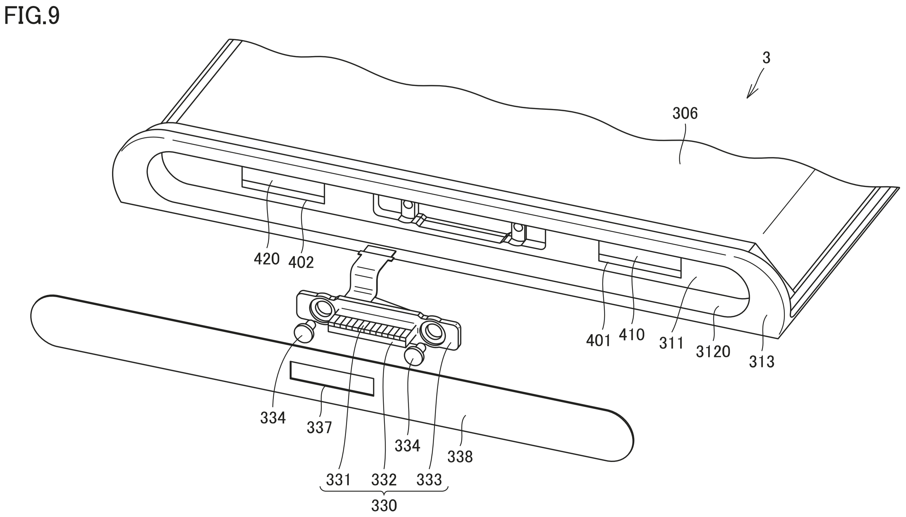

Fig. 8 is an assembly schematic perspective view showing a configuration of the right side surface of main body apparatus 3. Fig. 9 is an exploded schematic perspective view showing the configuration of the right side surface of main body apparatus 3. Main body apparatus 3 includes a similar configuration also at a left side surface side.

As shown in Fig. 8, main body right side surface 313 of main body apparatus 3 is provided with game-device-side recess 310. Game-device-side recess 310 is a portion recessed in main body right side surface 313. Game-device-side recess 310 is provided with a game-device-side bottom surface 3121 and a game-device-side inner peripheral surface 3120 that surrounds game-device-side bottom surface 3121. In the present example, a portion of a main body housing 306 that forms the right side surface of main body apparatus 3 is recessed to form game-device-side inner peripheral surface 3120 and a base surface (a base surface 311 which will be described later) that serves as a base of the bottom surface. As a cover member 338 is placed on the base surface, a surface of cover member 338 defines game-device-side bottom surface 3121 of game-device-side recess 310. Cover member 338 does not have to be provided, and in that case, the bottom surface formed by main body housing 306 defines game-device-side bottom surface 3121 of game-device-side recess 310.

As shown in Fig. 8, game-device-side bottom surface 3121 of game-device-side recess 310 extends in the longitudinal direction of main body right side surface 313. A side on a front surface side of game-device-side bottom surface 3121 and a side on a rear surface side thereof are substantially linear and extend substantially in parallel. In the present embodiment, an upper area and a lower area of game-device-side bottom surface 3121 decrease in width toward respective ends. More specifically, the upper area and the lower area of game-device-side bottom surface 3121 decrease in width in a curved manner. The upper area and the lower area of game-device-side bottom surface 3121 may linearly decrease in width. Alternatively, the upper area and the lower area of game-device-side bottom surface 3121 may be constant in width. Alternatively, only one of the upper area and the lower area of game-device-side bottom surface 3121 may decrease in width toward the end.

As shown in Fig. 9, main body apparatus 3 includes a first plug connector 330, cover member 338, a set of shoulder screws 334, and two game-device-side magnetic elements 410 and 420 located along the longitudinal direction of game-device-side recess 310. Game-device-side first magnetic element 410 is arranged above and game-device-side second magnetic element 420 is arranged below. Game-device-side first magnetic element 410 is arranged in an area above a center in the longitudinal direction of main body right side surface 313 and game-device-side second magnetic element 420 is arranged in an area below the center. Game-device-side magnetic elements 410 and 420 each include a magnet and yokes that sandwich the magnet. Game-device-side magnetic elements 410 and 420 do not have to include the yokes. Game-device-side magnetic elements 410 and 420 may both be arranged in the area above or below.

As shown in Fig. 9, a portion of main body housing 306 that forms the right side surface is recessed to form base surface 311 that serves as the base of the bottom surface of game-device-side recess 310 and game-device-side inner peripheral surface 3120. As described above, the surface of cover member 338 placed on base surface 311 defines game-device-side bottom surface 3121. Base surface 311 and cover member 338 are substantially the same in shape. Though game-device-side inner peripheral surface 3120 surrounds the entire periphery of base surface 311 in the present example, it does not have to surround the entire periphery. Game-device-side inner peripheral surface 3120 is contiguous to base surface 311 and main body right side surface 313. Game-device-side inner peripheral surface 3120 has an upper end (a right side end of main body apparatus 3) connected to main body right side surface 313. From another point of view, game-device-side recess 310 is recessed relative to main body right side surface 313.

Base surface 311 is provided with a first hole 401 and a second hole 402 for accommodation of game-device-side magnetic elements 410 and 420. First hole 401 and second hole 402 are aligned in the longitudinal direction of main body right side surface 313. In other words, first hole 401 and second hole 402 are aligned in the longitudinal direction of base surface 311. Though details will be described later, first game controller 1 also includes a magnetic element. As magnetic elements at a side of first game controller 1 are attracted to game-device-side magnetic elements 410 and 420, the game controller is attached to main body apparatus 3. As the entirety or a part of game-device-side magnetic elements 410 and 420 enter respective holes 401 and 402 from the inside of main body housing 306, the magnetic elements at the side of first game controller 1 attached to main body apparatus 3 come closer to game-device-side magnetic elements 410 and 420 and magnetic force for attraction can be strengthened.

Game-device-side first magnetic element 410, game-device-side second magnetic element 420, first hole 401, and second hole 402 are covered with cover member 338. Specifically, game-device-side first magnetic element 410 and game-device-side second magnetic element 420 are covered with cover member 338 that defines game-device-side bottom surface 3121 of game-device-side recess 310. In the present example, game-device-side first magnetic element 410 and game-device-side second magnetic element 420 are buried in game-device-side bottom surface 3121 of game-device-side recess 310 owing to cover member 338 as a manner of provision of game-device-side first magnetic element 410 and game-device-side second magnetic element 420 at the bottom of game-device-side recess 310. In another manner of provision of game-device-side first magnetic element 410 and game-device-side second magnetic element 420 at the bottom of game-device-side recess 310, game-device-side first magnetic element 410 and game-device-side second magnetic element 420 may be arranged on game-device-side bottom surface 3121 of game-device-side recess 310. Game-device-side first magnetic element 410 and game-device-side second magnetic element 420 may be arranged as being exposed through an opening of a hole located at game-device-side bottom surface 3121 of game-device-side recess 310 or a position deep in the hole.

Game-device-side second magnetic element 420 is similar in configuration to game-device-side first magnetic element 410. Game-device-side second magnetic element 420 is accommodated in part in second hole 402, similarly to game-device-side first magnetic element 410.

As shown in Fig. 9, first plug connector 330 includes a support portion 333, a first tongue-shaped body 332 that projects from support portion 333, and a main body first terminal 331 located along a surface of first tongue-shaped body 332. Support portion 333 and first tongue-shaped body 332 may be integrated with or separate from each other.

First plug connector 330 is located between game-device-side first magnetic element 410 and game-device-side second magnetic element 420 in the longitudinal direction of main body right side surface 313 when viewed from the side of the bottom of game-device-side recess 310. Therefore, main body first terminal 331 is located between game-device-side first magnetic element 410 and game-device-side second magnetic element 420 in the longitudinal direction of main body right side surface 313. A tip end of first tongue-shaped body 332 (a right end of first tongue-shaped body 332) does not project from game-device-side recess 310. In other words, first tongue-shaped body 332 does not project to the outside of main body right side surface 313 and is located within game-device-side recess 310. Therefore, main body first terminal 331 located at first tongue-shaped body 332 is also located within game-device-side recess 310. In another manner, first tongue-shaped body 332 and main body first terminal 331 may project as being higher than main body right side surface 313.

First plug connector 330 is attached to base surface 311 with the set of shoulder screws 334. First plug connector 330 can slightly move with respect to base surface 311 by being attached to base surface 311 with the set of shoulder screws 334. In other words, first plug connector 330 is a floating connector. Since first plug connector 330 is the floating connector, connection of the connector is readily maintained even when the first game controller attached to main body apparatus 3 is slightly moved with respect to main body apparatus 3. First plug connector 330 may freely be movable around an axial direction of shoulder screw 334 or movable in the axial direction. The set of shoulder screws 334 and support portion 333 are covered with cover member 338. First tongue-shaped body 332 and main body first terminal 331 are exposed through a through hole 337 located at cover member 338.

### <Controller>

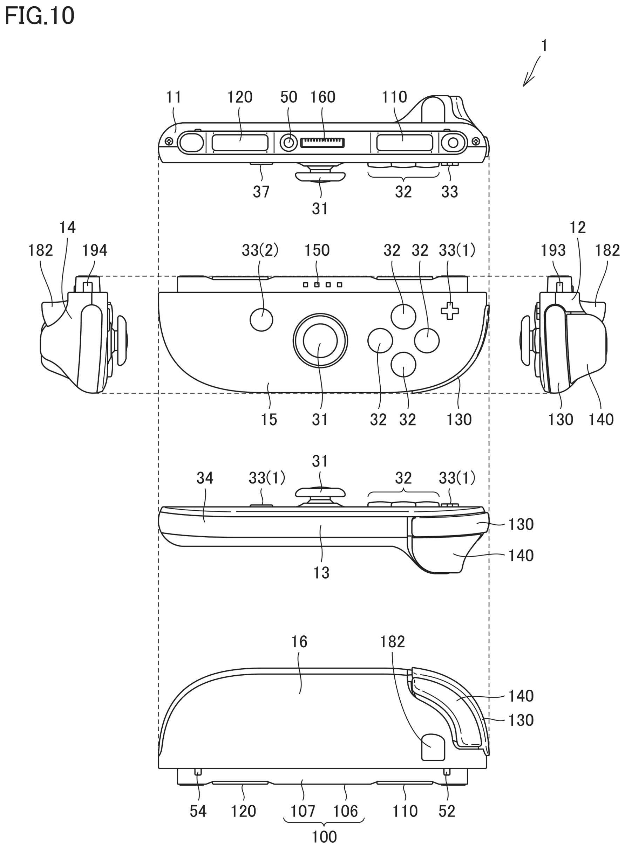

Fig. 10 is a schematic six-view drawing showing a configuration of first game controller 1.

As shown in Fig. 10, first game controller 1 in the present embodiment includes at a front surface thereof, a joystick 31 which represents an exemplary direction input portion, a set of four buttons 32 aligned in a cross shape, a + button 33 (1), and a home button 33 (2). First game controller 1 includes an upper-surface button (right) 110 (which is also referred to as first button 110 below) and an upper-surface button (left) 120 (which is also referred to as second button 120 below), a synchronization button 50, a shoulder button (right) 130, and a Z shoulder button (right) 140. Though details will be described later, upper-surface button (right) 110, upper-surface button (left) 120, and synchronization button 50 are located at projection 100. These are exemplary input portions and all of them do not have to be provided. First game controller 1 may include another input portion such as a touch pad or a pressure sensor instead of or in addition to these input portions.

While first game controller 1 is attached to main body apparatus 3, operation information from the input portion is transmitted to main body first terminal 331 of main body apparatus 3 through a first terminal 160 which will be described later and processed in accordance with a program by a CPU of main body apparatus 3. In a manner of use where the game controller is not attached to main body apparatus 3, operation information from the input portion is transmitted to the CPU of main body apparatus 3 through a wireless chip included in the game controller and a wireless chip included in main body apparatus 3. The game device does not have to include first terminal 160 and main body first terminal 331, and in that case, information is transmitted through the wireless chips also while the game controller is attached to main body apparatus 3.

As shown in Fig. 10, first game controller 1 includes a front surface 15, a rear surface 16, upper side surface 11, a right side surface 12, a lower side surface 13, and a left side surface 14. Front surface 15 is a surface opposed to a user who uses first game controller 1 in the integrally held state, the horizontally held state, and the vertically held state. Rear surface 16 is located opposite to front surface 15. Front surface 15 and rear surface 16 are each contiguous to upper side surface 11, right side surface 12, lower side surface 13, and left side surface 14.

A direction of normal to upper side surface 11 is also referred to as a first direction R1. First direction R1 is a direction in which projection 100 projects and also referred to as an upper side or a projection direction or an upward direction. Projection 100 is located at a side of first direction R1 of upper side surface 11. A direction opposite to first direction R1 is also referred to as a third direction R3. Third direction R3 is also referred to as a lower side or a downward direction. First direction R1 and third direction R3 are also collectively referred to as the upward-downward direction.

A direction toward right side surface 12 which is perpendicular to the upward-downward direction is also referred to as a second direction R2. Second direction R2 is also referred to as a right side or a right direction. A direction opposite to second direction R2 is also referred to as a fourth direction R4. Fourth direction R4 is also referred to as a left side or a left direction. Second direction R2 and fourth direction R4 are also collectively referred to as the left-right direction.

A direction normal to front surface 15 is also referred to as a fifth direction R5. Fifth direction R5 is also referred to as a front surface side or a front direction. A direction opposite to the fifth direction is also referred to as a sixth direction R6. Sixth direction R6 is also referred to as a rear surface side or a rear direction. Fifth direction R5 and sixth direction R6 are also collectively referred to as a front-rear direction.

As described above, upper side surface 11 is located at a side of the upward direction with respect to the front surface. Upper side surface 11 is a side surface that extends in the longitudinal direction of front surface 15. In the present embodiment, the longitudinal direction of front surface 15 corresponds to the left-right direction of front surface 15. Upper side surface 11 extends in the left-right direction. Lower side surface 13 is located opposite to upper side surface 11. Lower side surface 13 is located at a side of third direction R3 of upper side surface 11. Right side surface 12 is a side surface that is contiguous to a right end of upper side surface 11 and extends in a direction away from upper side surface 11. An end of the right side surface distant from upper side surface 11 is contiguous to a right end of lower side surface 13. Left side surface 14 is a side surface that is contiguous to a left end of upper side surface 11 and extends in a direction away from upper side surface 11. An end of the left side surface distant from upper side surface 11 is contiguous to a left end of lower side surface 13. The right side surface is located at a side of second direction R2, of the left side surface.

As shown in Fig. 10, front surface 15 of the first game controller is provided with + button 33(1), one set of four buttons 32, joystick 31, and home button 33(2) from the right side in the left-right direction. One set of four buttons 43 and joystick 31 are adjacent to each other. In the upward-downward direction, joystick 31 is located between an upper button and a lower button in one set of four buttons 32. In the left-right direction, joystick 31 is located substantially on an extension of a straight line that connects the button at the right side and the button at the left side in one set of four buttons 32 to each other.

Joystick 31 is tiltable in directions around 360 degrees and may be tiltable in any direction including first direction R1 to fourth direction R4. Joystick 31 may be tiltable only in at least one direction. Joystick 31 may be pushed in. Joystick 31 may be slidable in each direction, instead of being tilted. Main body apparatus 3 may perform processing in accordance with a signal indicating an operation direction, in an executed program, as a result of an operation on joystick 31 by the user. The game controller may include another input portion instead of or in addition to joystick 31 as the direction input portion. For example, the controller may include a cross-shaped key or one set of buttons.

Main body apparatus 3 may perform prescribed corresponding processing based on pressing down of + button 33 (1) and the set of four buttons 32 in an executed program. Main body apparatus 3 may call a home menu in response to an input on home button 33 (2).

Shoulder button (right) 130 is a button, for example, used in the integrally held state, and arranged at an upper right portion of first game controller 1 in the integrally held state. Shoulder button (right) 130 may be used in the vertically held state. Shoulder button (right) 130 includes a curved operation surface. Shoulder button (right) 130 extends in a direction away from upper side surface 11. Shoulder button (right) 130 is generally located at a lower right portion of first game controller 1 in the horizontally held state. At least a part of shoulder button (right) 130 may be located at right side surface 12. The operation surface of shoulder button (right) 130 is generally curved along the lower right portion of first game controller 1. Main body apparatus 3 performs prescribed processing based on pressing down of the shoulder button (right) in an executed program.

Z shoulder button (right) 140 is, for example, a button used in the integrally held state and located at a rear surface side of shoulder button (right) 130. Z shoulder button (right) 140 may be used also in the vertically held state. Z shoulder button (right) 140 includes a curved operation surface. Shoulder button (right) 130 extends in the direction away from upper side surface 11. Z shoulder button (right) 140 is generally located at the lower right portion of first game controller 1 in the horizontally held state. At least a part of Z shoulder button (right) 140 may be located at right side surface 12. At least a part of Z shoulder button (right) 140 may be located at rear surface 16. The operation surface of Z shoulder button (right) 140 is curved generally along the lower right portion of first game controller 1. Z shoulder button (right) 140 may entirely be located at the rear surface. Main body apparatus 3 performs prescribed processing based on pressing down of Z shoulder button (right) 140 in an executed program.

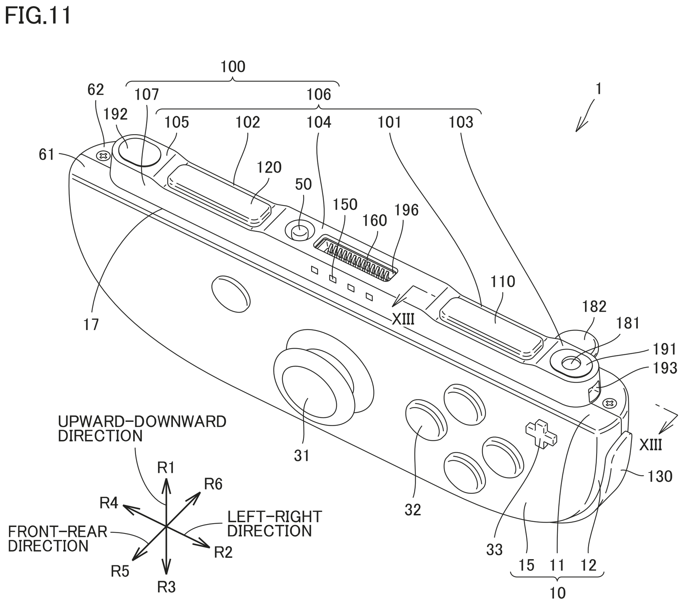

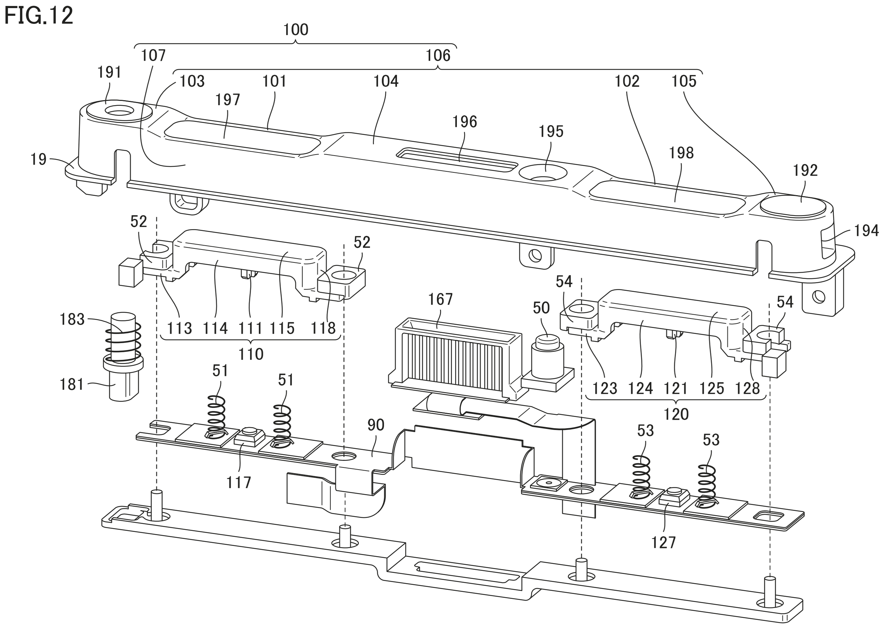

Fig. 11 is a schematic perspective view showing a configuration of first game controller 1. Fig. 12 is an exploded schematic perspective view including projection 100.

As shown in Fig. 11, first game controller 1 includes, in addition to already-described features, a light emission portion 150 that gives a notification of an identification number of the game controller, first terminal 160 connected to main body first terminal 331 of main body apparatus 3, a first cushion 191, a second cushion 192, and an operation portion 182 that implements a removal mechanism for removal of projection 100 from main body apparatus 3.

As shown in Fig. 11, projection 100 projects upward from upper side surface 11. From another point of view, projection 100 projects in first direction R1 from upper side surface 11. Projection 100 extends along the longitudinal direction of upper side surface 11 (that is, a length in the longitudinal direction is longer than lengths in other directions). Projection 100 does not have to extend in a manner as exactly coinciding with the longitudinal direction of upper side surface 11 but should only extend along the longitudinal direction. In other words, the longitudinal direction of projection 100 extends along the longitudinal direction of upper side surface 11. The longitudinal direction of projection 100 does not have to exactly coincide with the longitudinal direction of upper side surface 11. Projection 100 is a projection in an elongated shape that extends along the longitudinal direction of upper side surface 11. Projection 200 of second game controller 2 is also similar in configuration to projection 100. The configuration of projection 100 of first game controller 1 will mainly be described below.

Projection 100 includes a top surface (which is also referred to as a top surface 106 below) and a peripheral surface (which is also referred to as an outer peripheral surface 107 below) that extends downward from the top surface. Top surface 106 is distant from upper side surface 11. Outer peripheral surface 107 is located between top surface 106 and upper side surface 11 and extends from top surface 106 to upper side surface 11. Outer peripheral surface 107 is contiguous to top surface 106 as surrounding an outer edge of top surface 106. Top surface 106 extends along the longitudinal direction of upper side surface 11. Projection 100 extends along the longitudinal direction of upper side surface 11 when viewed in a top surface 106 direction. A length in the left-right direction of top surface 106 is longer than a length in the front-rear direction of top surface 106. A surface of top surface 106 does not have to be planar as a result of graining, or may be planar.

In the present example, projection 100 is in a shape of a frustum of a pyramid that becomes smaller in cross-section toward top surface 106. An end area in the longitudinal direction may be rounded as will be described later. From another point of view, when projection 100 is viewed from a side of top surface 106 (that is, the upper side), top surface 106 and outer peripheral surface 107 that surrounds top surface 106 are seen. The shape of projection 100 is not limited to the shape of the frustum of the pyramid. By way of example, projection 100 may be in a shape of a frustum of a cone or a parallelepiped.

A length in the left-right direction of projection 100 (that is, the length in the longitudinal direction of projection 100) may be, for example, at least two times or at least five times as long as the length in the front-rear direction of projection 100. The length in the left-right direction of projection 100 may be, for example, at least fifty percent or at least seventy percent as long as the length in the left-right direction of upper side surface 11. The length in the left-right direction of projection 100 may be, for example, at most twenty-five times or at most fifteen times as long as the length in the front-rear direction of projection 100.

Increase in length in the left-right direction of projection 100 can lead to increase in length in the left-right direction of top surfaces (operation surfaces) of upper button (right) 110 and upper button (left) 120 and better operability. Arrangement of first cushion 191, second cushion 192, and the like at the top surface of projection 100 can also be facilitated.

As shown in Fig. 11, projection 100 lies between a front-surface-side housing 61 and a rear-surface-side housing 62 that form controller housing 10. Upper side surface 11 is provided with a housing opening 17 defined by an end surface of front-surface-side housing 61 and an end surface of rear-surface-side housing 62. Projection 100 projects through housing opening 17 from the inside of controller housing 10.

As shown in Fig. 12, projection 100 includes a projection flange 19. Projection flange 19 extends outward (more specifically, in the left-right direction and the front-rear direction) from a lower end of a wall portion that defines outer peripheral surface 107. An area above projection flange 19 of projection 100 is exposed through housing opening 17. A lower area including projection flange 19 of projection 100 is located inside controller housing 10. Projection flange 19 functions as a stopper that prevents projection 100 from coming off. In another manner, projection 100 may be comprised of a plurality of components. In yet another manner, projection 100 may be a part of controller housing 10. For example, projection 100 may be formed from at least one of front-surface-side housing 61 and rear-surface-side housing 62.

Projection 100 is configured to be matched with game-device-side recess 310 in the forward direction of the recess (a direction toward the right side surface of main body apparatus 3). Projection 100 is configured as being compatible in shape with game-device-side recess 310. From another point of view, the shape of top surface 106 and outer peripheral surface 107 of the projection is compatible with the shape of game-device-side bottom surface 3121 and game-device-side inner peripheral surface 3120 of game-device-side recess 310. While first game controller 1 is attached to main body apparatus 3, top surface 106 is opposed to game-device-side bottom surface 3121 as abutting thereon or in proximity thereto and outer peripheral surface 107 is opposed to game-device-side inner peripheral surface 3120 as abutting thereon or in proximity thereto. Therefore, for example, when the user attaches first game controller 1 to main body apparatus 3, first game controller 1 is guided to an appropriate attachment position. For example, position displacement of first game controller 1 attached to main body apparatus 3 in the upward-downward direction or the front-rear direction in main body apparatus 3 is suppressed. By way of example, even when force is applied to the game controller in the front-rear direction or the upward-downward direction with an operation input by the user in the integrally held state, great position displacement of the game controller from main body apparatus 3 is suppressed.

As shown in Figs. 10 to 12, outer peripheral surface 107 of projection 100 includes a first engagement hole 193 and a second engagement hole 194 in respective longitudinal end surfaces. First engagement hole 193 is located at a first end surface of projection 100. Second engagement hole 194 is located at a second end surface of projection 100. First engagement hole 193 is different in shape from second engagement hole 194. In the front-rear direction, first engagement hole 193 may be different in length from second engagement hole 194. In the upward-downward direction, first engagement hole 193 may be different in length from second engagement hole 194.

As shown in Figs. 11 and 12, upper-surface button (right) 110 and upper-surface button (left) 120 are located at projection 100. Upper-surface button (right) 110 and upper-surface button (left) 120 are buttons to be pressed down by the user and they are components moved downward by the pressing-down operation. A ground connection portion 51 is connected under upper-surface button (right) 110. A tact switch 117 is located under upper-surface button (right) 110. As upper-surface button (right) 110 is moved downward by the pressing-down operation by the user, tact switch 117 is pressed down by upper-surface button (right) 110. Upper-surface button (right) 110 and tact switch 117 form a button switch. Upper-surface button (left) 120 and a tact switch 127 form a button switch.

Upper-surface button (right) 110 is exposed through a first opening 197 located at top surface 106. Exposed portions (110 and 120 in Fig. 10) of upper-surface buttons 110 and 120 each form an operation portion to be pressed down by the user. A ground connection portion 53 is connected under upper-surface button (left) 120. Tact switch 127 is located under upper-surface button (left) 120. Tact switch 127 is pressed down by upper-surface button (left) 120. On signals from tact switch 117 and tact switch 127 are transmitted to main body apparatus 3 and processing in accordance with pressing-down of upper-surface button (right) 110 and upper-surface button (left) 120 is performed in an executed program.

Synchronization button 50 is located at projection 100. Synchronization button 50 is pressed down by the user. Synchronization button 50 is located between upper-surface button (right) 110 and upper-surface button (left) 120 in the longitudinal direction of projection 100. More specifically, synchronization button 50 is located between first terminal 160 and upper-surface button (left) 120 in the longitudinal direction of projection 100. Synchronization button 50 may be used for an instruction for setting processing relating to wireless communication between first game controller 1 and main body apparatus 3.

First game controller 1 includes a terminal accommodation portion 167. First terminal 160 is located along an inner peripheral surface of terminal accommodation portion 167. First terminal 160 extends along the upward-downward direction. Top surface 106 is provided with a terminal opening 196. Terminal accommodation portion 167 communicates with terminal opening 196. In other words, terminal accommodation portion 167 opens at top surface 106. Therefore, first terminal 160 can be accessed from the outside of top surface 106.

Terminal opening 196 is located at top surface 106, between upper-surface button (right) 110 and upper-surface button (left) 120. Therefore, terminal accommodation portion 167 opens at top surface 106 between upper-surface button (right) 110 and upper-surface button (left) 120. First terminal 160 is located between upper-surface button (right) 110 and upper-surface button (left) 120 in the longitudinal direction of projection 100. First terminal 160 should only at least partially be located between upper-surface button (right) 110 and upper-surface button (left) 120 in the left-right direction, and does not have to be located between upper-surface button (right) 110 and upper-surface button (left) 120 in the front-rear direction and the upward-downward direction. From another point of view, the terminal is located between upper-surface button (right) 110 and upper-surface button (left) 120 when viewed in the top surface direction of projection 100. First terminal 160 is located within projection 100. At least an upper end of first terminal 160 is arranged as high as or below top surface 106, or arranged below top surface 106, in the projection direction of projection 100. The upper end of first terminal 160 may be located between top surface 106 and upper side surface 11. A lower end of first terminal 160 may be arranged under upper side surface 11, that is, in controller housing 10.

Light emission portion 150 is located at outer peripheral surface 107 of projection 100. More specifically, light emission portion 150 is located at the front surface side of outer peripheral surface 107. From another point of view, an area of outer peripheral surface 107 where light emission portion 150 is located faces the front surface side. When the user views front surface 15 of first game controller 1, the user can visually recognize light from light emission portion 150. Light emission portion 150 typically allows emission of light emitted by an LED to the outside.

Light emission portion 150 can notify the user of prescribed information. Light emission portion 150 may show to the user, information for identification of each game controller when main body apparatus 3 communicates with a plurality of game controllers. Light emission portion 150 may show another type of information to the user. The number of light emission portions 150 is not particularly limited, and for example, four light emission portions 150 are provided. In the present embodiment, four light emission portions 150 are arranged as being aligned in the left-right direction. For example, among four light emission portions 150, light emission portion 150 in a portion corresponding to an identification number provided to a game controller may be turned on, or light emission portion(s) 150 in number corresponding to the identification number may be turned on.

Light emission portion 150 is located between upper-surface button (right) 110 and upper-surface button (left) 120 in the longitudinal direction of projection 100. Light emission portion 150 is located at a position superimposed on first terminal 160 in the longitudinal direction of projection 100. From another point of view, when viewed from the front surface side, light emission portion 150 is located under terminal opening 196.

On top surface 106 of projection 100, first cushion 191 and second cushion 192 are placed. A height of a top surface of each of first cushion 191 and second cushion 192 from upper side surface 11 is higher than a height of top surface 106 of projection 100 from upper side surface 11. From another point of view, first cushion 191 and second cushion 192 raise the height of the top surface of projection 100. First cushion 191 and second cushion 192 do not have to be provided.

Game controller 1 may be placed in such a manner that the top surface of projection 100 is opposed to a grounding surface such as a desktop. At this time, first cushion 191 and second cushion 192 themselves come in contact with the grounding surface to suppress direct contact with the grounding surface, of a portion of top surface 106 of projection 100 where the cushion is not located. The top surfaces of first cushion 191 and second cushion 192 come in contact with game-device-side bottom surface 3121 of game-device-side recess 310 when first game controller 1 is attached to main body apparatus 3.

Regarding the height from upper side surface 11, the height of the top surfaces of first cushion 191 and second cushion 192 is equal to or higher than a highest height of top surface 106 of projection 100. From another point of view, the top surfaces of first cushion 191 and second cushion 192 are located at an uppermost position in first game controller 1. First cushion 191 is not particularly limited in shape, and it may be, for example, in a circular shape, an elliptical shape, a rectangular shape, or the like. First cushion 191 may be provided with a through hole. First cushion 191 and second cushion 192 may be the same or different in shape.

In the longitudinal direction of projection 100, first cushion 191 is located closer to right side surface 12 than upper surface button (right) 110. In the longitudinal direction of projection 100, upper surface button (right) 110 is located between first terminal 160 and first cushion 191.

In the longitudinal direction of projection 100, second cushion 192 is located closer to left side surface 14 than upper-surface button (left) 120. In the longitudinal direction of projection 100, upper-surface button (left) 120 is located between first terminal 160 and second cushion 192. More specifically, in the longitudinal direction of projection 100, upper-surface button (left) 120 is located between synchronization button 50 and second cushion 192.

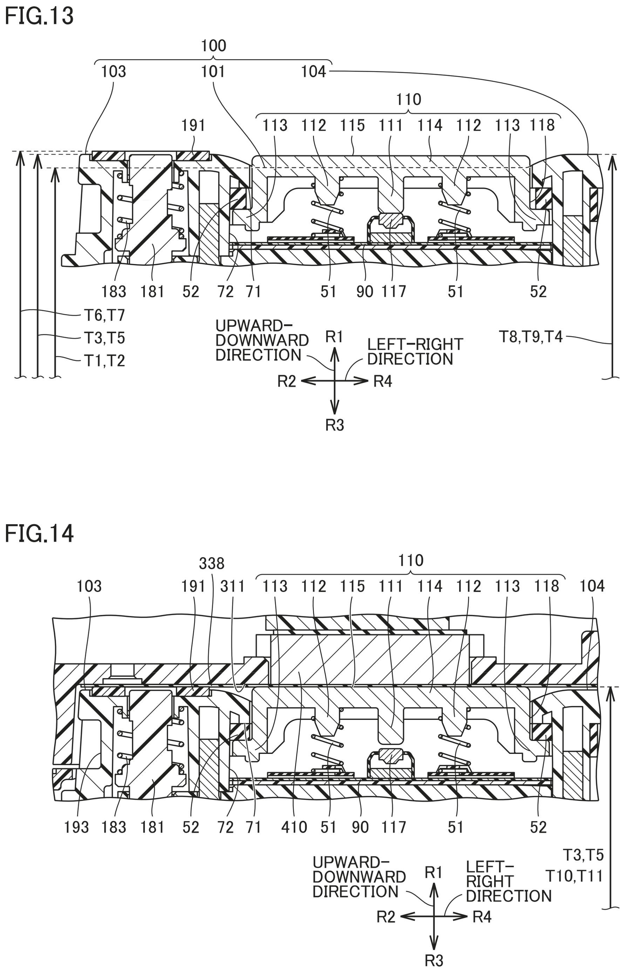

Fig. 13 is a partial schematic cross-sectional view along the line XIII-XIII in Fig. 11. A structure of upper-surface button (right) 110 and surroundings will be described in detail below. In the present embodiment, a structure of upper-surface button (left) 120 and surroundings and the structure of upper-surface button (right) 110 and the surroundings are substantially in symmetry in the left-right direction.

As shown in Fig. 13, a portion of upper-surface button (right) 110 that is exposed at the top surface of projection 100 forms an operation surface 115 which is a surface to be operated by the user. Upper-surface button (right) 110 includes a main body portion 114 including operation surface 115, a sidewall 118, a flange 113, a first protruding portion 111, and a second protruding portion 112. Operation surface 115 extends along the longitudinal direction of projection 100 at top surface 106 of projection 100. In other words, the longitudinal direction of operation surface 115 extends in the left-right direction. From another point of view, the longitudinal direction of operation surface 115 coincides with the longitudinal direction of projection 100.

In the present embodiment, upper-surface button (right) 110 is comprised of a single component and the entirety thereof is comprised of a material which is not a magnet but is attracted to the magnet. The material for upper-surface button (right) 110 is not particularly limited, and it may be comprised of a soft magnetic material. For example, iron may be adopted as the material for upper-surface button (right) 110, and by way of example, steel plate cold commercial (SPCC) may be adopted. The material for upper-surface button (right) 110 may contain iron. By way of example, iron to which silicon and/or nickel are/is added may be adopted as the material for upper-surface button (right) 110. By way of example, upper-surface button (right) 110 may be comprised of a single component made of a resin-molded soft magnetic material.

In another manner, upper-surface button (right) 110 may be comprised of a magnet or a combination of a magnet and a soft magnetic material.

In yet another manner, only a part of upper-surface button (right) 110 may be comprised of a soft magnetic material or a magnet. In this case, at least a portion of projection 100 exposed at top surface 106 may be comprised of a soft magnetic material or a magnet. Alternatively, at least a portion that forms operation surface 115 may be comprised of a soft magnetic material or a magnet.

Operation surface 115 is the operation surface of upper-surface button (right) 110 exposed through first opening 197 and pressed down by the user. Operation surface 115 faces first direction R1. Operation surface 115 extends in the left-right direction. A length in the left-right direction of operation surface 115 may be at least ten percent or at least twenty percent as long as the length in the left-right direction of top surface 106 of projection 100. The length in the left-right direction of operation surface 115 may be at least ten percent or at least twenty percent as long as the length in the left-right direction of upper side surface 11 of projection 100.

As shown in Fig. 13, tact switch 117 is located below first protruding portion 111. Tact switch 117 is arranged on a flexible printed circuit 90 (which is also called an FPC 90 below). An upper portion of tact switch 117 is a leaf spring.

While upper-surface button (right) 110 is not pressed down by the user, first protruding portion 111 is supported by tact switch 117 from below. When the user presses down upper-surface button (right) 110, upper-surface button (right) 110 is moved downward from an initial position. First protruding portion 111 of upper-surface button (right) 110 moved downward presses down the upper portion of tact switch 117. The upper portion of tact switch 117 is pressed down to deform as sinking downward. A switch is thus turned on in the tact switch. When the user removes his/her hand from upper-surface button (right) 110, the upper portion of tact switch 117 returns to an original shape. As the upper portion of tact switch 117 returns to the original shape, first protruding portion 111 is pushed back upward. Therefore, upper-surface button (right) 110 is moved to the initial position. In other words, when upper-surface button (right) 110 is pressed down, tact switch 117 applies bias in a direction opposite to a direction of pressing-down of upper-surface button (right) 110. Tact switch 117 may apply bias in the direction opposite to the direction of pressing-down of upper-surface button (right) 110 also while upper-surface button (right) 110 is not pressed down.

In another manner, upper-surface button (right) 110 may be biased upward by a biasing body such as a spring. In other words, upper-surface button (right) 110 may be distant from tact switch 117 by being biased upward by the biasing body such as a spring at least when it is pressed down by the user (also when it is not pressed down by the user). In another manner, a rubber switch may be employed instead of tact switch 117.

Second protruding portion 112 protrudes in third direction R3 from the rear surface of main body portion 114. The number of second protruding portions 112 is not particularly limited. In the present embodiment, two second protruding portions 112 are provided with first protruding portion 111 lying therebetween in the left-right direction. A ground electrode is located on FPC 90 below second protruding portion 112. Ground connection portion 51 is located between second protruding portion 112 and the ground electrode in the upward-downward direction. Ground connection portion 51 is conductive. A shape and a material for ground connection portion 51 are not particularly limited, and a coil spring made of iron is employed in the present embodiment. An upper end of ground connection portion 51 is in contact with the rear surface of main body portion 114 and conducts to the main body portion. A lower end of second protruding portion 112 is surrounded by ground connection portion 51 formed from the coil spring. A lower end of ground connection portion 51 is in contact with the ground electrode.

In the present embodiment, upper-surface button (right) 110 is a soft magnetic material, is comprised of iron by way of example, and hence it is conductive. Therefore, if a charged object comes in contact with upper-surface button (right) 110, a potential of upper-surface button (right) 110 may vary, which may affect an internal electronic component at projection 100 or controller housing 10. In the present embodiment, however, the potential of upper-surface button (right) 110 attains to a ground potential owing to electrical connection of upper-surface button (right) 110 to the ground electrode through ground connection portion 51. Therefore, even when a charged object comes in contact with upper-surface button (right) 110, possibility of influence on the internal electronic component is suppressed.

Since ground connection portion 51 is made up of the coil spring in a compressed state in the present embodiment, upper-surface button (right) 110 is biased upward by the coil spring. Since biasing force of the coil spring is weak in the present embodiment, upper-surface button (right) 110 is in contact with the upper portion of tact switch 117 at the initial position. In another manner, upper-surface button (right) 110 may be distant from tact switch 117 at the initial position by biasing force of the coil spring which is ground connection portion 51. In another manner, first game controller 1 does not have to include ground connection portion 51.

As shown in Figs. 12 and 13, upper-surface button (right) 110 includes main body portion 114 the surface of which defines the operation surface, sidewall 118 that extends from a lower surface of main body portion 114, and flange 113 that extends outward from sidewall 118. Sidewall 118 extends into projection 100 through first opening 197. Flange 113 extends outward from sidewall 118 in projection 100. The flange may extend outward from the lower end of sidewall 118. Flange 113 includes a flange portion that projects to the right from a right end of sidewall 118 and a flange portion that extends to the left from a left end of sidewall 118. An upper surface of flange 113 is opposed to a part of a surface of the inside of projection 100 (which is called a first inner surface 71 below) in the direction opposite to the direction of pressing-down of upper-surface button (right) 110. First inner surface 71 does not have to be an inner surface of projection 100 itself. The upper surface of flange 113 is located in the direction of pressing-down of upper-surface button (right) 110, with respect to first inner surface 71. Therefore, flange 113 performs a function to prevent upper-surface button (right) 110 from coming off, by being directly or indirectly caught by first inner surface 71.

The outer peripheral surface of sidewall 118 is opposed to a part of the surface of the inside of projection 100 (which is called a second inner surface 72 below) in the left-right direction. Second inner surface 72 does not have to be the inner surface of projection 100 itself. The outer peripheral surface of sidewall 118 is located in a direction perpendicular to the direction of pressing-down of upper-surface button (right) 110, with respect to second inner surface 72.

First game controller 1 includes a first elastically deformable body 52 between the upper surface of flange 113 and first inner surface 71. First elastically deformable body 52 elastically deforms by application of force and elastically returns by removal of application of force. A material for first elastically deformable body 52 is not particularly limited, and for example, rubber may be employed.

First elastically deformable body 52 may be fixed to first inner surface 71. First elastically deformable body 52 may be fixed to first inner surface 71, for example, with the use of an adhesive material or by being fitted in a hole provided at first inner surface 71.

When upper-surface button (right) 110 is located at the initial position, first elastically deformable body 52 is in contact with first inner surface 71 and flange 113. At this time, upper-surface button (right) 110 may be maintained at the initial position by balancing between biasing force in the direction opposite to the direction of pressing-down by tact switch 117 or ground connection portion 51 and biasing force in the direction of pressing-down by first elastically deformable body 52. When upper-surface button (right) 110 is located at the initial position, first elastically deformable body 52 may be in contact with only one of first inner surface 71 and flange 113 or neither of them.

First elastically deformable body 52 is located at a side close to second inner surface 72 in the left-right direction, between the outer peripheral surface of sidewall 118 and second inner surface 72. First elastically deformable body 52 is distant from sidewall 118. First elastically deformable body 52 may be in contact with second inner surface 72. First elastically deformable body 52 may be distant from second inner surface 72. In this case, an interval between second inner surface 72 and first elastically deformable body 52 in the left-right direction is smaller than an interval between sidewall 118 and first elastically deformable body 52. In another manner, first elastically deformable body 52 may be located at a side close to sidewall 118.

When first game controller 1 is attached to main body apparatus 3, upper-surface button (right) 110 is attracted to game-device-side first magnetic element 410. Fig. 14 is a schematic cross-sectional view showing a state in which upper-surface button (right) 110 has been attracted to game-device-side first magnetic element 410.

As shown in Fig. 14, when first game controller 1 is attached to main body apparatus 3, upper-surface button (right) 110 and game-device-side first magnetic element 410 are opposed to each other. Upper-surface button (right) 110 is comprised of a soft magnetic material in the present embodiment. Therefore, when game-device-side first magnetic element 410 comes closer to upper-surface button (right) 110, upper-surface button (right) 110 is pulled by magnetic force toward game-device-side first magnetic element 410. Force in the direction opposite to the direction of pressing-down is then applied to upper-surface button (right) 110. At this time, first elastically deformable body 52 located between flange 113 and first inner surface 71 is pushed in a direction toward first inner surface 71 by flange 113 to experience elastic deformation in which the first elastically deformable body contracts in the direction opposite to the direction of pressing-down. Consequently, upper-surface button (right) 110 is moved in the direction opposite to the direction of pressing-down. In other words, upper-surface button (right) 110 is moved in the direction opposite to the direction of pressing-down from the initial position which is a position where the upper-surface button (right) has not been pressed down by the user. The direction of pressing-down is, for example, third direction R3. The direction opposite to the direction of pressing-down is, for example, first direction R1.

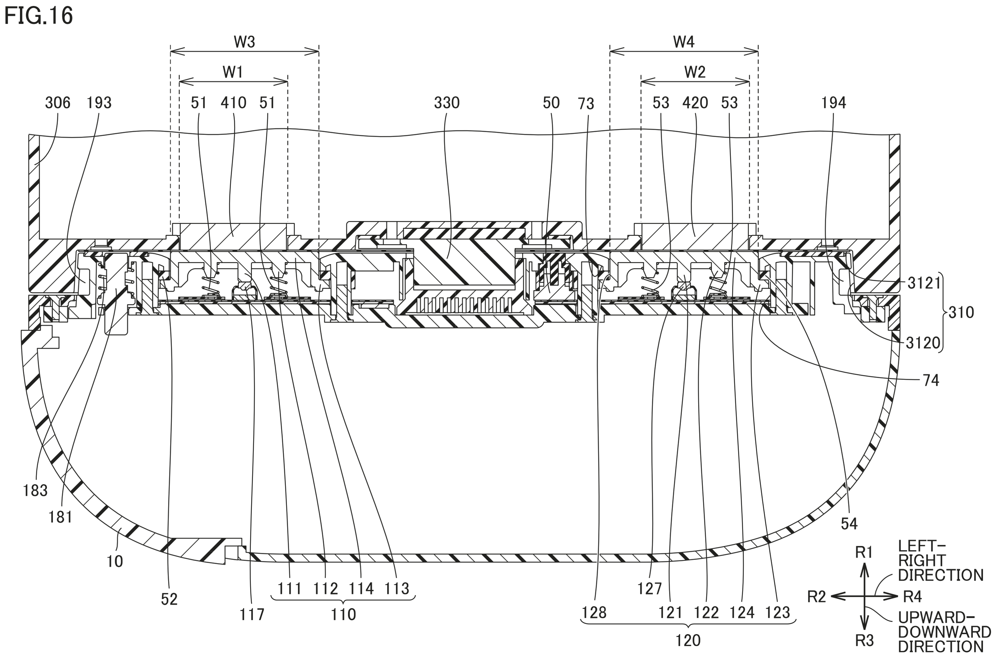

Upper-surface button (left) 120 is also similar in configuration to upper-surface button (right) 110. Tact switch 127 is located below upper-surface button (left) 120, and tact switch 127 is biased in the direction opposite to the direction of pressing-down at least while upper-surface button (left) 120 is pressed down. Upper-surface button (left) 120 includes a main body portion 124, a sidewall 128, and a flange 123 (see Fig. 16). A second elastically deformable body 54 is arranged between an upper surface of flange 123 and a first inner surface 73. Second elastically deformable body 54 may be fixed to first inner surface 73. Second elastically deformable body 54 may be located at a side close to a second inner surface 74 in the left-right direction, between an outer peripheral surface of sidewall 128 and second inner surface 74.

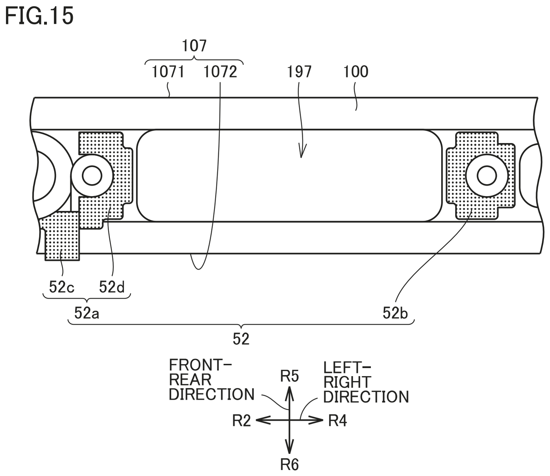

Fig. 15 is a schematic diagram viewed in a direction toward top surface 106 from the inside of projection 100 and a schematic plan view showing a configuration of first elastically deformable body 52. Fig. 15 shows first elastically deformable body 52 and projection 100. First elastically deformable body 52 includes a first elastic portion 52a and a second elastic portion 52b. Second elastic portion 52b is distant from first elastic portion 52a. In the left-right direction, first elastic portion 52a is located at the side of second direction R2 relative to first opening 197. In the left-right direction, second elastic portion 52b is located at the side of fourth direction R4 relative to first opening 197.

A part of first elastically deformable body 52 projects from outer peripheral surface 107 of projection 100. Specifically, first elastic portion 52a is provided to project outward from the inside of projection 100 through an opening provided at outer peripheral surface 107 of projection 100. Second elastic portion 52b is located in projection 100 and does not have to project outward. The opening through which first elastically deformable body 52 projects may be formed at outer peripheral surface 107 of projection 100, by a notch formed at projection 100 and upper side surface 11.

First elastic portion 52a includes a first elastic area 52c and a second elastic area 52d. In the upward-downward direction, first elastic area 52c is located below second elastic area 52d. In the left-right direction, first elastic area 52c may be located at the side of second direction R2 relative to second elastic area 52d. A part of first elastic area 52c projects from outer peripheral surface 107 of projection 100. Second elastic area 52d is located in projection 100.

As shown in Figs. 10 and 12, first elastically deformable body 52 is located at outer peripheral surface 107 at the side of rear surface 16. From another point of view, first elastically deformable body 52 projects in sixth direction R6 from outer peripheral surface 107 of projection 100. Therefore, in the vertically held state or the horizontally held state, it is difficult for the user who faces front surface 15 of first game controller 1 to visually recognize first elastically deformable body 52. First elastically deformable body 52 may be located at outer peripheral surface 107, also at the side of front surface 15 or only at the side of front surface 15.

When projection 100 is matched with game-device-side recess 310, outer peripheral surface 107 and game-device-side inner peripheral surface 3120 are opposed to each other. At this time, first elastically deformable body 52 located at outer peripheral surface 107 may be in contact with opposing game-device-side inner peripheral surface 3120. Thus, projection 100 is more securely attached to game-device-side recess 310. More specifically, game-device-side inner peripheral surface 3120 opposed to the rear surface side of outer peripheral surface 107 comes in contact with first elastically deformable body 52, so that projection 100 is biased in the front direction by game-device-side inner peripheral surface 3120 with first elastically deformable body 52 being interposed. Consequently, the front surface side of outer peripheral surface 107 of projection 100 is pressed against opposing game-device-side inner peripheral surface 3120 and attachment becomes secure.

Since first elastically deformable body 52 is elastically deformable, in matching projection 100 with game-device-side recess 310, the first elastically deformable body elastically deforms to contract in the front-rear direction and lowering in ease in attachment is suppressed. Furthermore, in the present embodiment, first elastically deformable body 52 is exposed at the root of outer peripheral surface 107. In other words, projecting first elastically deformable body 52 is adjacent to upper side surface 11. From another point of view, a position of the upper end of the first elastically deformable body is lower than the top surface of projection 100. Therefore, in insertion of projection 100 into game-device-side recess 310, a portion of outer peripheral surface 107 where first elastically deformable body 52 is not located initially enters game-device-side recess 310. In other words, at the beginning of insertion, first elastically deformable body 52 does not come in contact with game-device-side inner peripheral surface 3120. Therefore, lowering in ease in attachment is suppressed.

Second elastically deformable body 54 may also partially project through an opening located at the outer peripheral surface of projection 100, similarly to first elastically deformable body 52. Second elastically deformable body 54 may project from the surface of outer peripheral surface 107 the same as the surface from which first elastically deformable body 52 projects. First elastically deformable body 52 and second elastically deformable body 54 may both project from the rear surface side of outer peripheral surface 107.

As shown in Figs. 10 to 13, top surface 106 of projection 100 includes areas different in height from upper side surface 11. Top surface 106 of projection 100 includes a first area 101, a second area 102, a third area 103, a fourth area 104, and a fifth area 105.

First area 101 is an area of a housing where upper-surface button (right) 110 is located. The housing forms top surface 106 of projection 100. Upper-surface button (right) 110 is provided to pass through first opening 197 provided at first area 101. Similarly, second area 102 is an area where upper-surface button (left) 120 is located. Upper-surface button (left) 120 is provided to pass through a second opening 198 located at second area 102.

As shown in Fig. 11, third area 103 is an area of the housing including top surface 106 in one end area of projection 100. The housing forms top surface 106 of projection 100. From another point of view, third area 103 is contiguous to the end surface at the side of second direction R2 of outer peripheral surface 107 of projection 100. Third area 103 is an area located at the side of first direction R1 relative to each of first area 101 and second area 102. In the longitudinal direction of projection 100, a length of third area 103 may be shorter than a length of each of first area 101 and second area 102.

In third area 103, first cushion 191 is located. More specifically, as shown in Fig. 13, first cushion 191 is arranged in a recess located in third area 103. A part of first cushion 191 is exposed to the outside of the recess. Third area 103 may be flat, without being provided with a recess. First cushion 191 may be placed on a flat surface in the third area.

As shown in Fig. 11, fifth area 105 is an area of the housing including top surface 106 in the other end area of projection 100. The housing forms top surface 106 of projection 100. From another point of view, fifth area 105 is contiguous to an end surface at the side of fourth direction R4 of outer peripheral surface 107 of projection 100. Fifth area 105 is an area located at the side of first direction R1 relative to each of first area 101 and second area 102. In the longitudinal direction of projection 100, a length of fifth area 105 may be shorter than the length of each of first area 101 and second area 102.

In fifth area 105, second cushion 192 is located. Second cushion 192 is arranged in a recess located in fifth area 105. A part of second cushion 192 is exposed to the outside of the recess. Fifth area 105 may be flat, without being provided with a recess. Second cushion 192 may be placed on a flat surface in the fifth area. First cushions 191 and 192 can be concluded as raising the height of projection 100 from upper side surface 11.

Fourth area 104 is an area in the housing that is located between first area 101 and second area 102 in the longitudinal direction of top surface 106, the housing forming top surface 106 of projection 100. In the fourth area, terminal opening 196 and a synchronization button opening 195 are located.

Third area 103 is located at a side of the projection direction relative to fourth area 104. Fifth area 105 is located at a side of the projection direction relative to fourth area 104.

In the longitudinal direction of projection 100, first area 101 is located between third area 103 and fourth area 104. In the longitudinal direction of projection 100, second area 102 is located between fifth area 105 and fourth area 104. In the longitudinal direction of projection 100, each of first area 101, second area 102, and fourth area 104 is located between third area 103 and fifth area 105.

As shown in Fig. 13, a height of first area 101 from upper side surface 11 is expressed as a first height T1. From another point of view, a distance from upper side surface 11 to first area 101 in the upward-downward direction is expressed as first height T1. Similarly, a height of second area 102 from upper side surface 11 is expressed as a second height T2. From another point of view, a distance from upper side surface 11 to second area 102 in the upward-downward direction is expressed as second height T2. Though first height T1 is the same as second height T2 in the present embodiment, they may be different from each other. First area 101 and second area 102 may be located from one end to the other end of top surface 106 in a direction perpendicular to the longitudinal direction of projection 100.

A height of third area 103 from upper side surface 11 is expressed as a third height T3. From another point of view, a distance from upper side surface 11 to third area 103 in the upward-downward direction is expressed as third height T3. Similarly, a height of fifth area 105 from upper side surface 11 is expressed as a fifth height T5. From another point of view, a distance from upper side surface 11 to fifth area 105 in the upward-downward direction is expressed as fifth height T5.

Though third height T3 is the same as fifth height T5 in the present embodiment, they may be different from each other. Though third height T3 and fifth height T5 are higher than first height T1 and second height T2 in the present embodiment, the former may be the same as or lower than the latter. Third area 103 and fifth area 105 may be located from one end to the other end of top surface 106 in the direction perpendicular to the longitudinal direction of projection 100.

A height of fourth area 104 from upper side surface 11 is expressed as a fourth height T4. From another point of view, a distance from upper side surface 11 to fourth area 104 in the upward-downward direction is expressed as fourth height T4. Though fourth height T4 is higher than first height T1 and second height T2 in the present embodiment, the former may be the same as or lower than the latter. Though fourth height T4 is lower than third height T3 and fifth height T5 in the present embodiment, the former may be the same as or higher than the latter. Fourth area 104 may be located from one end to the other end of top surface 106 in the direction perpendicular to the longitudinal direction of projection 100.

A height of the top surface of first cushion 191 from upper side surface 11 is expressed as a sixth height T6. From another point of view, a distance from upper side surface 11 to the top surface of first cushion 191 in the upward-downward direction is expressed as sixth height T6. Similarly, a height of the top surface of second cushion 192 from upper side surface 11 is expressed as a seventh height T7. From another point of view, a distance from upper side surface 11 to the top surface of second cushion 192 in the upward-downward direction is expressed as seventh height T7.

A height of operation surface 115 from upper side surface 11 at the time when upper-surface button (right) 110 is located at the initial position is expressed as an eighth height T8. From another point of view, a distance from upper side surface 11 to operation surface 115 in the upward-downward direction is expressed as eighth height T8. Similarly, a height of an operation surface 125 from upper side surface 11 at the time when upper-surface button (left) 120 is located at the initial position is expressed as a ninth height T9. From another point of view, a distance from upper side surface 11 to operation surface 125 in the upward-downward direction is expressed as ninth height T9.

As shown in Figs. 13 and 14, upper-surface button (right) 110 is movable upward. As shown in Fig. 14, the height of operation surface 115 from upper side surface 11 at the time when upper-surface button (right) 110 is attracted to game-device-side first magnetic element 410 and is in contact with game-device-side bottom surface 3121 is expressed as a tenth height T10. Similarly, a height of operation surface 125 from upper side surface 11 at the time when upper-surface button (left) 120 is attracted to game-device-side second magnetic element 420 and is in contact with game-device-side bottom surface 3121 is expressed as an eleventh height T11.

### <Connection Structure>

Fig. 16 is a schematic cross-sectional view showing a state in which the game controller has been attached to main body apparatus 3. The schematic cross-sectional view shown in Fig. 16 is in parallel to each of the left-right direction and the upward-downward direction.

As shown in Fig. 16, projection 100 of first game controller 1 is matched with game-device-side recess 310 in main body apparatus 3. Upper-surface button (right) 110 is to be attracted to game-device-side first magnetic element 410 by magnetic force. In the left-right direction, a length (third length W3) of the top surface of upper-surface button (right) 110 is longer than a length (first length W1) of game-device-side first magnetic element 410. The upper-surface button (right) is attracted by magnetic force to game-device-side first magnetic element 410. Upper-surface button (left) 120 is to be attracted by magnetic force to game-device-side second magnetic element 420. In the left-right direction, a length (fourth length W4) of the top surface of upper-surface button (left) 120 is longer than a length (second length W2) of game-device-side second magnetic element 420. Upper-surface button (left) 120 further includes a first protruding portion 121 and a second protruding portion 122.

### <Removal Mechanism>

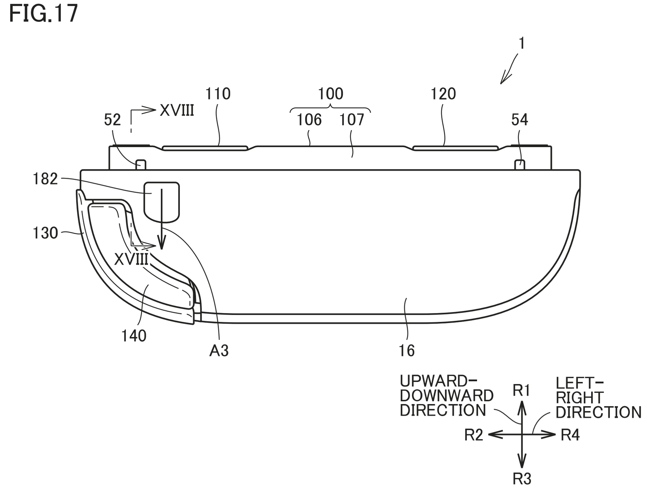

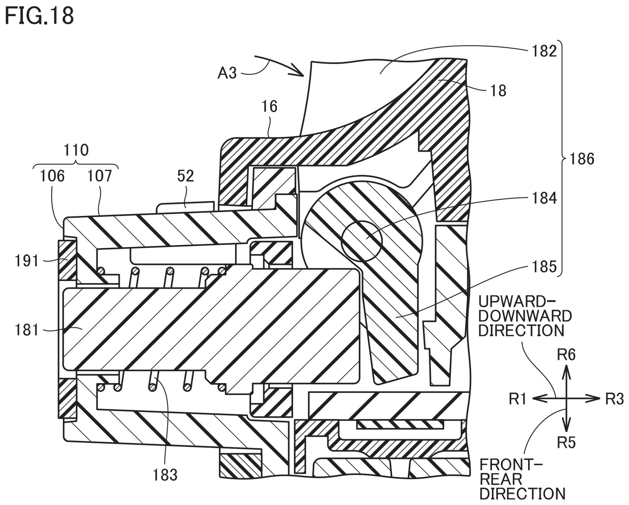

Fig. 17 is a schematic rear view showing the configuration of the game controller. Fig. 18 is a schematic cross-sectional view along the line XVIII-XVIII in Fig. 17. As shown in Fig. 18, first game controller 1 includes a pusher 181, a pusher operation member 186, and a biasing portion 183, which implement a removal mechanism. Pusher operation member 186 includes an operation portion 182, a pusher actuation portion 185, and a rotation shaft 184.

As the user operates operation portion 182, pusher 181 projects from top surface 106 of projection 100. While first game controller 1 is attached to main body apparatus 3, projecting pusher 181 pushes game-device-side bottom surface 3121 of game-device-side recess 310. As pusher 181 pushes game-device-side bottom surface 3121, top surface 106 of projection 100 moves in a direction away from game-device-side bottom surface 3121. First game controller 1 rotates, with an end opposite to an end where pusher 181 is located being defined as the fulcrum. As set forth above, first game controller 1 can readily be removed from main body apparatus 3.

Pusher 181 may project from the right side of operation portion 182 in the longitudinal direction of projection 100. In the longitudinal direction of projection 100, the center of pusher 181 may be located at the right of the center of operation portion 182. Pusher 181 may project from the right side of first elastically deformable body 52 in the longitudinal direction of projection 100. In the longitudinal direction of projection 100, the center of pusher 181 may be located at the right of the center of first elastically deformable body 52.

An amount of projection of pusher 181 may be large to such an extent that projection of pusher 181 moves operation surface 115 of upper-surface button (right) 110 away from the surface of cover member 338 that defines bottom surface 3121 of recess 310. From another point of view, the amount of projection of pusher 181 may be large to such an extent that, even when upper-surface button (right) 110 moves upward to its maximum by being attracted to game-device-side first magnetic element 410, operation surface 115 of upper-surface button (right) 110 is distant from the surface of cover 338 that defines bottom surface 3121 of recess 310. First game controller 1 can thus readily be removed from main body apparatus 3. The amount of projection of pusher 181 may be large to such an extent that at least a part of operation surface 125 of upper-surface button (left) 120 is not distant from the surface of cover 338. Quick removal of first game controller 1 from main body apparatus 3 can thus be suppressed.

The amount of projection of pusher 181 may be large to such an extent that projection of pusher 181 exposes the right end (the end at the side of second direction R2 in Fig. 11) of top surface 106 of projection 100 through the opening of recess 310. The amount of projection of pusher 181 may be large to such an extent that projection of pusher 181 does not expose the right end of top surface 106 through the opening of recess 310. The amount of projection of pusher 181 may be large to such an extent that projection of pusher 181 exposes the entirety of first elastically deformable body 52 exposed at outer peripheral surface 107 of projection 100 through the opening of recess 310. Only a part of second elastically deformable body 54 exposed at outer peripheral surface 107, on the other hand, may be exposed through the opening of recess 310. Alternatively, the amount of projection of pusher 181 may be large to such an extent that projection of pusher 181 does not expose light emission portion 150 located at outer peripheral surface 107 through the opening of recess 310. Alternatively, the amount of projection of pusher 181 may be large to such an extent that projection of pusher 181 separates the right end (the end at the side of second direction R2 in Fig. 11) of upper side surface 11 and the upper end of main body right side surface 313 from each other, for example, by a distance from 0.5 mm to 1 cm. The separation distance may be, for example, from 1 mm to 5 mm. The separation distance may be, for example, 2 mm.

As shown in Figs. 17 and 18, operation portion 182 is located, for example, at rear surface 16. Operation portion 182 is arranged as being exposed through an opening located at rear surface 16. Operation portion 182 is to be operated by the user. Operation portion 182 is operated in a direction shown with an arrow A3. The direction shown with arrow A3 is a direction of rotation from main body right side surface 313 to the right and from the rear surface side of main body apparatus 3 toward the front surface. From another point of view, the direction shown with arrow A3 is a direction of rotation in fifth direction R5 while it is directed to third direction R3 in first game controller 1. Operation portion 182 may be configured to be operated in a direction in parallel to third direction R3. Fig. 18 shows a state (natural state) before operation portion 182 is operated.

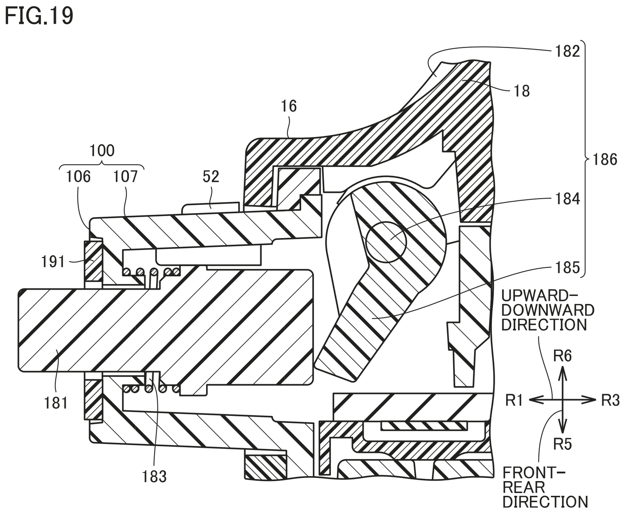

Fig. 19 is a schematic cross-sectional view showing a state in which operation portion 182 is operated. Rotation shaft 184 rotates together with pusher actuation portion 185 as a result of operation on operation portion 182. Pusher actuation portion 185 has pusher 181 project.

Before operation portion 182 is operated, pusher 181 is arranged in projection 100. Biasing portion 183 biases pusher 181 in third direction R3. Biasing portion 183 is implemented, for example, by a coil spring. As the user operates operation portion 182 in third direction R3, rotation shaft 184 rotates together with each of operation portion 182 and pusher actuation portion 185 and pusher actuation portion 185 pushes pusher 181 in first direction R1. A part of pusher 181 projects from projection 100. As the user removes his/her hand from operation portion 182, biasing portion 183 extends and pusher 181 moves in third direction R3. Pusher 181 thus returns to a position in the natural state.

As shown in Figs. 18 and 19, operation portion 182 is operated at least in third direction R3. In the present example, operation portion 182 is rotationally operated in a direction including third direction R3 and fifth direction R5. In other words, the operation direction of operation portion 182 is third direction R3 (a direction away from upper side surface 11) when viewed in the rear direction of first game controller 1 and fifth direction R5 (the direction toward the rear surface) when viewed in the side direction. When operation portion 182 is operated in third direction R3, pusher 181 is moved in first direction R1. From another point of view, pusher 181 is moved toward the side opposite to the operation direction of operation portion 182.

### <Attachment>

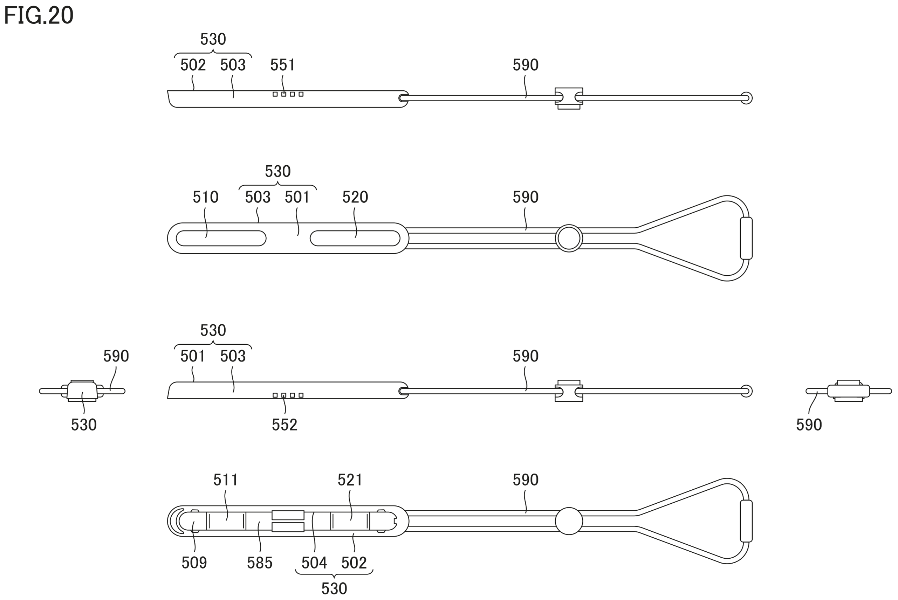

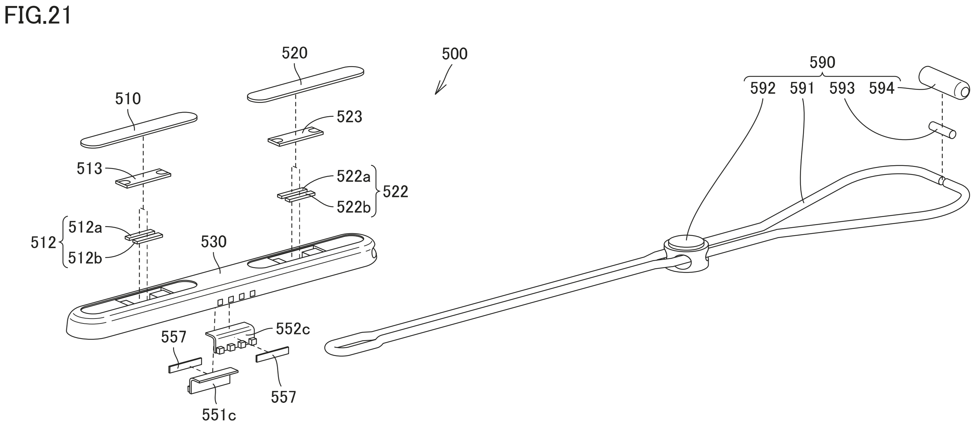

Details of the configuration of the attachment according to the first embodiment will now be described. Fig. 20 is a schematic six-view drawing showing the configuration of the attachment according to the first embodiment. Fig. 21 is an exploded schematic perspective view showing the configuration of the attachment according to the first embodiment.

As shown in Figs. 20 and 21, attachment 500 according to the first embodiment includes main body member 530, strap 590, a first magnet member 512, a second magnet member 522, a first yoke 513, a second yoke 523, first cover 510, a second cover 520, a first light guide member 551c, a second light guide member 552c, and two double-faced tapes 557.

Strap 590 is attached to main body member 530. Strap 590 includes a string member 591, a stopper 592, a swaging member 593, and a swaging cover 594. Swaging member 593 connects opposing ends of string member 591 to each other. Swaging cover 594 covers swaging member 593. String member 591 is drawn through two holes located in stopper 592. The user's wrist is put through a ring formed by string member 591. A size of the ring is adjusted by moving stopper 592 along string member 591. With strap 590, attachment 500 is attached to the user's wrist.

As shown in Fig. 20, attachment 500 includes recess 585. Recess 585 is located at main body member 530. Main body member 530 includes an upper surface 501, a lower surface 502, an outer peripheral surface 503, and an inner peripheral surface 504. Lower surface 502 is located opposite to upper surface 501. Outer peripheral surface 503 is contiguous to each of upper surface 501 and lower surface 502. Recess 585 is open at lower surface 502. Recess 585 extends along the longitudinal direction of main body member 530. Recess 585 includes a bottom surface 509. Inner peripheral surface 504 is contiguous to lower surface 502. Recess 585 is defined, for example, by bottom surface 509 and inner peripheral surface 504. Inner peripheral surface 504 is surrounded by outer peripheral surface 503. Outer peripheral surface 503 is provided with first light guide path 551 and second light guide path 552.

As shown in Fig. 21, first magnet member 512 includes two first magnet pieces 512a and 512b different in orientation of polarity. The polarity at a bottom surface 509 side of one of two first magnet pieces 512a and 512b is the N pole. The polarity at the bottom surface 509 side of the other of two first magnet pieces 512a and 512b is the S pole. Similarly, second magnet member 522 includes two second magnet pieces 522a and 522b different in orientation of polarity. The polarity at the bottom surface 509 side of one of two second magnet pieces 522a and 522b is the N pole. The polarity at the bottom surface 509 side of the other of two second magnet pieces 522a and 522b is the S pole. A material for each of first magnet member 512 and second magnet member 522 is, for example, a neodymium magnet.

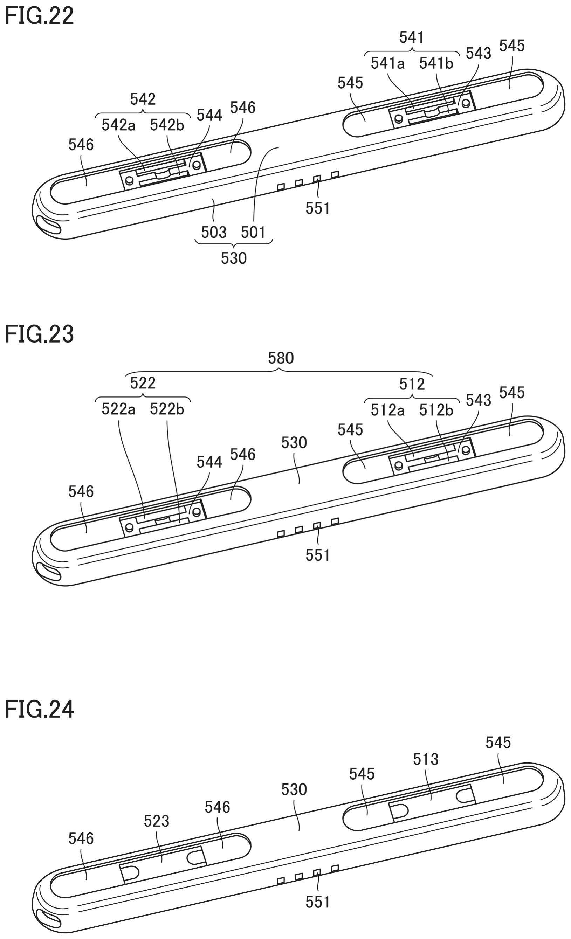

Fig. 22 is a schematic perspective view showing a configuration of main body member 530 provided with the light guide path. As shown in Fig. 22, upper surface 501 is provided with a first upper-surface recess 541, a second upper-surface recess 542, a third upper-surface recess 543, a fourth upper-surface recess 544, a fifth upper-surface recess 545, and a sixth upper-surface recess 546. First upper-surface recess 541 includes two first recesses 541a and 541b. Each of two first recesses 541a and 541b extends in the longitudinal direction of recess 585. Second upper-surface recess 542 includes two second recesses 542a and 542b. Each of two second recesses 542a and 542b extends along the longitudinal direction of recess 585.

First upper-surface recess 541 is located at the bottom surface of third upper-surface recess 543. Second upper-surface recess 542 is located at the bottom surface of fourth upper-surface recess 544. Third upper-surface recess 543 is located at the bottom surface of fifth upper-surface recess 545. Fourth upper-surface recess 544 is located at the bottom surface of sixth upper-surface recess 546.

Fig. 23 is a schematic perspective view showing a configuration where a magnet 580 is located at main body member 530. Magnet 580 includes first magnet member 512 and second magnet member 522. First magnet member 512 is accommodated in first upper-surface recess 541. Specifically, two first magnet pieces 512a and 512b are accommodated in two first recesses 541a and 541b, respectively. Similarly, second magnet member 522 is accommodated in second upper-surface recess 542. Specifically, two second magnet pieces 522a and 522b are accommodated in two second recesses 542a and 542b, respectively. As first upper-surface recess 541 and second upper-surface recess 542 are located at upper surface 501, first magnet member 512 and second magnet member 522 can readily be assembled to main body member 530. As first magnet member 512 is accommodated in first upper-surface recess 541 and second magnet member 522 is accommodated in second upper-surface recess 542, separation of first magnet member 512 and second magnet member 522 from main body member 530 can be suppressed.

Each of two first magnet pieces 512a and 512b extends along the longitudinal direction of recess 585. Two first magnet pieces 512a and 512b are arranged as being opposed to each other in a direction of a short side of recess 585. Similarly, each of two second magnet pieces 522a and 522b extends along the longitudinal direction of recess 585. Two second magnet pieces 522a and 522b are arranged as being opposed to each other in the direction of the short side of recess 585.

Fig. 24 is a schematic perspective view showing a configuration in which the yoke and the magnet are located at main body member 530. As shown in Fig. 24, first yoke 513 is arranged at third upper-surface recess 543. First yoke 513 extends along the longitudinal direction of recess 585. Similarly, second yoke 523 is arranged at fourth upper-surface recess 544. Second yoke 523 extends along the longitudinal direction of recess 585. For example, iron may be adopted as the material for each of first yoke 513 and second yoke 523, and by way of example, SPCC may be adopted. First yoke 513 may be fixed to main body member 520. Though means for fixing first yoke 513 is not limited, by way of example, first yoke 513 may be fixed to third upper-surface recess 543 by an adhesive. Similarly, second yoke 523 may be fixed to main body member 520.

According to attachment 500 in the present embodiment, two magnet pieces different in orientation of polarity are arranged as being opposed to each other and the yoke is arranged on the two magnet pieces. While strong magnetic force is generated by a loop of magnetic fluxes, leakage fluxes at a side opposite to recess 585 can be suppressed.

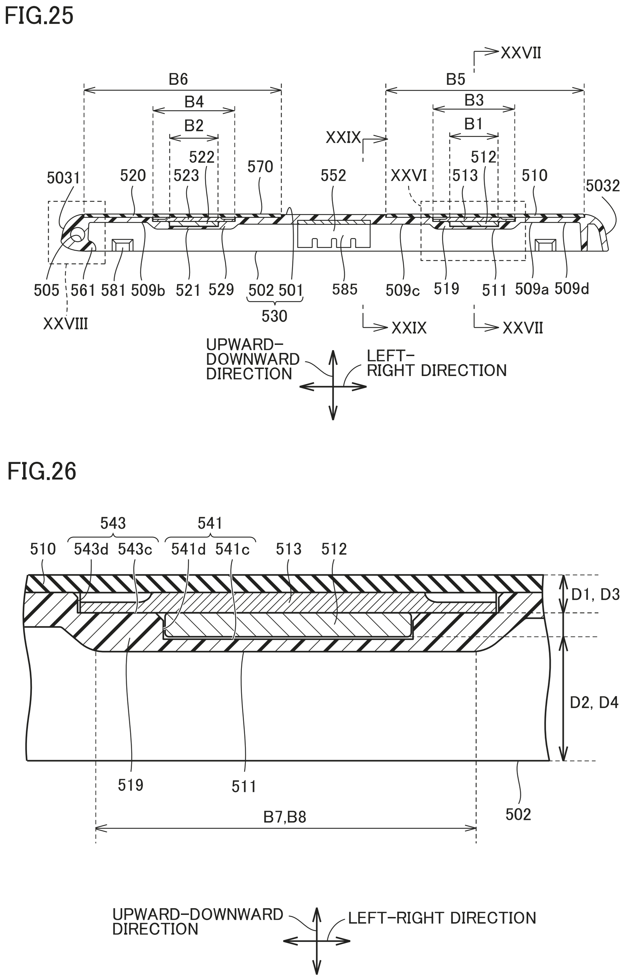

Fig. 25 is a schematic cross-sectional view showing the configuration of the attachment according to the first embodiment. The cross-section shown in Fig. 25 is perpendicular to each of the longitudinal direction of recess 585 and a depth direction of recess 585. The longitudinal direction of recess 585 will be referred to as the left-right direction below. The depth direction of recess 585 will also be referred to as the upward-downward direction. Upper surface 501 is located at an upward side with respect to outer peripheral surface 503. Lower surface 502 is located at a downward side with respect to outer peripheral surface 503. The direction of the short side of recess 585 is the direction perpendicular to each of the longitudinal direction of recess 585 and the depth direction of recess 585. The direction of the short side of recess 585 will also be referred to as the front-rear direction.

As shown in Figs. 24 and 25, first cover 510 is arranged at fifth upper-surface recess 545. First cover 510 is arranged on first yoke 513. First cover 510 covers first yoke 513. First cover 510 can suppress fall of first yoke 513 and first magnet member 512 from main body member 530. By providing fifth upper-surface recess 545, positioning of first cover 510 is facilitated. Similarly, second cover 520 is arranged at sixth upper-surface recess 546. Second cover 520 is arranged on second yoke 523. Second cover 520 covers second yoke 523. Second cover 520 can suppress fall of second yoke 523 and second magnet member 522 from main body member 530. By providing sixth upper-surface recess 546, positioning of second cover 520 is facilitated.

As shown in Figs. 21 to 25, magnet 580 is located along the longitudinal direction of recess 585. According to attachment 500 according to the present embodiment, magnet 580 includes first magnet member 512 and second magnet member 522 as a plurality of magnets, and they are arranged as being aligned along the longitudinal direction of recess 585. Each of first magnet member 512 and second magnet member 522 may extend along the longitudinal direction of recess 585. There may be a single magnet 580. In an example where there is a single magnet 580, magnet 580 extends along the longitudinal direction of recess 585.

First yoke 513 and second yoke 523 are arranged as being aligned along the longitudinal direction of recess 585. In the longitudinal direction (that is, the left-right direction) of recess 585, a length (first yoke length B3) of first yoke 513 is longer than a length (first magnet length B1) of first magnet member 512. In the longitudinal direction of recess 585, a length (second yoke length B4) of second yoke 523 is longer than a length (second magnet length B2) of second magnet member 522.

First cover 510 and second cover 520 are arranged as being aligned along the longitudinal direction of recess 585. In the longitudinal direction of recess 585, a length (first cover length B5) of first cover 510 is longer than the length (first yoke length B3) of first yoke 513. In the longitudinal direction of recess 585, a length (second cover length B6) of second cover 520 is longer than the length (second yoke length B4) of second yoke 523.

Fig. 26 is an enlarged schematic diagram of an area XXVI in Fig. 25. As shown in Figs. 25 and 26, first magnet member 512 has been attracted to first yoke 513. First magnet member 512 is not fixed to the bottom surface of first upper-surface recess 541. First magnet member 512 may be distant from the bottom surface of first upper-surface recess 541. There may be a gap between first magnet member 512 and the bottom surface of first upper-surface recess 541. From another point of view, a length in the upward-downward direction of first magnet member 512 may be shorter than a depth of first upper-surface recess 541. Second magnet member 522 and second upper-surface recess 542 may be substantially the same in structure as first magnet member 512 and first upper-surface recess 541, respectively.

In an example where the magnet member adheres to and is fixed to the bottom surface of the upper-surface recess, when attraction force is generated between the yoke and the magnet member, depending on relation between adhesive force and attraction force, the magnet member may peel off from the bottom surface of the upper-surface recess. Specifically, the magnet member may adhere to the bottom surface of the upper-surface recess in some cases and may be attracted to the yoke in other cases. Therefore, the magnet member may not apply intended magnetic force to game controller 1. Therefore, by causing first magnet member 512 to be attracted to first yoke 513 without adhering to the bottom surface of first upper-surface recess 541 and by causing second magnet member 522 to be attracted to second yoke 523 without adhering to the bottom surface of second upper-surface recess 542, occurrence of a situation where intended magnetic force is not applied can be suppressed.

As shown in Fig. 26, a thickness at a central portion of first yoke 513 may be larger than a thickness at the end in the longitudinal direction of first yoke 513. The end in the longitudinal direction of first yoke 513 does not have to be in contact with first cover 510. There may be a gap between the end in the longitudinal direction of first yoke 513 and first cover 510. Second yoke 523 may be substantially the same in structure as first yoke 513.

As shown in Fig. 26, in the upward-downward direction, a distance (first distance D1) from first magnet member 512 to an end opposite to a side where recess 585 is located is shorter than a distance (second distance D2) from first magnet member 512 to an opening end of recess 585. First distance D1 is the distance from an upper side surface of first magnet member 512 to an upper side surface of first cover 510. Second distance D2 is the distance from a lower side surface of first magnet member 512 to lower surface 502 of main body member 530. Though second distance D2 is not particularly limited, it may be at least two times or at least three times as long as first distance D1.

Similarly, in the upward-downward direction, a distance (third distance D3) from second magnet member 522 to the end opposite to the side where recess 585 is located is shorter than a distance (fourth distance D4) from second magnet member 522 to the opening end of recess 585. Third distance D3 is the distance from an upper side surface of second magnet member 522 to an upper side surface of second cover 520. Fourth distance D4 is the distance from a lower side surface of second magnet member 522 to lower surface 502 of main body member 530. Though fourth distance D4 is not particularly limited, it may be at least two times or at least three times as long as third distance D3.

By increasing the distance from each of first magnet member 512 and second magnet member 522 to lower surface 502 where recess 585 is located as set forth above, even when an unintended object comes closer to recess 585, influence by the magnet on the unintended object can be suppressed. By decreasing the distance from each of first magnet member 512 and second magnet member 522 to upper surface 501 of main body member 530, attachment 500 can be reduced in size. Furthermore, by locating first yoke 513 between first magnet member 512 and upper surface 501 and locating second yoke 523 between second magnet member 522 and upper surface 501, generation of leakage fluxes at the upper surface 501 side can be suppressed.

In the upward-downward direction, first yoke 513 is located between the end opposite to the side where recess 585 is located and first magnet member 512. In the upward-downward direction, first yoke 513 is located between first cover 510 and first magnet member 512. Similarly, in the upward-downward direction, second yoke 523 is located between the end opposite to the side where recess 585 is located and second magnet member 522. In the upward-downward direction, second yoke 523 is located between second cover 520 and second magnet member 522.

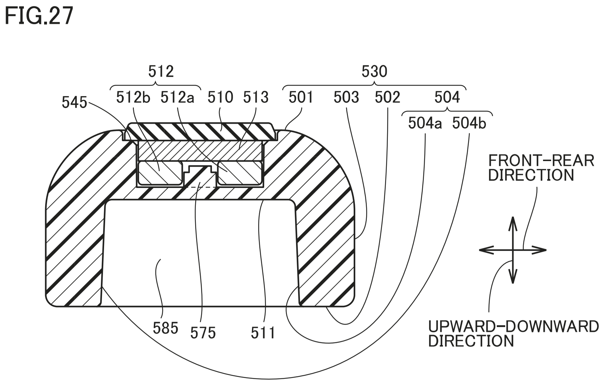

Fig. 27 is a schematic cross-sectional view along the line XXVII-XXVII in Fig. 25. As shown in Fig. 27, first upper-surface recess 541 may be provided with a first main body protruding portion 575. Two magnet pieces 512a and 512b are spaced apart by first main body protruding portion 575. First main body protruding portion 575 may be distant from first yoke 513. There may be a gap between first main body protruding portion 575 and first yoke 513.

In the direction of the short side (that is, the front-rear direction) of recess 585, first main body protruding portion 575 is located between two first magnet pieces 512a and 512b. Each of two first magnet pieces 512a and 512b has been attracted to first yoke 513. Each of two first magnet pieces 512a and 512b may be distant from a bottom surface of first upper-surface recess 541. A part of first cover 510 may protrude from fifth upper-surface recess 545 toward upper surface 501. A thickness of first cover 510 may be larger than a depth of fifth upper-surface recess 545.

### <Engagement Element>

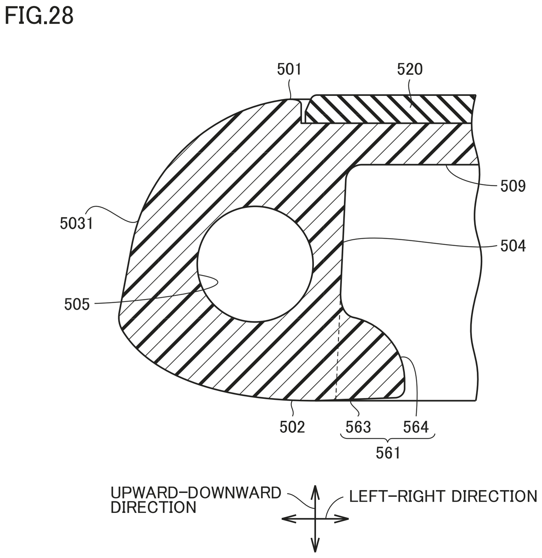

Fig. 28 is an enlarged schematic diagram of an area XXVIII in Fig. 25. As shown in Fig. 28, attachment 500 includes an engagement element 561. Engagement element 561 is located at inner peripheral surface 504 of recess 585. Engagement element 561 is located at at least one end surface in the longitudinal direction of recess 585, in inner peripheral surface 504 of recess 585. In other words, engagement element 561 may be located only at one end surface in the longitudinal direction of recess 585, in inner peripheral surface 504 of recess 585 or located at both of the end surfaces in the longitudinal direction of recess 585. According to the present embodiment, of the end surface at one side and the end surface at the other side in the longitudinal direction of recess 585, in inner peripheral surface 504 of recess 585, engagement element 561 is located only at the end surface at the one side.

As shown in Fig. 28, engagement element 561 includes a curved surface 564 and a lower side surface portion 563. Engagement element 561 projects toward the inside of recess 585. Curved surface 564 is a surface of engagement element 561 that faces bottom surface 509 of recess 585, and it is distant from bottom surface 509 of recess 585. Lower side surface portion 563 is a surface of engagement element 561 that faces an opening side of recess 585 and contiguous to curved surface 564. Curved surface 564 is in a curved shape. Curved surface 564 may be curved convexly toward the inside of recess 585 and bottom surface 509. Engagement element 561 may be in a shape projecting toward the inside of recess 585 toward the opening side from the bottom surface 509 side of recess 585. In the upward-downward direction, engagement element 561 may be located at a position closer to the opening side than the bottom surface 509 side of recess 585, in the end surface of inner peripheral surface 504 of recess 585.

Lower side surface portion 563 of engagement element 561 may be contiguous to lower surface 502 of main body member 530. In a cross-section in parallel to each of the upward-downward direction and the left-right direction, lower side surface portion 563 may linearly extend. In the cross-section, lower side surface portion 563 may be inclined toward bottom surface 509 with respect to lower surface 502. Lower side surface portion 563 may be curved convexly toward the inside and the opening of recess 585. Lower side surface portion 563 may be curved to a lesser extent than curved surface 564. As shown in Fig. 28, an end of lower surface 502 at a side where engagement element 561 is located is rounded. The end of lower surface 502 at the side where engagement element 561 is located does not have to be rounded. By way of example, lower surface 502 as a whole may be a plane in parallel to upper side surface 11.

Main body member 530 includes an attachment portion 505 of strap 590. Attachment portion 505 is, for example, a through hole that passes through main body member 530 in the front-rear direction. Attachment portion 505 passes through an outer side surface at one side and an outer side surface at the other side in the direction of the short side of recess 585, in outer peripheral surface 503 of main body member 530. Attachment portion 505 is located in the vicinity of engagement element 561.

Attachment portion 505 is located outside recess 585. Attachment portion 505 is located at one side in the longitudinal direction of recess 585. Attachment portion 505 is located at a side the same as the one side where engagement element 561 is located, relative to the center of attachment 500, in the longitudinal direction of recess 585. As shown in Fig. 25, main body member 530 includes a first outer side surface portion 5031 located at the one side in the longitudinal direction of recess 585 and a second outer side surface portion 5032 located at the other side in the longitudinal direction of recess 585. In the longitudinal direction of recess 585, attachment portion 505 is located between first outer side surface portion 5031 and engagement element 561. In the upward-downward direction, attachment portion 505 is located between bottom surface 509 and lower surface 502.

### <Light Guide Path>

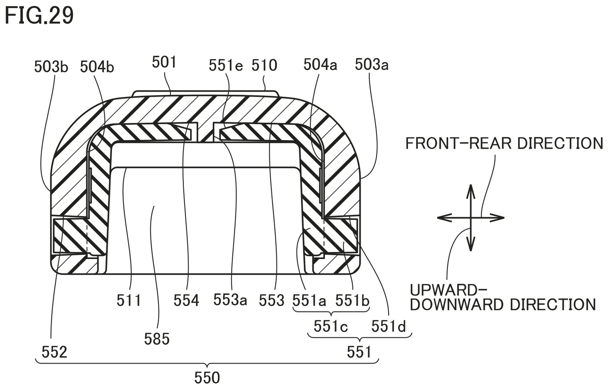

Fig. 29 is a schematic cross-sectional view along the line XXIX-XXIX in Fig. 25. As shown in Fig. 29, recess 585 includes a first inner peripheral surface 504a and a second inner peripheral surface 504b opposed to each other. Each of first inner peripheral surface 504a and second inner peripheral surface 504b extends along the longitudinal direction of recess 585.

Attachment 500 includes first light guide path 551 and second light guide path 552. In the cross-section in parallel to each of the upward-downward direction and the front-rear direction, first light guide path 551 and second light guide path 552 may be in line symmetry with respect to a straight line extending in the upward-downward direction.

First light guide path 551 includes first light guide member 551c and a first light guide hole 551d. First light guide member 551c includes a first light guide portion 551a having a cross-section in an L shape and a second light guide portion 551b having a cross-section in a quadrangular shape. First light guide portion 551a may be attached to a first accommodation portion 553 in an L shape located in main body member 530. First accommodation portion 553 is a portion obtained by carving first inner peripheral surface 504a and bottom surface 509 in the L shape.

Second light guide portion 551b is contiguous to first light guide portion 551a. Second light guide portion 551b is inserted in first light guide hole 551d. First light guide hole 551d is formed at main body member 530. First light guide hole 551d passes through a first outer peripheral surface 503a and first inner peripheral surface 504a of main body member 530. First outer peripheral surface 503a is located opposite to first inner peripheral surface 504a. First light guide path 551 may be defined only by first light guide hole 551d. First light guide path 551 does not have to include first light guide member 551c.

Second light guide path 552 is substantially similar in configuration to first light guide path 551 and similarly arranged.

The entirety or a part of first light guide member 551c may be made of a material (for example, transparent plastic) through which light can be guided.

According to attachment 500 in the present embodiment, first accommodation portion 553 includes a stopper end surface 553a on which first light guide portion 551a abuts when second light guide portion 551b moves in a direction of an axial line of first light guide hole 551d. Stopper end surface 553a extends along the upward-downward direction. Therefore, even when first light guide member 551 is pushed from the outside of first light guide hole 551d of attachment 500, movement of first light guide member 551 any further toward the back is suppressed by abutment of first light guide portion 551a on stopper end surface 553a of first accommodation portion 553. Since first light guide member 551 is attached to first accommodation portion 553, fall of first light guide member 551 from main body member 530 is suppressed. This is also applicable to second light guide member 552.

Furthermore, first light guide portion 551a may include a tapered surface 551e located at a bottom side of recess 585 in the upward-downward direction and at an inner side of recess 585 in the front-rear direction. Tapered surface 551e is inclined with respect to the front-rear direction such that the thickness in the upward-downward direction of first light guide portion 551a becomes smaller toward the inner side in the front-rear direction of recess 585. First light guide portion 551a can thus readily be matched with first accommodation portion 553 by inserting second light guide portion 551b in first light guide hole 551d and rotating first light guide member 551c with first light guide hole 551d being defined as the fulcrum.

### <Pressing-Down Area>

As shown in Fig. 25, main body member 530 includes a first pressing-down portion 519 and a second pressing-down portion 529. Bottom surface 509 of recess 585 includes a first pressing-down area 511 and a second pressing-down area 521. First pressing-down portion 519 defines first pressing-down area 511. First pressing-down area 511 is an area where first button 110 of game controller 1 is to be pressed down. At least a part of first pressing-down area 511 is opposed to at least a part of the top surface of first button 110. Second pressing-down portion 529 defines second pressing-down area 521. Second pressing-down area 521 is an area where second button 120 of game controller 1 is to be pressed down. At least a part of second pressing-down area 521 is opposed to at least a part of the top surface of second button 120.

Bottom surface 509 of recess 585 includes a first bottom surface area 509a, a central bottom surface area 509c, and a second bottom surface area 509b. In the longitudinal direction of recess 585, first pressing-down area 511 is located between first bottom surface area 509a and central bottom surface area 509c. Second pressing-down area 521 is located between second bottom surface area 509b and central bottom surface area 509c.

First pressing-down area 511 projects relatively to at least a part of an area other than first pressing-down area 511, in bottom surface 509 of recess 585. Thus, for example, even when the top surface of first button 110 is located at a position in the back from the top surface of projection 100, first button 110 can readily be pressed down. First pressing-down area 511 may project relatively to a part of first bottom surface area 509a. First pressing-down area 511 may project relatively to a part of second bottom surface area 509b. First pressing-down area 511 may project relatively to a part of central bottom surface area 509c.

In another manner, first pressing-down area 511 does not have to project relatively to at least a part of the area other than first pressing-down area 511, in bottom surface 509 of recess 585. In the upward-downward direction, first pressing-down area 511 may be located as high as each of first bottom surface area 509a, second bottom surface area 509b, and central bottom surface area 509c.

Second pressing-down area 521 projects relatively to at least a part of an area other than second pressing-down area 521, in bottom surface 509 of recess 585. Thus, for example, even when the top surface of second button 120 is located at a position in the back from the top surface of projection 100, second button 120 can readily be pressed down. Second pressing-down area 521 may project relatively to a part of first bottom surface area 509a. Second pressing-down area 521 may project relatively to a part of second bottom surface area 509b. Second pressing-down area 521 may project relatively to a part of central bottom surface area 509c.

In another manner, second pressing-down area 521 does not have to project relatively to at least a part of the area other than second pressing-down area 521, in bottom surface 509 of recess 585. In the upward-downward direction, second pressing-down area 521 may be located as high as each of first bottom surface area 509a, second bottom surface area 509b, and central bottom surface area 509c.

In attachment 500 in the present embodiment, magnet 580 is located at the bottom of recess 585. Magnet 580 may be buried in bottom surface 509 of recess 585, may be arranged as being exposed at a surface of the hole formed at bottom surface 509 or a position in the back of the hole, or may be arranged on bottom surface 509. In one manner, first magnet member 512 is located at first pressing-down portion 519. First magnet member 512 is buried in first pressing-down area 511. First magnet member 512 is thus more readily attracted to first button 110. First magnet member 512 extends along first pressing-down area 511. Detachment of first magnet member 512 inside recess 585 is thus prevented. As compared with an example where first magnet member 512 is exposed at bottom surface 509 of recess 585, direct adhesion of a foreign matter such as iron sand to first magnet member 512 can be suppressed.

First magnet member 512 may be exposed at first pressing-down area 511, may be arranged in a hole located at first pressing-down area 511, or may be arranged on first pressing-down area 511. In the depth direction of recess 585, at least a part of first magnet member 512 is located between the deepest area which is the largest depth area of bottom surface 509 of recess 585 and first pressing-down area 511. By arranging first magnet member 512 between the deepest area and first pressing-down area 511, a space can effectively be used. Since first magnet member 512 is arranged near first button 110, attraction force between first magnet member 512 and first button 110 can be improved.

Second magnet member 522 is arranged substantially similarly to first magnet member 512.

The deepest area which is the largest depth area in bottom surface 509 of recess 585 may be first bottom surface area 509a, second bottom surface area 509b, or central bottom surface area 509c. In the upward-downward direction, each of first bottom surface area 509a and central bottom surface area 509c is located between first pressing-down area 511 and first cover 510. In the upward-downward direction, each of second bottom surface area 509b and central bottom surface area 509c is located between second pressing-down area 521 and second cover 520.

As shown in Figs. 11 and 12, the top surface of projection 100 includes first area 101 where first opening 197 is located and second area 102 where second opening 198 is located. First button 110 is arranged at first opening 197. Second button 120 is arranged at second opening 198. Each of first area 101 and second area 102 is located from one end to the other end in the direction (the front-rear direction of projection 100) perpendicular to the longitudinal direction of projection 100. As shown in Figs. 2 and 20, at bottom surface 509 of recess 585, each of first pressing-down area 511 and second pressing-down area 521 may be located from one end to the other end in the direction of the short side of recess 585. Therefore, even when attachment 500 is displaced slightly in the front-rear direction, first pressing-down area 511 and second pressing-down area 521 can push first button 110 and second button 120, respectively.

In another manner, at bottom surface 509 of recess 585, each of first pressing-down area 511 and second pressing-down area 521 may be distant from one end in the direction of the short side of recess 585 or distant from the other end in the direction of the short side. In yet another manner, each of first pressing-down area 511 and second pressing-down area 521 may be distant from the one end in the direction of the short side of recess 585 and contiguous to the other end in the direction of the short side.

### <Notch>

As shown in Fig. 25, a notch 581 may be located at inner peripheral surface 504 of recess 585. Notch 581 serves to avoid elastically deformable body 52, 54 that projects from outer peripheral surface 503 of projection 100 of game controller 1. Elastically deformable body 52, 54 collapses as it abuts on inner peripheral surface 504 of game-device-side recess 585 when projection 100 of game controller 1 is matched with game-device-side recess 585. When projection 100 of game controller 1 is matched with recess 585 of attachment 500, elastically deformable body 52, 54 is arranged inside notch 581.

Notch 581 may be located at only one of first inner peripheral surface 504a and second inner peripheral surface 504b of recess 585, or may be located at each of first inner peripheral surface 504a and second inner peripheral surface 504b. According to attachment 500 in the present embodiment, two notches 581 are located at first inner peripheral surface 504a and two notches 581 are located at second inner peripheral surface 504b. In the longitudinal direction of recess 585, one of two notches 581 is arranged at one side (right side) relative to first pressing-down area 511, and the other of two notches 581 is arranged at the other side (left side) relative to second pressing-down area 521. In other words, in the longitudinal direction of recess 585, first pressing-down area 511 and second pressing-down area 521 lie between two notches 581.

As shown in Fig. 25, notch 581 extends from the opening end of recess 585 toward the bottom surface side. Notch 581 is formed to open at lower surface 502 of main body member 530. Notch 581 is distant from bottom surface 509 of recess 585. In the upward-downward direction, notch 581 is arranged closer to lower surface 502 of main body member 530.

When elastically deformable body 52, 54 of game controller 1 interferes with inner peripheral surface 504 of recess 585 of attachment 500, it becomes more difficult for attachment 500 to move toward game controller 1. In other words, it becomes more difficult to press down first button 110 and second button 120 of game controller 1 with attachment 500. As notch 581 for avoiding elastically deformable body 52, 54 is located at inner peripheral surface 504 of recess 585 of attachment 500, interference with movement of attachment 500 can be suppressed.

### <Attachment Method>

A method of attaching attachment 500 to game controller 1 will now be described. Fig. 30 is a schematic diagram showing a state in which attachment 500 is attached to game controller 1. Fig. 31 is an enlarged schematic cross-sectional view in an area XXXI in Fig. 30.

As shown in Figs. 30 and 31, engagement element 561 of attachment 500 is inserted in second engagement hole 194 of game controller 1 along a direction shown with a first arrow S1. In this state, the longitudinal direction of recess 585 of attachment 500 is inclined with respect to the longitudinal direction of projection 100 of game controller 1. A part of projection 100 of game controller 1 is matched with recess 585 of attachment 500.

While a state in which engagement element 561 of attachment 500 is located in second engagement hole 194 of game controller 1 is maintained, attachment 500 rotates in the plane perpendicular to the front-rear direction of game controller 1. The end of main body member 530 located opposite to the end of main body member 530 where strap 590 is located moves in a direction toward game controller 1 along a direction shown with a second arrow S2. Projection 100 of game controller 1 is thus matched with recess 585 of attachment 500. Attachment 500 is attached to game controller 1 as set forth above.

### <Attached State>

A state in which attachment 500 has been attached to game controller 1 will now be described. Fig. 32 is a schematic front view showing the state in which attachment 500 has been attached to game controller 1. Fig. 33 is an enlarged schematic cross-sectional view in an area XXXIII in Fig. 32.

As shown in Figs. 32 and 33, attachment 500 has been attached to game controller 1 such that recess 585 is matched with projection 100 of game controller 1. In the longitudinal direction of projection 100 of game controller 1, the entire projection 100 has been matched with recess 585 of attachment 500. Projection 100 of game controller 1 is located at upper side surface 11 of controller housing 10. Lower surface 502 of attachment 500 is opposed to upper side surface 11 of game controller 1. Attachment 500 is attached to game controller 1 such that the longitudinal direction of recess 585 of attachment 500 extends along the longitudinal direction of projection 100 of game controller 1.

Lower surface 502 of attachment 500 is distant from upper side surface 11 of game controller 1. A depth (recess depth C) of recess 585 of attachment 500 is smaller than a height (twelfth height T12) of projection 100 of game controller 1. The depth of recess 585 of attachment 500 is the depth of recess 585 in the upward-downward direction of attachment 500. The height of projection 100 of game controller 1 is the height of projection 100 in the upward-downward direction of game controller 1. Twelfth height T12 may be the same as third height T3 or fifth height T5 (see Fig. 13). Recess depth C may be smaller than sixth height T6 or seventh height T7 (see Fig. 13). The depth of the deepest portion of recess 585 of attachment 500 may be smaller than the height of the highest portion of projection 100 of game controller 1.

As shown in Fig. 33, engagement element 561 of attachment 500 is arranged at second engagement hole 194 of game controller 1. Second engagement hole 194 is located at one end surface in the longitudinal direction of projection 100, in outer peripheral surface 503 of projection 100 of game controller 1.

As engagement element 561 is engaged with second engagement hole 194, unintended separation of attachment 500 from game controller 1 can be suppressed. Therefore, attachment of attachment 500 to game controller 1 can be reinforced. For example, even when magnetic force of the magnet of attachment 500 is weaker than magnetic force of the magnet of the game device, attachment can be reinforced.

Engagement element 561 is located at inner peripheral surface 504 of recess 585. Therefore, as compared with an example where engagement element 561 is located outside recess 585, a space can be saved. In addition, engagement element 561 being unintentionally caught by something can be suppressed. Engagement element 561 has a tip end tapered to have a shape projecting toward the inside of recess 585. Therefore, engagement element 561 is readily attached to second engagement hole 194. Engagement element 561 is provided with curved surface 564 that projects toward the inside of recess 585. Therefore, by rotating attachment 500 with engagement element 561 being defined as the fulcrum in removal of attachment 500 from game controller 1, attachment 500 can readily be removed.

Furthermore, engagement element 561 is located at a position closer to the opening side than to the bottom surface 509 side of recess 585. Therefore, by causing engagement element 561 located at the position closer to the opening side of recess 585 to be caught at second engagement hole 194 of projection 100 while attachment 500 is tilted obliquely and moving recess 585 with respect to projection 100 by rotating the same with the position where the engagement element is caught being defined as the fulcrum, attachment 500 can readily be attached to game controller 1.

As shown in Fig. 33, attachment portion 505 of strap 590 is located in a direction opposed to upper side surface 11 of game controller 1. Attachment portion 505 of strap 590 is located at a side the same as the one side where engagement element 561 is located relatively to the center of attachment 500, in the longitudinal direction of recess 585. Attachment portion 505 of strap 590 is located in the vicinity of engagement element 561.

Engagement element 561 limits a direction of separation of attachment 500. In order to remove attachment 500 from game controller 1, engagement element 561 should be moved in a direction toward game controller 1 (direction shown with a fourth arrow S4). Attachment portion 505 of strap 590, however, is located in the direction opposed to upper side surface 11 of game controller 1. Therefore, strap 590 cannot be pulled in the direction shown with fourth arrow S4 with strong force. This is because, if strap 590 is pulled in the direction shown with fourth arrow S4, strap 590 impinges on upper side surface 11 before it fully stretches in the direction shown with fourth arrow S4. The direction shown with fourth arrow S4 is the same as the direction of magnetic force of the first magnet member. The first magnet member has been attracted to first button 110 by magnetic force. Therefore, even when strap 590 is pulled in the direction shown with fourth arrow S4, strap 590 does not readily move. In other words, attachment 500 according to the present embodiment has such a structure as not readily being separated from game controller 1 even when strap 590 is pulled.

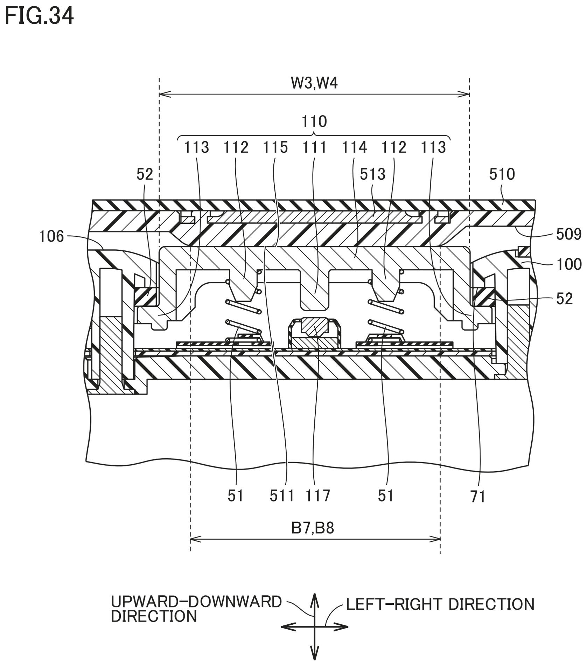

Fig. 34 is an enlarged schematic cross-sectional view in an area XXXIV in Fig. 32. Since the cross-section shown in Fig. 34 is the cross-section at a position intermediate between two first magnet pieces 512a and 512b included in first magnet member 512 in the front-rear direction, Fig. 34 does not show first magnet member 512. As shown in Fig. 34, while upper-surface button (right) 110 of game controller 1 and first magnet member 512 of attachment 500 are attracted to each other, operation surface 115 of upper-surface button (right) 110 comes in contact with first pressing-down area 511. Top surface 106 of the projection is distant from bottom surface 509. There is a gap between top surface 106 of the projection and bottom surface 509.

When projection 100 of game controller 1 is matched with recess 585 of attachment 500, first button 110 and second button 120 are attracted to the magnets by magnetic force. Specifically, first magnet member 512 is attracted to first button 110 by magnetic force. Second magnet member 522 is attracted to second button 120 by magnetic force.

"First magnet member 512 being attracted to first button 110 by magnetic force" encompasses an example where first magnet member 512 is in direct contact with first button 110 and an example where another member is interposed between first magnet member 512 and first button 110. In the present embodiment, first magnet member 512 is attracted to first button 110 by magnetic force with main body member 530 being interposed. First pressing-down area 511 of main body member 530 is in contact with the top surface of first button 110. First magnet member 512 is distant from first button 110. First button 110 is held at first pressing-down area 511 of main body member 530 by magnetic force of first magnet member 512. Similarly, "second magnet member 522 being attracted to second button 120 by magnetic force" encompasses an example where second magnet member 522 is in direct contact with second button 120 and an example where another member is interposed between second magnet member 522 and second button 120.

According to attachment 500 according to the present embodiment, when projection 100 of game controller 1 is matched with recess 585 of attachment 500, first button 110 is attracted to first magnet member 512 by magnetic force and second button 120 is attracted to second magnet member 522 by magnetic force. Thus, while alignment between first magnet member 512 and second magnet member 522 is achieved owing to recess 585 matched with projection 100, first magnet member 512 and second magnet member 522 can be used to attach attachment 500 to game controller 1.

As shown in Fig. 34, a length (seventh length B7) of first pressing-down area 511 in the longitudinal direction of recess 585 is shorter than the length (third length W3) of the top surface of first button 110 in the longitudinal direction of projection 100. In the longitudinal direction of recess 585, the entire area of first pressing-down area 511 is opposed to the top surface of first button 110. Thus, even when first pressing-down area 511 is slightly displaced in the left-right direction, contact of first pressing-down area 511 with a part of the top surface of projection 100 which is not first button 110 can be suppressed. Therefore, interference with pressing down of first button 110 can be suppressed.

In another manner, the length of first pressing-down area 511 in the longitudinal direction of recess 585 may be equal to or longer than the length of the top surface of first button 110 in the longitudinal direction of projection 100.

This is also applicable to second pressing-down area 521 (eighth length B8) and the top surface (fourth length W4) of second button 120.

Game controller 1 includes first elastically deformable body 52 and second elastically deformable body 54. First elastically deformable body 52 is arranged between the upper surface of flange 113 and first inner surface 71. Second elastically deformable body 54 is arranged between the upper surface of flange 123 and first inner surface 73. Each of first elastically deformable body 52 and second elastically deformable body 54 elastically deforms by application of force and elastically returns by removal of application of force.

As attachment 500 is attached to game controller 1, first button 110 and first magnet member 512 are opposed to each other. First button 110 is made of the soft magnetic material in the present embodiment. Therefore, when first magnet member 512 comes closer to first button 110, first button 110 is pulled by magnetic force toward first magnet member 512. Then, force in a direction opposite to the direction of pressing-down is applied to first button 110. At this time, first elastically deformable body 52 located between flange 113 and first inner surface 71 is pushed in a direction toward first inner surface 71 by flange 113 and elastically deforms to contract in the direction opposite to a direction of pushing down. While first button 110 of game controller 1 and first magnet member 512 are attracted to each other, first elastically deformable body 52 may collapse in the upward-downward direction.

In removal of attachment 500 from game controller 1, first magnet member 512 attempts to move away from first button 110, however, they have been attracted to each other by magnetic force. Therefore, first button 110 further moves upward and first elastically deformable body 52 further collapses in the upward-downward direction.

From another point of view, in removal of attachment 500 from game controller 1, first button 110 attempts to instantaneously move further upward while it maintains attraction thereof to first magnet member 512. Thus, in removal of attachment 500 from game controller 1, clinginess or feel of resistance is produced and quick removal of first magnet member 512 from first button 110 is suppressed. This is also applicable to second magnet member 522 and second button 120.

When projection 100 of game controller 1 is matched with recess 585 of attachment 500, bottom surface 509 of recess 585 is distant from top surface 106 of projection 100. Specifically, first area 101 to fifth area 105 of top surface 106 are each distant from bottom surface 509 of recess 585.

Bottom surface 509 of recess 585 may include an abutment portion 509d on which pusher 181 that projects from the top surface of game controller 1 in accordance with the operation by the user abuts (see Fig. 25). Abutment portion 509d may be located at first bottom surface area 509a. Abutment portion 509d is located at the other side in the longitudinal direction of recess 585, in bottom surface 509 of recess 585. At the one side in the longitudinal direction of recess 585, engagement element 561 is located.

In another manner, bottom surface 509 of recess 585 does not have to include abutment portion 509d. In other words, at a portion of bottom surface 509 opposed to pusher 181, a pusher avoiding portion (not shown) may be provided. The pusher avoiding portion is, for example, a depression or a hole located at bottom surface 509. Thus, even when pusher 181 projects from the top surface of game controller 1 in accordance with the operation by the user, bottom surface 509 of recess 585 can be prevented from being pushed by pusher 181.

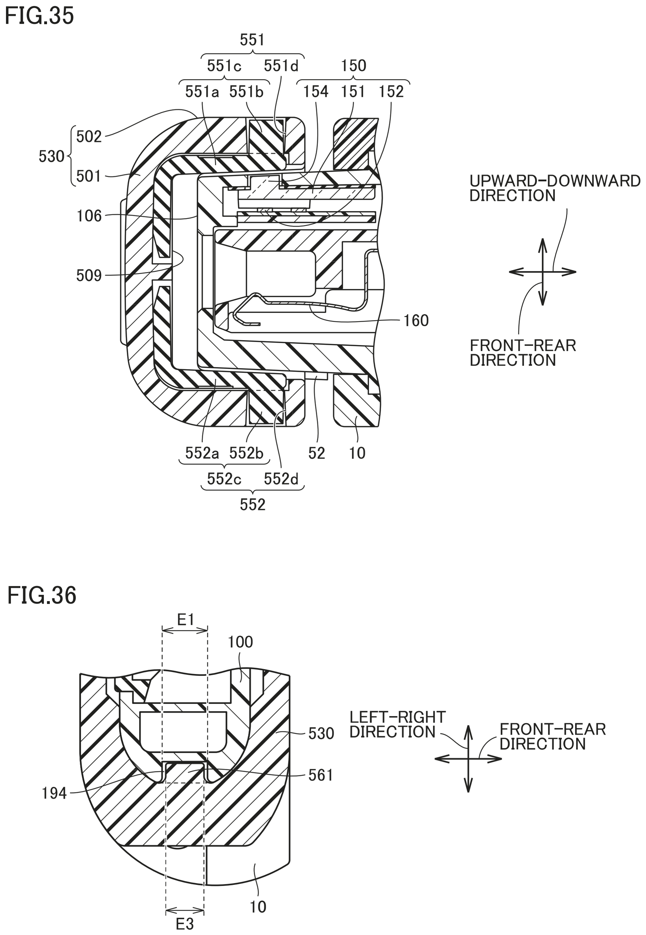

Fig. 35 is a schematic cross-sectional view along the line XXXV-XXXV in Fig. 32, that shows a portion around projection 100. As shown in Fig. 35, when projection 100 of game controller 1 is matched with recess 585 of attachment 500, first light guide path 551 of attachment 500 is arranged as being opposed to light emission portion 150 of game controller 1. More specifically, first light guide member 551c of first light guide path 551 is opposed to light emission portion 150. Light emission portion 150 is located on a virtual straight line that passes through first light guide hole 551d of first light guide path 551 and second light guide hole 552d of second light guide path 552.

Light emission portion 150 is located at outer peripheral surface 107 of projection 100. Light emission portion 150 emits light to the outside of projection 100. Through first light guide path 551, light emitted from projection 100 of game controller 1 matched with recess 585 of attachment 500 passes. Therefore, even when attachment 500 is attached to game controller 1, the user can visually recognize from the outside of attachment 500, light that has passed through first light guide path 551. In addition, light passes through from inner peripheral surface 504 of recess 585 toward outer peripheral surface 503 of main body member 530. Therefore, for example, the user who horizontally holds game controller 1 more readily visually recognizes light.

As shown in Fig. 35, both of first light guide path 551 and second light guide path 552 may be located at attachment 500. In this case, first light guide path 551 is opposed to light emission portion 150 when attachment 500 is attached to first game controller 1 and second light guide path 552 is opposed to light emission portion 150 when attachment 500 is attached to second game controller 2. Therefore, when attachment 500 is attached to any of first game controller 1 or second game controller 2, the user can visually recognize light from light emission portion 150. First light guide path 551 may be displaced from light emission portion 150. By way of example, first light guide path 551 may be opposed to light emission portion 150 at a position displaced upward therefrom. From another point of view, an upper area of light emission portion 150 may be opposed to first light guide path 551 and a lower area thereof may not be opposed to first light guide path 551.

Fig. 36 is a schematic cross-sectional view along the line XXXVI-XXXVI in Fig. 32. The cross-section shown in Fig. 36 is perpendicular to the upward-downward direction of attachment 500. As shown in Fig. 36, a width (third width E3) of first engagement element 561 in the front-rear direction of attachment 500 is smaller than a width (first width E1) of second engagement hole 194 in the front-rear direction of game controller 1. Therefore, first engagement element 561 of attachment 500 is insertable in second engagement hole 194 of game controller 1. In other words, first engagement element 561 of attachment 500 is engaged with second engagement hole 194 of game controller 1.

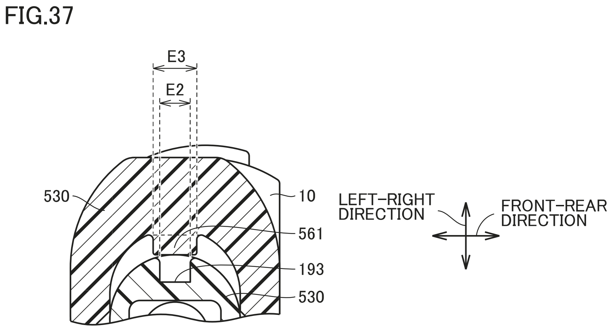

Fig. 37 is a schematic cross-sectional view showing a state in which an attempt to insert first engagement element 561 of attachment 500 in first engagement hole 193 of game controller 1 is made. In the longitudinal direction of projection 100, first engagement hole 193 of game controller 1 is located opposite to second engagement hole 194. First engagement hole 193 is located at the end surface at the other side in the longitudinal direction of projection 100, in outer peripheral surface 503 of projection 100 of game controller 1. Second engagement hole 194 is located at the end surface at the one side in the longitudinal direction of projection 100, in outer peripheral surface 503 of projection 100 of game controller 1.

As shown in Fig. 37, the width (third width E3) of first engagement element 561 in the front-rear direction of attachment 500 is larger than a width (second width E2) of first engagement hole 193 in the front-rear direction of game controller 1. Therefore, first engagement element 561 of attachment 500 is not insertable in first engagement hole 193 of game controller 1. In other words, first engagement element 561 of attachment 500 is not engaged with second engagement hole 194 of game controller 1.

First engagement element 561 of attachment 500 may be formed into such a shape that it is engaged with second engagement hole 194 of game controller 1 but not engaged with first engagement hole 193. Thus, though attachment 500 can be attached to game controller 1 in a correct direction, it cannot be attached to game controller 1 in a direction opposite to the correct direction. In addition, attachment 500 can readily be attached to game controller 1 in the correct direction.

First engagement element 561 may not be engaged with first engagement hole 193 based on the width of first engagement element 561 in the upward-downward direction of attachment 500 being larger than the width of first engagement hole 193 in the upward-downward direction of game controller 1. First engagement element 561 may not be engaged with first engagement hole 193 based on a difference in geometrical shape between first engagement element 561 and first engagement hole 193,.

### (Operation Surface)

Operation surface 570 of attachment 500 will now be described. As shown in Fig. 25, attachment 500 is provided with operation surface 570. Operation surface 570 is a surface to be operated by the user. In the upward-downward direction of attachment 500, recess 585 is located at one side and operation surface 570 is located at the other side.

Operation surface 570 may include first operation area 510 and second operation area 520 that are visually or tactilely identifiable. Being visually identifiable means, for example, that each operation area and an area other than that are different from each other in coloration, gloss, pattern, or the like. Being tactilely identifiable means, for example, that each operation area and an area other than that are different from each other in material or height or that there is a boundary (groove) between each operation area and the area other than that.

In the present embodiment, first operation area 510 is, for example, the upper surface of first cover 510. Second operation area 520 is, for example, the upper surface of second cover 520. Each of first operation area 510 and second operation area 520 is located along the longitudinal direction of recess 585. At least a partial area of upper surface 501 of main body member 530 may form operation surface 570. For example, an area between first operation area 510 and second operation area 520 in upper surface 501 of main body member 530 forms operation surface 570.

At the one side (right side) relative to the center of operation surface 570 in the longitudinal direction of recess 585, first operation area 510 is located closer to the end at one side (right side). In the present embodiment, the center of operation surface 570 in the longitudinal direction of recess 585 is substantially the same as the center in the longitudinal direction of recess 585. A distance between a left end of first operation area 510 and the center of operation surface 570 may be longer than a distance between a right end of first operation area 510 and second outer side surface portion 5032. In the longitudinal direction of recess 585, the center of first operation area 510 may be located at an outer side (right side) relative to the center of first pressing-down area 511.

At the other side (left side) relative to the center of operation surface 570 in the longitudinal direction of recess 585, second operation area 520 is located closer to the end at the other side (left side). A distance between a right end of second operation area 520 and the center of operation surface 570 may be longer than a distance between a left end of second operation area 520 and first outer side surface portion 5031. In the longitudinal direction of recess 585, the center of second operation area 520 may be located at the outer side (left side) relative to the center of second pressing-down area 521.

When attached to game controller 1, first operation area 510 may be located above first button 110, and in the longitudinal direction of recess 585, the center of first operation area 510 may be located at the outer side relative to the center of the top surface of first button 110. Similarly, when attached to game controller 1, second operation area 520 may be located above second button 120, and in the longitudinal direction of recess 585, the center of second operation area 520 may be located at the outer side relative to the center of the top surface of second button 120. In another manner, first operation area 510 and second operation area 520 as being combined may form the operation area.

As attachment 500 includes operation surface 570, first button 110 and second button 120 of game controller 1 can be pressed down while attachment 500 is attached to game controller 1.

### <Operation>

A method of using attachment 500 while attachment 500 is attached to game controller 1 will now be described.

Fig. 38 is a partial schematic cross-sectional view showing a state in which the right side of operation surface 570 is pushed. The cross-section shown in Fig. 38 is perpendicular to the front-rear direction of attachment 500. As shown in Fig. 38, game controller 1 to which attachment 500 has been attached is held by both hands of the user. Operation surface 570 of attachment 500 is being pushed by the right forefinger of the user. The right forefinger of the user pushes, for example, first cover 510. First cover 510 is a part of operation surface 570.

First pressing-down area 511 of main body member 530 is in contact with first button 110. As operation surface 570 is pressed down by the user, main body member 530 comes closer to game controller 1. First button 110 is thus pressed down by main body member 530. In other words, as operation surface 570 is pressed down by the user, first button 110 is pressed down. The tact switch located below first button 110 is thus pressed down by first button 110.

From another point of view, as at least a part of one side (right side) in the longitudinal direction of recess 585 in operation surface 570 is pressed down, the main body member is inclined with respect to game controller 1 such that one side (right side) of main body member 530 and upper side surface 11 of game controller 1 come closer to each other and first button 110 located at the one side (right side) is pressed down. A portion to be pressed down by the user should only be located at one side (right side) relative to the center of operation surface 570 in the longitudinal direction of recess 585, and is not limited to first cover 510. The portion to be pressed down by the user may be a portion of upper surface 501 of main body member 530 located at one side (right side) relative to the center of operation surface 570.

From yet another point of view, as at least a part of one side (right side) in the longitudinal direction of recess 585 in operation surface 570 is pressed down, main body member 530 may be inclined with respect to game controller 1 such that one side (right side) of main body member 530 comes closer to upper side surface 11 without being in contact with upper side surface 11. Though the one side (right side) of main body member 530 is seen as being in contact with upper side surface 11 in Fig. 38 due to the scale, there is actually a small gap between the one side (right side) of main body member 530 and upper side surface 11. While at least a part of the one side (right side) in the longitudinal direction of recess 585 in operation surface 570 is pressed down, a clearance between lower surface 502 of attachment 500 and upper side surface 11 of game controller 1 at the other side (left side) is larger than a clearance between lower surface 502 of attachment 500 and upper side surface 11 of game controller 1 at the one side (right side).

When one side (right side) of attachment 500 comes in contact with upper side surface 11 of game controller 1 at the time of pressing down of the right side of operation surface 570, depending on a dimension error in manufacturing or position displacement in the attached state of attachment 500 and/or game controller 1, such a situation that there is no input to the tact switch (the tact switch is not turned on) located below the right button in spite of the fact that attachment 500 cannot be pressed down any more may occur. As attachment 500 is inclined with respect to game controller 1 such that the one side (right side) of attachment 500 is not in contact with upper side surface 11 of game controller 1 at the time of pressing down of the right side of operation surface 570, occurrence of the situation as above can be suppressed.

In the present embodiment, as at least a part of one side (right side) in the longitudinal direction of recess 585 in operation surface 570 is pressed down, main body member 530 is inclined with respect to game controller 1, with flange 123 of second button 120 located at the other side (left side) being defined as the fulcrum. Of two flanges 123 of second button 120, the fulcrum of inclination of main body member 530 is located at flange 123 at the other side (left side). By defining flange 123 as the fulcrum, attachment 500 can readily be inclined.

In a state before the user pushes operation surface 570, the clearance between lower surface 502 of attachment 500 and upper side surface 11 of game controller 1 at the one side (right side) in the longitudinal direction of recess 585 is larger than an amount of push-in of first button 110 (a distance of movement of first button 110 necessary for pushing the tact switch).

As the right side of operation surface 570 is pushed as set forth above, only first button 110 of game controller 1 located at the right side of recess 585 is pressed down. In this case, second button 120 of game controller 1 located at the left side of recess 585 is not pressed down.

Fig. 39 is a partial schematic cross-sectional view showing a state in which the left side of operation surface 570 is pushed. Substantially similarly to pressing down of first button 110, as the left side of operation surface 570 is pushed, only second button 120 of game controller 1 located at the left side of recess 585 is pressed down.

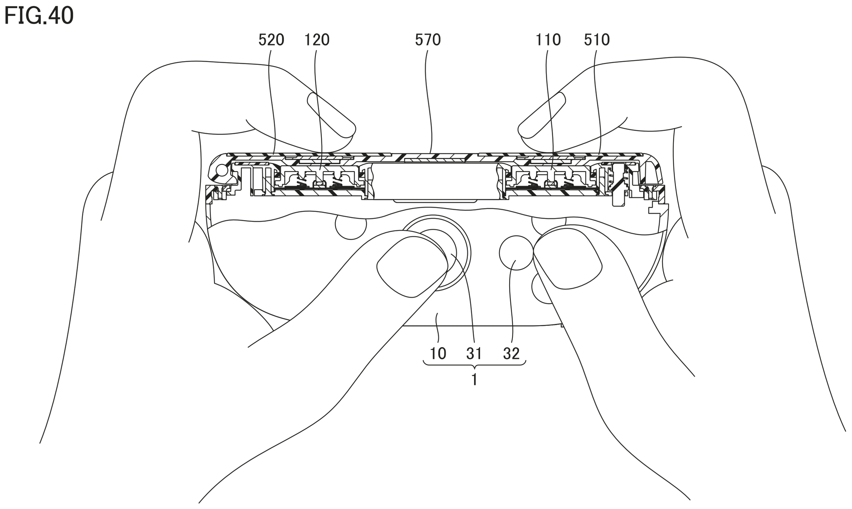

Fig. 40 is a partial schematic cross-sectional view showing a state in which both of the sides of operation surface 570 are pushed. The cross-section shown in Fig. 40 is perpendicular to the front-rear direction of attachment 500. As shown in Fig. 40, the left forefinger and the right forefinger of the user push operation surface 570 of attachment 500. The left forefinger of the user pushes, for example, second cover 520. The right forefinger of the user pushes, for example, first cover 510.

First pressing-down area 511 and second pressing-down area 521 are in contact with first button 110 and second button 120, respectively. As the user presses down operation surface 570, main body member 530 comes closer to game controller 1. First button 110 and second button 120 are thus pressed down by main body member 530. First button 110 and second button 120 are simultaneously pressed down.

From another point of view, as at least a part of one side (right side) in the longitudinal direction of recess 585 and at least a part of the other side (left side) in the longitudinal direction of recess 585 in operation surface 570 are simultaneously pressed down, main body member 530 may move toward upper side surface 11 and first button 110 and second button 120 may be pressed down.

From yet another point of view, as at least a part of the one side (right side) in the longitudinal direction of recess 585 and at least a part of the other side (left side) in the longitudinal direction of recess 585 in operation surface 570 are simultaneously pressed down, main body member 530 may move such that the one side (right side) and the other side (left side) of main body member 530 come closer to upper side surface 11 without coming in contact with upper side surface 11. While at least a part of the one side (right side) in the longitudinal direction of recess 585 and at least a part of the other side (left side) in the longitudinal direction of recess 585 in operation surface 570 are simultaneously pressed down, the clearance between lower surface 502 of attachment 500 and upper side surface 11 of game controller 1 at the one side (right side) is substantially the same as the clearance between lower surface 502 of attachment 500 and upper side surface 11 of game controller 1 at the other side (left side).

As both sides of operation surface 570 are pushed as set forth above, the button of game controller 1 located at the left side of recess 585 and the button of game controller 1 located at the right side of recess 585 are simultaneously pressed down.

According to attachment 500 according to the present embodiment, as main body member 530 comes closer to game controller 1, first button 110 and second button 120 are pressed down by main body member 530. Therefore, as compared with an example where attachment 500 includes a push button other than main body member 530 and the push button pushes the button of game controller 1, the thickness of attachment 500 can be smaller.

According to attachment 500 according to the present embodiment, the depth of recess 585 of attachment 500 is smaller than the height of projection 100 of game controller 1. Therefore, a clearance is produced between main body member 530 of attachment 500 and upper side surface 11 of game controller 1. Consequently, attachment 500 more readily moves in the direction toward upper side surface 11 of game controller 1.

In a structure where main body member 530 itself moves, when a portion close to the center of operation surface 570 is pressed down, main body member 530 as a whole may sink to push both of first button 110 and second button 120. Therefore, by locating each of first operation area 510 and second operation area 520 closer to the outer side, the user can be guided to readily push one of them (not to unintentionally push both of them).

Though an example in which first pressing-down area 511 and second pressing-down area 521 which are each a part of main body member 530 press down first button 110 and second button 120, respectively, is described above, the present disclosure is not limited to this configuration. In another manner, in an example where first magnet member 512 and second magnet member 522 are exposed at main body member 530, first magnet member 512 and second magnet member 522, rather than main body member 530, may press down first button 110 and second button 120, respectively. In yet another manner, another object may be located between main body member 530 and each of first button 110 and second button 120, and first button 110 and second button 120 may be pressed down by main body member 530 with another object being interposed.

### <Method of Detachment>

A method of removing attachment 500 from game controller 1 will now be described. Fig. 41 is a schematic diagram showing a state in which attachment 500 is removed from game controller 1.

Initially, the user operates operation portion 182 (see Figs. 18 and 19). Pusher 181 thus projects from top surface 106 of projection 100 of game controller 1. Projecting pusher 181 pushes bottom surface 509 of recess 585 located at attachment 500. Specifically, pusher 181 pushes abutment portion 509d of bottom surface 509 of recess 585.

As shown in Fig. 41, as pusher 181 pushes abutment portion 509d of bottom surface 509, a portion of attachment 500 opposed to pusher 181 moves in a direction away from top surface 106 of projection 100. Attachment 500 rotates in a direction shown with a third arrow S3, with a portion around engagement element 561 located opposite to abutment portion 509d being defined as the fulcrum. Recess 585 located at the side of abutment portion 509d is thus separated from projection 100. After recess 585 at the side of abutment portion 509d is separated from projection 100 to some extent, attachment 500 is moved such that engagement element 561 comes out of the engagement hole, so as to be able to separate recess 585 at the side of engagement element 561 from projection 100. Therefore, attachment 500 can readily be removed from the controller.

Attachment 500 is configured not to completely be separate from game controller 1 even when pusher 181 projects. At this time, attachment 500 may be configured not to completely be separate from game controller 1 by engagement element 561 being kept inserted in second engagement hole 194 and/or at least the second magnet member being kept attracted to second button 120. Attachment 500 may completely be separate from game controller 1 as pusher 181 projects.

As shown in Fig. 41, the depth of recess 585 may be large to such an extent as exposing the right end (the upper end in Fig. 41) at top surface 106 of projection 100 through the opening of recess 585 as pusher 181 projects. The depth of recess 585 may be large to such an extent as not exposing the right end of top surface 106 through the opening of recess 310 even when pusher 181 projects.

As shown in Fig. 41, the depth of recess 585 may be large to such an extent as exposing at least a part of pusher 181 through recess 585 as pusher 181 projects. The depth of recess 585 may be large to such an extent as not exposing pusher 181 through recess 585 even when pusher 181 projects.

As shown in Fig. 41, the depth of recess 585 may be large to such an extent as exposing operation surface 115 of upper-surface button (right) 110 through recess 585 as pusher 181 projects. The depth of recess 585 may be large to such an extent as not exposing operation surface 115 of upper-surface button (right) 110 through recess 585 even when pusher 181 projects.

The depth of recess 585 may be large to such an extent as exposing the entire first elastically deformable body 52 exposed at outer peripheral surface 107 of projection 100 through the opening of recess 585 as pusher 181 projects. Second elastically deformable body 54 exposed at outer peripheral surface 107, on the other hand, may be exposed only partially or entirely through the opening of recess 585.

Though an example where operation portion 182 is used to remove attachment 500 from game controller 1 is described above, attachment 500 may be removed from game controller 1 without using operation portion 182. The user may remove attachment 500 from the controller by rotating attachment 500, with the end of inner peripheral surface 504 of recess 585 where engagement element 561 is located or engagement element 561 being defined as the fulcrum while the user holds attachment 500.

### <Modification>

Bottom surface 509 of recess 585 may be provided with a through hole (not shown). The through hole may pass from bottom surface 509 to upper surface 501. The through hole may be located at first bottom surface area 509a, at central bottom surface area 509c, or at second bottom surface area 509b.

Attachment 500 does not have to include engagement element 561. Specifically, attachment 500 may include a magnet but may not include engagement element 561. In an example where attachment 500 includes engagement element 561, engagement element 561 may not include the curved surface but may be in an angular shape. Engagement element 561 may be located at a position closer to the bottom surface 509 side than to the opening side of recess 585 or located at a position intermediate between the opening side and bottom surface 509.

Attachment 500 may not include strap 590. In this case, attachment 500 may not include attachment portion 505 of strap 590. In an example where attachment 500 includes attachment portion 505 of strap 590, in the longitudinal direction of recess 585, attachment portion 505 of strap 590 may be located opposite to one side where engagement element 561 is located relative to the center of attachment 500, or may be located at the center of attachment 500.

Attachment 500 does not have to perform the function to press down first button 110 and second button 120. In this case, attachment 500 may include attachment portion 505 of strap 590.

Attachment 500 may include first magnet member 512 and second magnet member 522 and may not include first yoke 513 configured to be attracted to first magnet member 512 and second yoke 523 configured to be attracted to second magnet member 522. In another manner, attachment 500 may include only one of first yoke 513 and second yoke 523.

Attachment 500 does not have to include notch 581 for avoiding elastically deformable body 52, 54 of game controller 1. Game controller 1 does not have to include elastically deformable body 52, 54.

Attachment 500 does not have to include light guide path 551, 552 through which light emitted from projection 100 of game controller 1 passes. Game controller 1 does not have to include light emission portion 150.

Attachment 500 does not have to include first cover 510 and second cover 520. At this time, only upper surface 501 of main body member 530 may form operation surface 570. In addition, at this time, a partial area of upper surface 501 of main body member 530 may be formed as being visually or tactilely distinguishable from other areas of upper surface 501 to define the first operation area and the second operation area.

In an example where attachment 500 includes visually or tactilely identifiable first operation area 510 and second operation area 520, the center of first operation area 510 does not have to be located at the outer side (right side) relative to the center of first pressing-down area 511, in the longitudinal direction of recess 585. Specifically, in the longitudinal direction of recess 585, the center of first operation area 510 may be located at the inner side (left side) relative to the center of first pressing-down area 511 or at a position the same as the center of first pressing-down area 511. Similarly, in the longitudinal direction of recess 585, the center of second operation area 520 does not have to be located at the outer side (left side) relative to the center of second pressing-down area 521. Specifically, in the longitudinal direction of recess 585, the center of second operation area 520 may be located at the inner side (right side) relative to the center of second pressing-down area 521 or at a position the same as the center of second pressing-down area 521.

When attachment 500 is attached to game controller 1, in the longitudinal direction of recess 585, the center of first operation area 510 does not have to be located at the outer side relative to the center of the top surface of first button 110. Specifically, in the longitudinal direction of recess 585, the center of first operation area 510 may be located at the inner side relative to the center of the top surface of first button 110 or at a position the same as the center of the top surface of first button 110. Similarly, when attachment 500 is attached to game controller 1, in the longitudinal direction of recess 585, the center of second operation area 520 does not have to be located at the outer side relative to the center of the top surface of second button 120. In the longitudinal direction of recess 585, the center of second operation area 520 may be located at the inner side relative to the center of the top surface of second button 120 or located at a position the same as the center of the top surface of second button 120.

### [Second Embodiment]

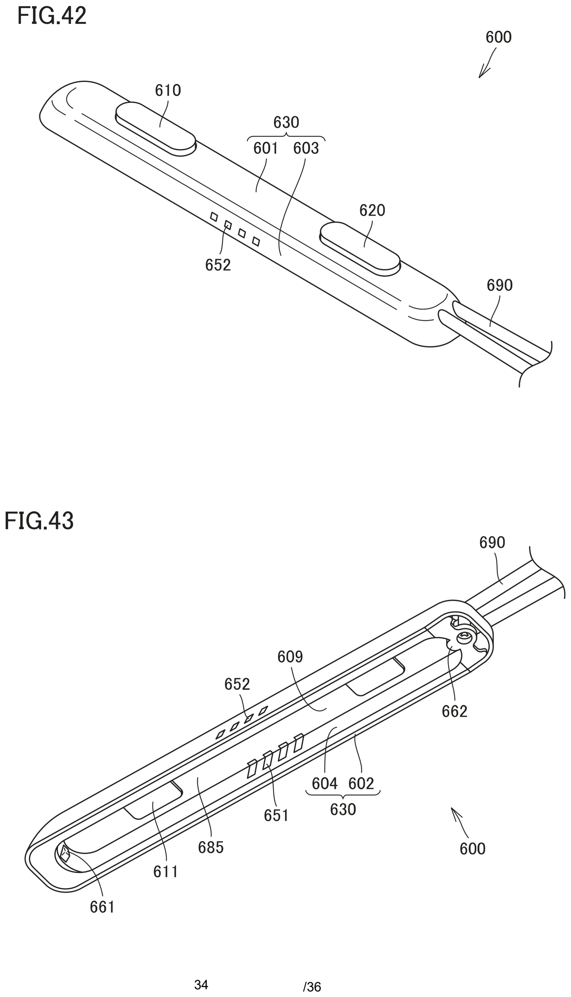

A configuration of an attachment 600 according to a second embodiment will now be described. Fig. 42 is a schematic perspective view showing the configuration of attachment 600 according to the second embodiment. Fig. 43 is a schematic perspective view showing the configuration of attachment 600 according to the second embodiment when viewed from a direction different from the direction in Fig. 42.

As shown in Figs. 42 and 43, attachment 600 according to the second embodiment includes, for example, a main body member 630, a strap 690, a first light guide path 651, a second light guide path 652, a first movable portion 610, and a second movable portion 620. Strap 690, first light guide path 651, second light guide path 652, first movable portion 610, and second movable portion 620 are attached to main body member 630. Main body member 630 includes an upper surface 601, a lower surface 602, an outer peripheral surface 603, and an inner peripheral surface 604. Lower surface 602 is contiguous to upper surface 601. Outer peripheral surface 603 is contiguous to each of upper surface 601 and lower surface 602. Lower surface 602 is provided with a recess 685. Recess 685 is defined, for example, by a bottom surface 609 and inner peripheral surface 604.

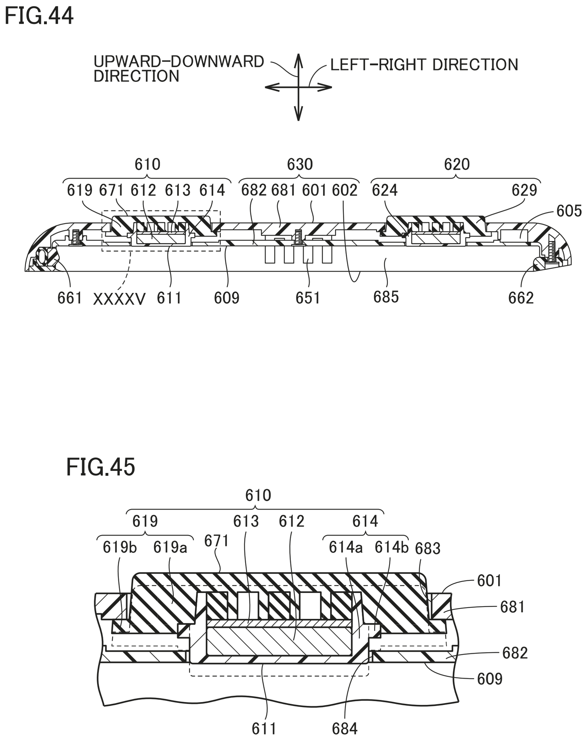

Fig. 44 is a schematic cross-sectional view showing the configuration of attachment 600 according to the second embodiment. The cross-section shown in Fig. 44 is in parallel to the longitudinal direction of recess 685 and in parallel to the upward-downward direction of attachment 600. Fig. 44 does not show strap 690.

First movable portion 610 passes through main body member 630. First movable portion 610 is movable with respect to main body member 630. First movable portion 610 includes a first operation surface 671, a first pressing-down area 611, a first magnet member 612, and a first yoke 613. First operation surface 671 is configured to be pressed down by the user. As first operation surface 671 is pressed down by the user, first movable portion 610 presses down first button 110. In the upward-downward direction, first pressing-down area 611 is located opposite to first operation surface 671. First button 110 is configured to be pressed down by first pressing-down area 611. Second movable portion 620 is substantially similar in structure to first movable portion 610.

Fig. 45 is an enlarged schematic diagram of an area XXXXV in Fig. 44. As shown in Fig. 45, first movable portion 610 further includes a first movable member 619 and a second movable member 614. First magnet member 612 and first yoke 613 lie between first movable member 619 and second movable member 614. First movable member 619 includes a first main body member 619a and a first flange member 619b. First main body member 619a forms first operation surface 671. Second movable member 614 includes a second main body member 614a and a second flange member 614b. Second main body member 614a forms first pressing-down area 611. Second movable portion 620 is substantially the same in configuration as first movable portion 610.

Main body member 630 includes an upper plate portion 681 and a bottom plate portion 682. Upper plate portion 681 forms upper surface 501 of main body member 630. At upper plate portion 681, an upper plate hole 683 is located. First main body member 619a is arranged at upper plate hole 683. Bottom plate portion 682 forms bottom surface 609 of recess 685. In the upward-downward direction, bottom plate portion 682 is located between upper plate portion 681 and lower surface 602. At bottom plate portion 682, a bottom plate hole 684 is located. Second main body member 614a is arranged at bottom plate hole 684.

In Fig. 45, a dashed line represents an outer shape of first movable portion 610 that has moved downward. When attachment 600 is arranged such that upper surface 601 faces up in a vertical direction, first movable portion 610 is arranged at a position shown with the dashed line. As shown in Fig. 45, first movable portion 610 is movable in the upward-downward direction of attachment 600. First flange member 619b moves between upper plate portion 681 and bottom plate portion 682 in the upward-downward direction of attachment 600. Upward movement of first movable portion 610 is restricted by first flange member 619b. Second flange member 614b moves between upper plate portion 681 and bottom plate portion 682 in the upward-downward direction of attachment 600. Downward movement of first movable portion 610 is restricted by second flange member 614b.

In a natural state, first movable portion 610 is located at a position shown with the dashed line owing to gravity. As attachment 600 is attached to game controller 1, first movable portion 610 is pushed upward (a position shown with a solid line in Fig. 45) by first button 110. From another point of view, a biasing member that pushes first button 110 upward pushes first pressing-down area 611 upward. As first movable portion 610 is pushed by the user from that state, first pressing-down area 611 presses down first button 110. As the user releases his/her hand from first movable portion 610, first movable portion 610 returns upward owing to resilience of first button 110.

While recess 685 of attachment 600 is attached to projection 100 of game controller 1, first movable portion 610 is arranged to be opposed to first button 110 and second movable portion 620 is arranged to be opposed to second button 120. At least a part of the top surface of projection 100 abuts on bottom surface 609 of recess 685. First movable portion 610 and second movable portion 620 can press down first button 110 and second button 120, respectively.

As shown in Figs. 43 and 44, attachment 600 includes a first engagement element 661 and a second engagement element 662. First engagement element 661 is movable. First engagement element 661 may move, for example, as sinking into main body member 630 or may move as a result of deformation of first engagement element 661 itself. First engagement element 661 is located at the end surface at the other side in the longitudinal direction of recess 685, in inner peripheral surface 504 of recess 685. Second engagement element 662 is immovable. Second engagement element 662 is located at the end surface at one side in the longitudinal direction of recess 685, in inner peripheral surface 504 of recess 685.

First engagement element 661 may be biased by a not-shown biasing portion. When force is externally applied to first engagement element 661, first engagement element 661 may move in the longitudinal direction of recess 685. When force externally applied to first engagement element 661 is removed, first engagement element 661 may return to the original position. Second engagement element 662 is fixed, for example, to main body member 630. Second engagement element 662 projects from inner peripheral surface 604 of recess 685.

As shown in Fig. 44, main body member 630 is provided with an attachment portion 605 of strap 690. Attachment portion 605 is a through hole. Attachment portion 605 is located in the vicinity of second engagement element 662. In another manner, attachment portion 605 may be located in the vicinity of first engagement element 661.

In attachment of recess 685 of attachment 600 to projection 100 of game controller 1, initially, immovable second engagement element 662 is inserted into first engagement hole 193 of game controller 1. Then, while attachment 600 is rotated with second engagement element 662 being defined as the fulcrum, movable first engagement element 661 is inserted in second engagement hole 194. In a state in which attachment of recess 685 of attachment 600 to projection 100 of game controller 1 has been completed, first engagement element 661 is engaged with second engagement hole 194. Second engagement element 662 is engaged with first engagement hole 193.

According to attachment 600 according to the present embodiment, each of first movable portion 610 and second movable portion 620 is loosely matched with main body member 630. Therefore, when attachment 600 is attached to game controller 1 such that first movable portion 610 and second movable portion 620 are attracted to first button 110 and second button 120, respectively, main body member 630 and game controller 1 may wobble. By attaching attachment 600 to game controller 1 with two engagement elements, while wobble of main body member 630 and game controller 1 is suppressed, separation of attachment 600 from game controller 1 can be suppressed.

### <Modification>

First magnet member 612 may be exposed from second movable member 614 at recess 685. First movable portion 610 does not have to include first yoke 613. First movable portion 610 may be comprised of first movable member 619 and first magnet member 612, comprised of second movable member 614 and first magnet member 612, or comprised only of first magnet member 612.

Second magnet member 622 may be exposed from a fourth movable member 624 at recess 685. Second movable portion 620 does not have to include second yoke 623. Second movable portion 620 may be comprised of a third movable member 629 and second magnet member 622, comprised of fourth movable member 624 and second magnet member 622, or comprised only of second magnet member 622.

Attachment 600 may include first engagement element 661 and may not include second engagement element 662. Attachment 600 may include second engagement element 662 and may not include first engagement element 661. Attachment 600 does not have to include first engagement element 661 and second engagement element 662.

Attachment 600 may include a biasing member configured to bias first movable portion 610 and second movable portion 620 upward.

### [Third Embodiment]

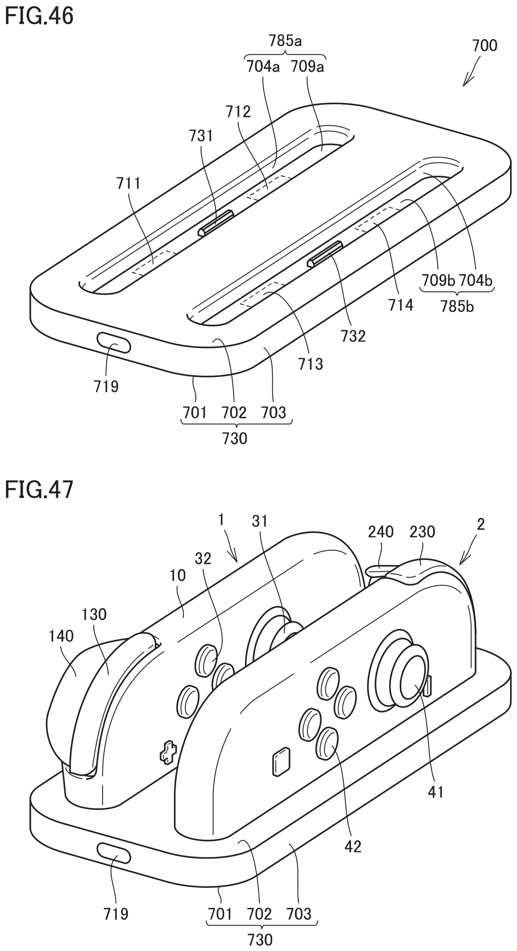

A configuration of an attachment 700 according to a third embodiment will now be described. Fig. 46 is a schematic perspective view showing the configuration of attachment 700 according to the third embodiment. Attachment 700 according to the third embodiment is a charging station.

As shown in Fig. 46, attachment 700 includes a main body member 730, a charging-station-side first terminal 731, a charging-station-side second terminal 732, a first magnet member 711, a second magnet member 712, a third magnet member 713, a fourth magnet member 714, and an external-connection connector 719.

Main body member 730 includes a main-body-side first side surface 701, a main-body-side second side surface 702, and a main-body-side outer peripheral surface 703. Attachment 700 is placed on a floor or the like with main-body-side first side surface 701 facing down. Main-body-side second side surface 702 is located opposite to main-body-side first side surface 701. Main-body-side outer peripheral surface 703 is contiguous to each of main-body-side first side surface 701 and main-body-side second side surface 702.

Main-body-side second side surface 702 is provided with a first recess 785a and a second recess 785b. First recess 785a includes a first bottom surface 709a and a first inner peripheral surface 704a. First inner peripheral surface 704a is contiguous to first bottom surface 709a. First bottom surface 709a is substantially in parallel to main-body-side second side surface 702. First bottom surface 709a is provided with charging-station-side first terminal 731. Charging-station-side first terminal 731 projects from first bottom surface 709a. Charging-station-side first terminal 731 is surrounded by first inner peripheral surface 704a.

Second recess 785b includes a second bottom surface 709b and a second inner peripheral surface 704b. Second inner peripheral surface 704b is contiguous to second bottom surface 709b. Second bottom surface 709b is substantially in parallel to main-body-side second side surface 702. Second bottom surface 709b is provided with charging-station-side second terminal 732. Charging-station-side second terminal 732 projects from second bottom surface 709b. Charging-station-side second terminal 732 is surrounded by second inner peripheral surface 704b.

Second recess 785b is arranged adjacently to first recess 785a. The longitudinal direction of second recess 785b may be the same as the longitudinal direction of first recess 785a. The longitudinal direction of main-body-side first side surface 701 may be the same as the longitudinal direction of first recess 785a. The longitudinal direction of main-body-side first side surface 701 may be the same as the longitudinal direction of second recess 785b. First bottom surface 709a may be substantially in parallel to second bottom surface 709b.

First magnet member 711 and second magnet member 712 are arranged along the longitudinal direction of first recess 785a. In the longitudinal direction of first recess 785a, charging-station-side first terminal 731 is located between first magnet member 711 and second magnet member 712. Third magnet member 713 and fourth magnet member 714 are arranged along the longitudinal direction of second recess 785b. In the longitudinal direction of second recess 785b, charging-station-side second terminal 732 is located between third magnet member 713 and fourth magnet member 714.

External-connection connector 719 is located, for example, at main-body-side outer peripheral surface 703. Electric power is externally supplied through external-connection connector 719. In a direction of a short side of main-body-side first side surface 701, external-connection connector 719 is located between first recess 785a and second recess 785b.

Fig. 47 is a schematic perspective view showing a state in which the first game controller and the second game controller have been attached to the attachment. As shown in Fig. 47, projection 100 of first game controller 1 is matched with first recess 785a. First terminal 160 of first game controller 1 is electrically connected to charging-station-side first terminal 731. Projection 200 of second game controller 2 is matched with second recess 785b. A second terminal 260 of second game controller 2 is electrically connected to charging-station-side second terminal 732.

Electric power is externally supplied through external-connection connector 719. First game controller 1 includes a not-shown battery. The battery of first game controller 1 is charged with external electric power through first terminal 160. Second game controller 2 includes a not-shown battery. The battery of second game controller 2 is charged with external electric power through second terminal 260.

As shown in Fig. 47, first game controller 1 and second game controller 2 are arranged, for example, such that the front surface of first game controller 1 is opposed to the rear surface of second game controller 2. First game controller 1 and second game controller 2 are arranged such that the left-right direction of first game controller 1 is opposite to the left-right direction of second game controller 2.

Arrangement of first game controller 1 and second game controller 2 is not limited as above. First game controller 1 and second game controller 2 may be arranged, for example, such that the front surface of first game controller 1 is opposed to the front surface of second game controller 2. First game controller 1 and second game controller 2 may be arranged such that the upward-downward direction of first game controller 1 is the same as the upward-downward direction of second game controller 2.

Though an example where first recess 785a and second recess 785b are located at main-body-side second side surface 702 is described above, the present disclosure is not limited to the above. Specifically, at main-body-side second side surface 702, first recess 785a may be located and second recess 785b may not be located. Alternatively, a third recess and/or a fourth recess may be located.

At the charging station, a notch for avoiding elastically deformable body 52, 54 of game controller 1 may be located. Specifically, a notch may be located at inner peripheral surface 504 of first recess 785a. A notch may be located at inner peripheral surface 504 of second recess 785b. Wobble at the time when game controller 1 is used as being attached to the game device can be suppressed by elastically deformable body 52, 54. On the other hand, at the charging station or the like, wobble while the game controller is attached is permitted. By locating the notch at the charging station, feel of resistance at the time of attachment and removal of game controller 1 can be lessened.

### <Modification>

Though the charging station as an example of attachment 700 includes the magnet (first magnet member 711 to fourth magnet member 714) in the example above, the present disclosure is not limited as such. In other words, attachment 700 does not have to include the magnet. Thus, in removal of game controller 1 from attachment 700, strong attraction of game controller 1 to attachment 700, which results in difficulty in removal, can be suppressed.

In an example where attachment 700 does not include the magnet, attachment 700 may include an engagement element. In this case, attachment 700 can be attached to game controller 1 with the engagement element. Attachment 700 may include neither of the magnet and the engagement element.

Though attachment 700 is substantially in the shape of the parallelepiped in the example above, the shape of attachment 700 is not limited thereto. When viewed in the upward-downward direction, attachment 700 may be in a shape other than the rectangular shape, such as a trapezoidal shape, a circular shape, or an oval shape.

Attachment 700 may include a processor (not shown). The processor may read an application program and be able to perform information processing. Attachment 700 may include a wireless communication unit (not shown). Attachment 700 may transmit and receive data to and from game controller 1 through the wireless communication unit. The wireless communication unit may support such a communication scheme as Bluetooth^{®} or infrared communication. Attachment 700 may transmit and receive data to and from an information processing apparatus other than game controller 1 through the wireless communication unit.

It should be understood that the embodiments disclosed herein are illustrative and non-restrictive in every respect. For example, the attachments shown in the first to third embodiments are merely illustrative. The attachment may be different therefrom in structure or function. For example, the attachment may be in such a structure that two game controllers are removably attached thereto from left and right, respectively, and held integrally with the two game controllers. The scope of the present invention is defined by the terms of the claims rather than the description above and is intended to include any modifications within the scope and meaning equivalent to the terms of the claims.

### REFERENCE SIGNS LIST

- 1: first game controller, game controller
- 2: second game controller
- 3: main body apparatus
- 10, 20: controller housing
- 11,211: upper side surface
- 12: right side surface
- 13: lower side surface
- 14: left side surface
- 15: front surface
- 16: rear surface
- 17: housing opening
- 19: projection flange
- 31: joystick
- 32: button
- 33(1): + button
- 33(2): home button
- 50: synchronization button
- 51: ground connection portion
- 52: first elastically deformable body
- 52: elastically deformable body
- 52a: first elastic portion
- 52b: second elastic portion
- 52c: first elastic area
- 52d: second elastic area
- 53: ground connection portion
- 54: second elastically deformable body
- 61: front-surface-side housing
- 62: rear-surface-side housing
- 71, 73: first inner surface
- 72, 74: second inner surface
- 90: flexible printed circuit
- 100, 200: projection
- 101: first area
- 102: second area
- 103: third area
- 104: fourth area
- 105: fifth area
- 106: top surface
- 107, 503, 603: outer peripheral surface
- 110: first button, upper surface button (right)
- 111, 121: first protruding portion
- 112, 122: second protruding portion
- 113, 123: flange
- 114, 124: main body portion
- 115, 125, 570: operation surface
- 117, 127: tact switch
- 118, 128: sidewall
- 120: second button, upper surface button (left)
- 130: shoulder button (right)
- 140: Z shoulder button (right)
- 150: light emission portion
- 160: first terminal
- 167: terminal accommodation portion
- 181: pusher
- 182: operation portion
- 183: biasing portion
- 184: rotation shaft
- 185: pusher actuation portion
- 186: pusher operation member
- 191: first cushion
- 192: second cushion
- 193: first engagement hole
- 194: second engagement hole
- 195: synchronization button opening
- 196: terminal opening
- 197: first opening
- 198: second opening
- 260: second terminal
- 301: audio input and output terminal
- 302: upper terminal
- 303: lower terminal
- 304: storage medium slot
- 305: display
- 306: main body housing
- 307: power button
- 311: base surface
- 313: main body right side surface
- 314: main body left side surface
- 315: main body front surface
- 316: main body upper side surface
- 317: main body lower side surface
- 330: first plug connector
- 331: main body first terminal
- 332: first tongue-shaped body
- 333: support portion
- 334: shoulder screw
- 337: through hole
- 338: cover member
- 401: first hole
- 402: second hole
- 410: game-device-side magnetic element
- 410: game-device-side first magnetic element
- 420: game-device-side second magnetic element
- 500, 600, 700: attachment
- 501, 601: upper surface
- 502, 602: lower surface
- 503a: first outer peripheral surface
- 503b: second outer peripheral surface
- 504, 604: inner peripheral surface
- 504a, 704a: first inner peripheral surface
- 504b, 704b: second inner peripheral surface
- 505, 605: attachment portion
- 509, 609: bottom surface
- 509a: first bottom surface area
- 509b: second bottom surface area
- 509c: central bottom surface area
- 509d: abutment portion
- 510: first cover, first operation area
- 511, 611: first pressing-down area
- 512, 612, 711: first magnet member
- 512a: first magnet piece
- 513, 613: first yoke
- 519: first pressing-down portion
- 520: second cover, second operation area
- 521: second pressing-down area
- 522, 712: second magnet member
- 522a: second magnet piece
- 523: second yoke
- 529: second pressing-down portion
- 530, 630, 730: main body member
- 541a, 785a: first recess
- 542a, 785b: second recess
- 551, 651: first light guide path
- 551a: first light guide portion
- 551b: second light guide portion
- 551c: first light guide member
- 551d: first light guide hole
- 551e: tapered surface
- 552, 652: second light guide path
- 553: first accommodation portion
- 553a: stopper end surface
- 554: second accommodation portion
- 557: double-faced tape
- 561, 661: first engagement element
- 563: lower side surface portion
- 564: curved surface
- 575: first main body protruding portion
- 580: magnet
- 590,690: strap
- 591: string member
- 592: stopper
- 593: swaging member
- 594: swaging cover
- 610: first movable portion
- 614: second movable member
- 614a: second main body member
- 614b: second flange member
- 619: first movable member
- 619a: first main body member
- 619b: first flange member
- 620: second movable portion
- 624: fourth movable member
- 629: third movable member
- 662: second engagement element
- 671: first operation surface
- 681: upper plate portion
- 682: bottom plate portion
- 683: upper plate hole
- 684: bottom plate hole
- 701: main-body-side first side surface
- 702: main-body-side second side surface
- 703: main-body-side outer peripheral surface
- 709a: first bottom surface
- 709b: second bottom surface
- 713: third magnet member
- 714: fourth magnet member
- 719: external-connection connector
- 731: charging-station-side first terminal
- 732: charging-station-side second terminal
- 1000: game device
- 3120: game-device-side inner peripheral surface
- 3121: game-device-side bottom surface
- 5031: first outer side surface portion
- 5032: second outer side surface portion
- A3: arrow
- B1: first magnet length
- B2: second magnet length
- B3: first yoke length
- B4: second yoke length
- B5: first cover length
- B6: second cover length
- B7: seventh length
- B8: eighth length
- C: depth
- D1: first distance
- D2: second distance
- D3: third distance
- D4: fourth distance
- E1: first width
- E2: second width
- E3: third width
- R1: first direction
- R2: second direction
- R3: third direction
- R4: fourth direction
- R5: fifth direction
- R6: sixth direction
- S1: first arrow
- S2: second arrow
- S3: third arrow
- S4: fourth arrow
- T1: first height
- T2: second height
- T3: third height
- T4: fourth height
- T5: fifth height
- T6: sixth height
- T7: seventh height
- T8: eighth height
- T9: ninth height
- T10: tenth height
- T11: eleventh height
- T12: twelfth height
- W1: first length
- W2: second length
- W3: third length
- W4: fourth length

## Claims

1. An attachment removably attached to a game controller, the game controller comprising a projection and a first button and a second button, the projection projecting from a side surface, the projection being configured to be matched with a game-device-side recess located at a game device, the first button and the second button being located at a top surface of the projection along a longitudinal direction of the projection, the first button and the second button being configured to be attracted by magnetic force to respective game-device-side magnets when the projection is matched with the game-device-side recess, the attachment comprising:
a recess with which the projection is to be matched; and
a magnet to which the first button and the second button being configured to be attracted by magnetic force when the projection is matched with the recess, the magnet being located along the longitudinal direction of the recess.

2. The attachment according to claim 1, wherein
the magnet is located at a bottom of the recess.

3. The attachment according to claim 1 or 2, further comprising an engagement element configured to be engaged with an engagement hole located at at least one end surface in the longitudinal direction of the projection, in an outer peripheral surface of the projection of the game controller.

4. The attachment according to claim 3, wherein
the engagement element is located at at least one end surface in the longitudinal direction of the recess, in an inner peripheral surface of the recess.

5. The attachment according to claim 4, wherein
the engagement element is in a shape that projects toward inside of the recess from a bottom surface side of the recess toward an opening side of the recess.

6. The attachment according to claim 4, wherein
the engagement element is provided with a curved surface that projects toward inside of the recess.

7. The attachment according to any of claims 4 to 6, wherein
the engagement element is located at a position closer to an opening side than to a bottom surface side of the recess, in the end surface.

8. The attachment according to any of claims 3 to 7, further comprising a strap, wherein
an attachment portion of the strap is located in vicinity of the engagement element.

9. The attachment according to any of claims 3 to 7, further comprising a strap, wherein
an attachment portion of the strap is opposed to the side surface of the game controller.

10. The attachment according to any of claims 3 to 9, wherein
the engagement element is located at one side in the longitudinal direction of the recess and formed in a shape not engaged with an engagement hole located at an end surface at the other side in the longitudinal direction of the projection, in the outer peripheral surface of the projection of the game controller.

11. The attachment according to any of claims 3 to 7, wherein
of an end surface at one side and an end surface at the other side in the longitudinal direction of the recess in an inner peripheral surface of the recess, the engagement element is located only at the end surface at the one side.

12. The attachment according to any of claims 3 to 7, wherein
the engagement element is located at an end surface at one side and an end surface at the other side in the longitudinal direction of the recess, in an inner peripheral surface of the recess, the engagement element located at the end surface at the one side is immovable, and the engagement element located at the end surface at the other side is movable.

13. The attachment according to claim 11 or 12, wherein
at the other side in the longitudinal direction of the recess in a bottom surface of the recess, an abutment portion on which a pusher is configured to abut is located, the pusher projecting from the top surface of the game controller in accordance with an operation by a user.

14. The attachment according to claim 11 or 12, further comprising a strap, wherein
an attachment portion of the strap is located outside the recess and at the one side in the longitudinal direction of the recess.

15. The attachment according to claim 11 or 12, further comprising a strap, wherein
an attachment portion of the strap is located at a side the same as the one side where the engagement element is located, relative to a center of the attachment in the longitudinal direction of the recess.

16. The attachment according to any of claims 1 to 15, comprising a main body member including a lower surface where the recess is located and an upper surface where a first upper-surface recess and a second upper-surface recess are located, wherein
the magnet includes a first magnet member and a second magnet member,
in the first upper-surface recess, the first magnet member configured to be attracted by magnetic force to the first button is accommodated, and
in the second upper-surface recess, the second magnet member configured to be attracted by magnetic force to the second button is accommodated.

17. The attachment according to claim 16, wherein
the first magnet member includes two first magnet pieces different in orientation of polarity and the first upper-surface recess includes two first recesses where the two first magnet pieces are accommodated, respectively, and
the second magnet member includes two second magnet pieces different in orientation of polarity and the second upper-surface recess includes two second recesses where the two second magnet pieces are accommodated, respectively.

18. The attachment according to claim 17, wherein
each of the two first magnet pieces and each of the two second magnet pieces extend along the longitudinal direction of the recess, the two first magnet pieces are arranged as being opposed to each other in a direction perpendicular to the longitudinal direction, and the two second magnet pieces are arranged as being opposed to each other in the direction perpendicular to the longitudinal direction.

19. The attachment according to any of claims 16 to 18, wherein
at the upper surface, a third upper-surface recess and a fourth upper-surface recess are located,
at a bottom surface of the third upper-surface recess, the first upper-surface recess is located, and
at a bottom surface of the fourth upper-surface recess, the second upper-surface recess is located, and
the attachment further comprises:
a first yoke arranged at the third upper-surface recess; and
a second yoke arranged at the fourth upper-surface recess.

20. The attachment according to claim 19, wherein
the first magnet member is not fixed to a bottom surface of the first upper-surface recess but is configured to be attracted to the first yoke, and
the second magnet member is not fixed to a bottom surface of the second upper-surface recess but is configured to be attracted to the second yoke.

21. The attachment according to claim 19 or 20, wherein
at the upper surface, a fifth upper-surface recess and a sixth upper-surface recess are located,
at a bottom surface of the fifth upper-surface recess, the third upper-surface recess is located, and
at a bottom surface of the sixth upper-surface recess, the fourth upper-surface recess is located, and
the attachment further comprises:
a first cover arranged at the fifth upper-surface recess; and
a second cover arranged at the sixth upper-surface recess.

22. The attachment according to any of claims 1 to 21, wherein
an operation surface is located at a side opposite to a side where the recess is located, and the first button or the second button is pressed down as a user presses down the operation surface.

23. The attachment according to any of claims 1 to 15, comprising:
an operation surface located at a side opposite to a side where the recess is located; and
a main body member where the recess and the operation surface are located, wherein
the first button or the second button is pressed down as a user presses down the operation surface to cause the main body member to come closer to the game controller.

24. The attachment according to claim 23, wherein
a depth of the recess is smaller than a height of the projection of the game controller.

25. The attachment according to claim 23 or 24, wherein
a bottom surface of the recess includes a first pressing-down area where the first button is to be pressed down, and
the first pressing-down area projects relative to at least a part of an area other than the first pressing-down area in the bottom surface.

26. The attachment according to claim 25, wherein
the magnet includes a first magnet member, and
the first magnet member is located at a first pressing-down portion that defines the first pressing-down area.

27. The attachment according to claim 26, wherein
the first magnet member is configured to be buried in the first pressing-down area.

28. The attachment according to claim 26 or 27, wherein
in a direction of depth of the recess, at least a part of the first magnet member is located between a deepest area which is a largest depth area in the bottom surface of the recess and the first pressing-down area.

29. The attachment according to any of claims 26 to 28, wherein
a length of the first pressing-down area in the longitudinal direction of the recess is shorter than a length of a top surface of the first button in the longitudinal direction of the projection.

30. The attachment according to any of claims 25 to 29, wherein
the bottom surface of the recess includes a second pressing-down area where the second button is to be pressed down, and
the first pressing-down area and the second pressing-down area project relatively to at least a part of an area located between the first pressing-down area and the second pressing-down area in the bottom surface of the recess.

31. The attachment according to claim 30, wherein
at the bottom surface of the recess, each of the first pressing-down area and the second pressing-down area is located from one end to the other end in a direction perpendicular to the longitudinal direction of the recess.

32. The attachment according to any of claims 23 to 31, wherein
as at least a part at one side in the longitudinal direction of the recess in the operation surface is pressed down, the main body member is inclined with respect to the game controller such that one side of the main body member and the side surface of the game controller come closer to each other and one of the first button and the second button is pressed down, and
as at least a part at the other side in the longitudinal direction of the recess in the operation surface is pressed down, the main body member is inclined with respect to the game controller such that the other side of the main body member and the side surface come closer to each other and the other of the first button and the second button is pressed down.

33. The attachment according to claim 32, wherein
as the at least a part at the one side in the longitudinal direction of the recess in the operation surface is pressed down, the main body member is inclined with respect to the game controller such that the one side of the main body member comes closer to the side surface without coming in contact with the side surface, and
as the at least a part at the other side in the longitudinal direction of the recess in the operation surface is pressed down, the main body member is inclined with respect to the game controller such that the other side of the main body member comes closer to the side surface without coming in contact with the side surface.

34. The attachment according to claim 32 or 33, wherein
each of the first button and the second button includes a flange that extends in the longitudinal direction of the projection, inside the projection, and is opposed to an inner surface of the projection, and
as the at least a part at the one side in the longitudinal direction of the recess in the operation surface is pressed down, the main body member is inclined with respect to the game controller with the flange of a button located at the other side, of the first button and the second button, being defined as a fulcrum, and
as the at least a part at the other side in the longitudinal direction of the recess in the operation surface is pressed down, the main body member is inclined with respect to the game controller with the flange of a button located at the one side, of the first button and the second button, being defined as a fulcrum.

35. The attachment according to any of claims 32 to 34, wherein
as the at least a part at the one side in the longitudinal direction of the recess in the operation surface and the at least a part at the other side in the longitudinal direction of the recess in the operation surface are simultaneously pressed down, the main body member moves to come closer to the side surface and the first button and the second button are pressed down.

36. The attachment according to any of claims 23 to 35, wherein
the operation surface includes a first operation area and a second operation area,
each of the first operation area and the second operation area is located along the longitudinal direction of the recess and identifiable visually or tactilely,
at the one side relative to a center of the operation surface in the longitudinal direction, the first operation area is located closer to an end at the one side, and
at the other side relative to the center of the operation surface in the longitudinal direction, the second operation area is located closer to an end at the other side.

37. The attachment according to any of claims 23 to 35, wherein
the operation surface includes a first operation area and a second operation area,
each of the first operation area and the second operation area is located along the longitudinal direction of the recess and identifiable visually or tactilely, and
when attached to the game controller,
the first operation area is located above the first button, and in the longitudinal direction of the recess, a center of the first operation area is located at an outer side relative to a center of a top surface of the first button, and
the second operation area is located above the second button, and in the longitudinal direction of the recess, a center of the second operation area is located at an outer side relative to a center of a top surface of the second button.

38. The attachment according to claim 31, comprising a main body member in which the recess is located at one side and an operation surface is located at the other side, wherein
as a user presses down the operation surface to cause the main body member to come closer to the game controller, the attachment presses down the first button or the second button,
the operation surface includes a first operation area and a second operation area,
each of the first operation area and the second operation area is located along the longitudinal direction of the recess and identifiable visually or tactilely, and
in the longitudinal direction, a center of the first operation area is located at an outer side relative to a center of the first pressing-down area and a center of the second operation area is located at an outer side relative to a center of the second pressing-down area.

39. The attachment according to any of claims 23 to 38, wherein
the recess includes a first inner peripheral surface and a second inner peripheral surface that extend along the longitudinal direction of the recess and are opposed to each other,
at least one of the first inner peripheral surface and the second inner peripheral surface includes a notch for avoiding an elastically deformable body that projects from an outer peripheral surface of the projection, and
the notch extends from an opening end toward a bottom surface side of the recess.

40. The attachment according to claim 1, comprising:
an operation surface located at a side opposite to a side where the recess is located;
a main body member where the recess is located; and
a first movable portion and a second movable portion that pass through the main body member and are movable with respect to the main body member, each of the first movable portion and the second movable portion including the operation surface,
the first movable portion is configured to press down the first button as a user presses down the operation surface, and
the second movable portion is configured to press down the second button as the user presses down the operation surface.

41. The attachment according to any of claims 1 to 22, wherein
at an outer peripheral surface of the projection of the game controller, an elastically deformable body is located, the elastically deformable body being configured to collapse as a result of abutment on an inner peripheral surface of the game-device-side recess when the projection is matched with the game-device-side recess,
the recess includes a first inner peripheral surface and a second inner peripheral surface that extend along the longitudinal direction of the recess and are opposed to each other,
at least one of the first inner peripheral surface and the second inner peripheral surface includes a notch for avoiding the elastically deformable body, and
the notch extends from an opening end toward a bottom surface side of the recess.

42. The attachment according to any of claims 1 to 38, wherein
the recess includes a first inner peripheral surface and a second inner peripheral surface that extend along the longitudinal direction of the recess and are opposed to each other, and
the attachment comprises a light guide path through which light emitted from the projection matched with the recess passes, the light guide path passing through at least one of the first inner peripheral surface and the second inner peripheral surface and an outer surface located opposite to the inner peripheral surface.

43. The attachment according to claim 42, wherein
the light guide path includes
a first light guide hole that passes through the first inner peripheral surface and the outer surface, and
a second light guide hole that passes through the second inner peripheral surface and the outer surface.

44. The attachment according to any of claims 1 to 15, wherein
the recess includes a first inner peripheral surface and a second inner peripheral surface that extend along the longitudinal direction of the recess and are opposed to each other,
the attachment comprises:
a light guide path through which light emitted from the projection matched with the recess passes, the light guide path passing through at least one of the first inner peripheral surface and the second inner peripheral surface and an outer surface located opposite to the inner peripheral surface; and
a main body member where the recess is located,
at the main body member, an accommodation portion obtained by carving a bottom surface and the inner peripheral surface of the recess is formed,
the light guide path includes
a light guide hole that passes through the outer surface and the inner peripheral surface,
a first light guide portion arranged in the accommodation portion, and
a second light guide portion contiguous to the first light guide portion and arranged at the light guide hole, and
the accommodation portion includes a stopper end surface on which the first light guide portion is configured to abut when the second light guide portion moves in a direction of an axial line of the light guide hole.

45. The attachment according to any of claims 1 to 15, wherein
the magnet includes a first magnet member and a second magnet member,
in a direction of depth of the recess, a distance from the first magnet member to an end opposite to a side where the recess is located is shorter than a distance from the first magnet member to an opening end of the recess,
in the direction of depth of the recess, a distance from the second magnet member to the end opposite to the side where the recess is located is shorter than a distance from the second magnet member to the opening end of the recess, and
the attachment comprises:
a first yoke located between the end and the first magnet member; and
a second yoke located between the end and the second magnet member.
